# EUROPEAN PATENT APPLICATION

(11) **EP 4 600 424 A1**
(43) Date of publication of application: **13.08.2025**
(21) Application number: 25155739.3
(22) Date of filing: 04.02.2025
(51) Int. Cl.: E02F 3/38, E02F 9/20

(54) **CONSTRUCTION MACHINE AND ELECTRIC ACTUATOR FOR CONSTRUCTION MACHINE**

(30) Priority: 06.02.2024 JP 2024016434; 13.09.2024 JP 2024159108
(71) Applicant: NABTESCO CORPORATION, Chiyoda-ku Tokyo 102-0093 (JP)
(72) Inventor: Takahashi, Masahiro, Chiyoda-ku, Tokyo, 102-0093 (JP); Yoshioka, Teruhiko, Chiyoda-ku, Tokyo, 102-0093 (JP); Kitanaka, Soichiro, Chiyoda-ku, Tokyo, 102-0093 (JP); Hisada, Kazuki, Chiyoda-ku, Tokyo, 102-0093 (JP); Nakamura, Keigo, Chiyoda-ku, Tokyo, 102-0093 (JP); Tanaka, Motohiro, Chiyoda-ku, Tokyo, 102-0093 (JP); Kishimoto, Masahiro, 50969 Köln (DE); Shinozaki, Takuya, 50969 Köln (DE)
(74) Representative: Grünecker Patent- und Rechtsanwälte PartG mbB

(57) **Abstract**

An electric actuator (10, 600A, 600B, 650A, 770A, 770B, 800A, 830A) for a construction machine includes a drive device (615, 660, 780, 790, 834) having an electric motor (20, 661) and configured to output torque centered on a rotation axis (Q, 615V, 660V, 780V, 790V), and a swing bracket (50, 610, 665, 774, 845) fixedly attached to a boom (530). The swing bracket is configured to rotate about a slew axis (610V, 840V) parallel to the rotation axis or the rotation axis upon application of the torque from the drive device.

## Description

### TECHNICAL FIELD

The present disclosure relates to a construction machine and an electric actuator for a construction machine.

### BACKGROUND

Japanese Patent Application Publication No. 2010-174615 ("the `615 Publication") discloses an excavator including a traveling unit, a vehicle body, a boom, an arm, and a bucket. The traveling unit is configured to self-propel. The vehicle body is positioned on the upper side with respect to the traveling unit. The vehicle body includes a passenger seat for the operator. The boom extends forward from the vehicle body. The arm is connected to the distal end of the boom. The bucket is connected to the distal end of the arm. The boom is connected to the vehicle body in such a manner that it can swing to the left and right. The boom can swing to the left and right by being driven hydraulically. The `615 Publication only discloses a hydraulic power source for causing the boom to swing. The `615 Publication does not consider any other options than the hydraulic power source for causing the boom to swing.

### SUMMARY

One aspect provides a construction machine. The construction machine includes: a vehicle body; a drive device including an electric motor, the drive device being configured to output torque centered on a rotation axis extending in a top-to-bottom direction of the vehicle body; a swing bracket connected to the vehicle body, the swing bracket being configured to rotate about a slew axis parallel to the rotation axis or the rotation axis upon application of the torque from the drive device; and a boom fixedly attached to the swing bracket.

In the construction machine, the swing bracket can rotate upon application of the torque output from the drive device including the electric motor. This resultantly causes the boom to swing. In the implementation, the electric motor can serve as the drive source for causing the boom to swing.

Another aspect provides an electric actuator for a construction machine. The electric actuator includes: a drive device including an electric motor, the drive device being configured to output torque centered on a rotation axis; and a swing bracket configured to rotate about a slew axis parallel to the rotation axis or the rotation axis upon application of the torque from the drive device, the swing bracket being fixedly attached to a boom.

In the electric actuator, the swing bracket can rotate upon application of the torque output from the drive device including the electric motor. This resultantly causes the boom to swing. In the implementation, the electric motor can serve as the drive source for causing the boom to swing.

In one embodiment, the drive device may include: a transmission shaft received in a first through hole in a vehicle body of the construction machine, the transmission shaft being configured to rotate about the rotation axis; the electric motor having an output shaft connected to the transmission shaft, the electric motor being attached to the vehicle body; a speed reducer attached to the vehicle body so as to oppose the electric motor with the first through hole being sandwiched therebetween, the speed reducer having an input shaft connected to the transmission shaft, the speed reducer being configured to multiply torque output from the output shaft of the electric motor and output the multiplied torque; and an output member configured to rotate about the rotation axis upon application of the torque from the speed reducer, the output member being connected to the swing bracket. The swing bracket may be configured to rotate about the rotation axis upon application of torque from the output member.

In one embodiment, the electric actuator may further include a pin shaped like a tube, the transmission shaft being received in the pin, the pin and transmission shaft being received in the first through hole. The swing bracket may be in contact with the pin.

In one embodiment, the swing bracket may have an opposing wall having a third through hole at a position facing a second through hole in the output member, the electric actuator may further include a connecting member connecting the output member and opposing wall, and the connecting member may have: a base extending through the second and third through holes; and a buffer portion shaped like a tube, the buffer portion having the base arranged therein, the base and buffer portion extending through the second and third through holes, the buffer portion having a lower modulus of elasticity than the base.

In one embodiment, the swing bracket may have an opposing wall facing the output member, the electric actuator may further include a connecting member connecting the opposing wall and output member, and a gap may be provided between the opposing wall and the output member.

In one embodiment, the drive device may be attached to a vehicle body of the construction machine, and the swing bracket may be connected to the vehicle body such that the swing bracket is rotatable about the slew axis. The electric actuator may further include: a drive member configured to rotate about the rotation axis upon application of the torque from the drive device; a transmission target member attached to the swing bracket, the transmission target member being configured to rotate about the slew axis; a transmission mechanism configured to cause the drive member and transmission target member to rotate in a coordinated manner.

In one embodiment, the drive member may be an annular drive sprocket centered on the rotation axis and having a plurality of teeth on an outer peripheral surface thereof, the transmission target member may be an annular driven sprocket centered on the slew axis and having a plurality of teeth on an outer peripheral surface thereof, and the transmission mechanism may be a chain wound around the drive sprocket and driven sprocket.

In one embodiment, the drive member may be an annular drive pulley centered on the rotation axis, the transmission target member may be an annular driven pulley centered on the slew axis, and the transmission mechanism may be a belt wound around the drive pulley and driven pulley.

In one embodiment, the drive member may have a smaller outer diameter than the transmission target member. In one embodiment, the construction machine may have an upper body that is the vehicle body, and a lower body, the upper body may be located on an opposite side of a ground surface with respect to the lower body of the construction machine, and the upper body may be supported by a slewing bearing such that the upper body slews with respect to the lower body. When a first slew axis is the slew axis, a second slew axis is an axis about which the upper body slews, the first slew axis is located in a first direction as viewed from the second slew axis, and a specific portion indicates a portion of the slewing bearing that is the closest to the first slew axis in the first direction, at least a portion of the drive member maybe located on an imaginary line segment connecting the specific portion and the first slew axis.

In one embodiment, the construction machine may have an upper body that is the vehicle body, and a lower body, the upper body may be located on an opposite side of a ground surface with respect to the lower body of the construction machine, and the upper body may be supported by a slewing bearing such that the upper body slews with respect to the lower body. The electric actuator may further include one or more intermediate members attached to the vehicle body, the one or more intermediate members being configured to rotate about an axis parallel to the rotation axis, the transmission mechanism may be configured to cause the one or more intermediate members, the drive member and the transmission target member to rotate in a coordinated manner. When a first slew axis is the slew axis, a second slew axis is an axis about which the upper body slews, the first slew axis is located in a first direction as viewed from the second slew axis, and a second direction is opposite to the first direction, the one or more intermediate members may be located in the first direction as viewed from the drive member, and the drive member and the drive device may be located in the second direction as viewed from the second slew axis.

In one embodiment, the drive device may be attached to a vehicle body of the construction machine, and the swing bracket may be fixedly attached to an output member of the drive device, and configured to rotate about the rotation axis upon application of the torque from the drive device.

In one embodiment, the drive device may have a speed reducer configured to multiply torque output from the electric motor and output the multiplied torque, and the speed reducer may be configured to output, to the swing bracket, the torque that is output from the electric motor and that is centered on the rotation axis coaxially with the electric motor.

In one embodiment, the drive device may be located lower than the swing bracket, and the swing bracket may be fixedly attached to the output member of the drive device by means of bolts.

In one embodiment, the swing bracket may be aligned with the drive device in a direction extending along the rotation axis. The electric actuator may further include: a transmission member interposed between the drive device and the swing bracket, the transmission member being configured to transmit the torque of the drive device to the swing bracket; an annular bearing attached to a vehicle body of the construction machine, the bearing being penetrated by the transmission member and supporting the transmission member in a rotatable manner; a retainer located on an opposite side of the swing bracket with the bearing being sandwiched therebetween in a direction extending along the rotation axis, the retainer being penetrated by the drive device; and a buffer member connecting the retainer to the vehicle body, the buffer member having a lower modulus of elasticity than the retainer. The swing bracket may be configured to rotate about the rotation axis upon application of the torque from the drive device via the transmission member.

In one embodiment, the bearing may be a first bearing selected from among a plurality of bearings, and the plurality of bearings may be aligned in a direction extending along the rotation axis. In one embodiment, the drive device may be shaped like a tube and centered on the rotation axis, the swing bracket may be aligned with the drive device in a direction extending along the rotation axis, and fixedly attached to an output member of the drive device, and the swing bracket may be configured to rotate about the rotation axis upon application of the torque from the drive device. The electric actuator may further include: a flange wall located on an opposite side of the swing bracket with the drive device being sandwiched therebetween in a direction extending along the rotation axis, the flange wall supporting the drive device and being fixedly attached to a vehicle body of the construction machine; a retainer interposed between the swing bracket and the flange wall, the retainer being penetrated by the drive device; a buffer member connecting the retainer to the vehicle body, the buffer member having a lower modulus of elasticity than the retainer; and a pin penetrating the drive device and fixedly attached to the flange wall.

In one embodiment, the swing bracket may be connected to a vehicle body of the construction machine such that the swing bracket is rotatable about the slew axis. The electric actuator may further include: a pinion gear configured to rotate about the rotation axis upon application of the torque from the drive device; and a gear wall provided at a position facing the pinion gear. The gear wall may have: an arc surface defining a circular arc centered on an axis parallel to the rotation axis; and a plurality of teeth protruding from the arc surface, the teeth meshing with teeth of the pinion gear, a diameter of the circular arc of the arc surface may be greater than an outer diameter of the pinion gear, and one of the gear wall or the drive device may be fixedly attached to the swing bracket, and another one of the gear wall or the drive device may be fixedly attached to the vehicle body.

In one embodiment, the arc surface may extend over a range of 165 to 195 degrees in a circumferential direction centered on an axis parallel to the rotation axis, and the gear wall may have a linearly extending flat surface connecting endpoints of the circular arc defined by the arc surface.

In one embodiment, the electric actuator may further include: an annular inner race attached to a vehicle body of the construction machine, the annular inner race being centered on the slew axis; an annular outer race coaxially arranged with the inner race, the outer race having a plurality of teeth on an outer peripheral surface thereof, the outer race being fixedly attached to the swing bracket, the outer race being configured to rotate about the slew axis together with the swing bracket; a rolling element interposed between the inner race and the outer race, the rolling element being configured to guide rotation of the inner race relative to the outer race; and a pinion gear provided at a position facing the outer peripheral surface of the outer race, the pinion gear being configured to rotate about the rotation axis upon application of the torque from the drive device, the pinion gear having on an outer peripheral surface thereof teeth meshing with the teeth of the outer race.

Another aspect provides a construction machine. The construction machine includes: a vehicle body; a first member shaped like a tube; a second member inserted into the first member from an end of the first member that faces a given side in a direction extending along a central axis of the first member, the second member being configured to reciprocate along the central axis of the first member; an electric motor configured to cause the second member to reciprocate relative to the first member; a swing bracket connected to the vehicle body such that the swing bracket is rotatable about a slew axis extending in a top-to-bottom direction of the vehicle body; and a boom fixedly attached to the swing bracket. The first member is connected to one of the vehicle body or the swing bracket such that the first member is rotatable about an axis parallel to the slew axis, and the second member is connected to another one of the vehicle body or the swing bracket such that the second member is rotatable about an axis parallel to the slew axis.

In the construction machine, the second member can reciprocate relative to the first member when driven by the electric motor. The reciprocation can cause the swing bracket and thus the boom to swing. In the implementation, the electric motor can serve as the drive source for causing the boom to swing.

Another aspect provides an electric actuator for a construction machine. The electric actuator includes: a first member shaped like a tube; a second member inserted into the first member from an end of the first member that faces a given side in a direction extending along a central axis of the first member, the second member being configured to reciprocate along the central axis of the first member; an electric motor configured to cause the second member to reciprocate relative to the first member; and a swing bracket connected to a vehicle body of the construction machine such that the swing bracket is rotatable about a slew axis, the swing bracket being fixedly attached to a boom. The first member is connected to one of the vehicle body or the swing bracket such that the first member is rotatable about an axis parallel to the slew axis, and the second member is connected to another one of the vehicle body or the swing bracket such that the second member is rotatable about an axis parallel to the slew axis.

In the electric actuator, the electric motor causes the second member to reciprocate relative to the first member. The reciprocation causes the swing bracket and thus the boom to swing. In the implementation, the electric motor can serve as the drive source for causing the boom to swing.

In one embodiment, the second member may be shaped like a tube extending along the central axis of the first member, and have an internally threaded inner peripheral surface. The electric actuator may further include: a threaded shaft inserted into the second member through an end of the second member that faces a side opposite to the given side, the threaded shaft having an externally threaded outer peripheral surface, the threaded shaft being configured to rotate about the central axis of the second member upon rotation of the electric motor; and a ball interposed between the threaded shaft and the second member.

In one embodiment, a rotation axis of the electric motor may be positioned differently than the central axis of the second member and extend parallel to the central axis of the second member. The electric actuator may further include a transmission mechanism configured to transmit the rotation of the electric motor to the threaded shaft.

In one embodiment, the first member may demarcate a fluid chamber into and from which a fluid is fed and discharged, and the second member may have: a piston dividing the fluid chamber into two chambers arranged next to each other in a direction extending along the central axis of the first member; and a rod extending from the piston toward the given side. The electric actuator may further include a fluid circuit for feeding or discharging the fluid into or from the two chambers when a pump is driven by the electric motor.

In one embodiment, the second member may be shaped like a column extending in a direction extending along the central axis of the first member, and have a plurality of rack teeth on an outer surface thereof arranged next to each other in a direction extending along the central axis of the first member. The electric actuator may further include a pinion gear rotatable about an axis intersecting a central axis of the second member, the pinion gear having teeth on an outer peripheral surface thereof that mesh with the rack teeth, the pinion gear being configured to rotate when driven by the electric motor.

In one embodiment, the construction machine may have an upper body that is the vehicle body, and a lower body, the upper body may be located on an opposite side of a ground surface with respect to the lower body of the construction machine, and the upper body may be supported by a slewing bearing such that the upper body slews with respect to the lower body. A rotation axis of the electric motor may coincide with a central axis of the pinion gear, and when a first slew axis is the slew axis, a second slew axis is an axis about which the upper body slews, a first line segment is an imaginary line segment connecting the first and second slew axes when the upper body is seen in plan view in a direction extending along the first slew axis, and a second line segment is an imaginary line segment connecting, in a direction extending along the central axis of the first member, (i) an end of the first member that is opposite to the end through which the second member is inserted and (ii) an end of the second member that faces the given side, the rotation axis of the electric motor may be positioned between the first line segment and the second line segment.

Another aspect provides a construction machine. The construction machine includes: a vehicle body; an electric motor attached to the vehicle body, the electric motor being configured to output torque centered on a rotation axis; a swing bracket connected to the vehicle body such that the swing bracket is rotatable about a slew axis intersecting the rotation axis and extending in a top-to-bottom direction of the vehicle body; a conversion mechanism configured to convert the torque of the electric motor that is centered on the rotation axis into torque that is centered on the slew axis; a transmission member configured to transmit the torque produced by the conversion mechanism to the swing bracket; and a boom fixedly attached to the swing bracket.

In the construction machine, the conversion mechanism can change the direction of the torque of the electric motor, and the resulting torque is transmitted to the swing bracket via the transmission member. As the electric motor operates, the swing bracket and thus the boom can swing. In the implementation, the electric motor can serve as the drive source for causing the boom to swing.

Another aspect provides an electric actuator for a construction machine. The electric actuator includes: an electric motor configured to output torque centered on a rotation axis; a swing bracket connected to a vehicle body of the construction machine such that the swing bracket is rotatable about a slew axis extending in a direction intersecting the rotation axis, the swing bracket being fixedly attached to a boom; a conversion mechanism configured to convert the torque of the electric motor that is centered on the rotation axis into torque that is centered on the slew axis; and a transmission member configured to transmit the torque produced by the conversion mechanism to the swing bracket.

In the electric actuator, the conversion mechanism can change the direction of the torque of the electric motor, and the resulting torque is transmitted to the swing bracket via the transmission member. As the electric motor operates, the swing bracket and thus the boom can swing. In the implementation, the electric motor can serve as the drive source for causing the boom to swing.

### ADVANTAGEOUS EFFECTS

According to the technical idea described above, a boom can swing using an electric motor as the drive source.

### BRIEF DESCRIPTION OF THE DRAWINGS

Fig. 1 schematically depicts the overall configuration of an excavator relating to a first embodiment.
Fig. 2 schematically shows how a boom swings in the first embodiment.
Fig. 3 is an end view showing a boom swing mechanism relating to the first embodiment.
Fig. 4 is an enlarged end view showing a part of Fig. 3.
Fig. 5 is a side view schematically showing an excavator relating to a second embodiment.
Fig. 6 is a top view schematically showing the excavator relating to the second embodiment.
Fig. 7 is a top view schematically showing a modification example of the excavator relating to the second embodiment.
Fig. 8 is a top view schematically showing a modification example of the excavator relating to the second embodiment.
Fig. 9 is a side view schematically showing an excavator relating to a third embodiment.
Fig. 10 is a side view schematically showing an excavator relating to a fourth embodiment.
Fig. 11 is a top view schematically showing the excavator relating to the fourth embodiment.
Fig. 12 is an end view schematically showing a power unit relating to the fourth embodiment.
Fig. 13 is a top view showing a boom relating to the fourth embodiment is swinging to the left.
Fig. 14 is a top view showing the boom relating to the fourth embodiment is swinging to the right.
Fig. 15 is a sectional view schematically showing a modification example of the power unit relating to the fourth embodiment.
Fig. 16 is a sectional view schematically showing a modification example of the power unit relating to the fourth embodiment.
Fig. 17 schematically shows, as an example, how the power unit of Fig. 16 is arranged.
Fig. 18 is a perspective view schematically showing first and second members of the power unit of Fig. 16.
Fig. 19 is a side view schematically showing an excavator relating to a fifth embodiment.
Fig. 20 is a side view schematically showing a modification example of a buffer member relating to the fifth embodiment.
Fig. 21 is a side view schematically showing a modification example of the excavator relating to the fifth embodiment.
Fig. 22 is a side view schematically showing an excavator relating to a sixth embodiment.
Fig. 23 is a top view schematically showing a gear wall and a pinion gear relating to the sixth embodiment.
Fig. 24 is a side view schematically showing a modification example of the excavator relating to the sixth embodiment.
Fig. 25 is a side view schematically showing an excavator relating to a seventh embodiment.
Fig. 26 is a side view schematically showing an excavator relating to an eighth embodiment.

### DESCRIPTION OF THE PREFERRED EMBODIMENTS

### <First Embodiment>

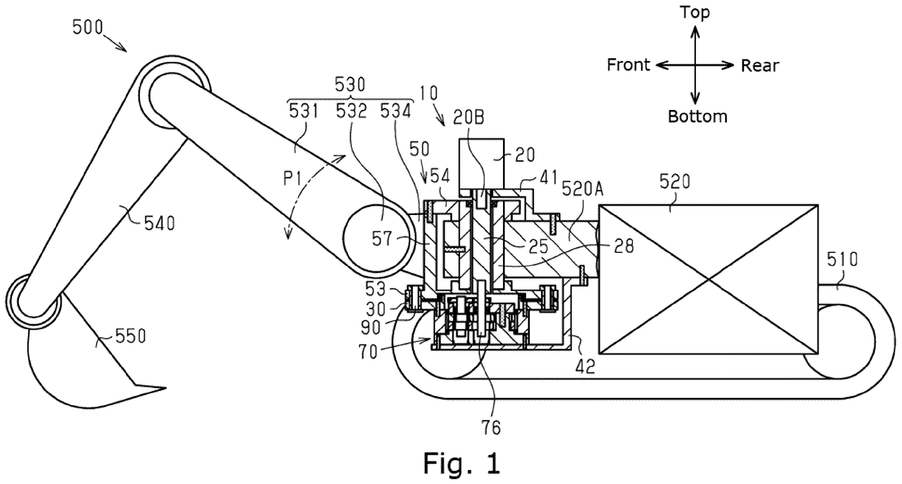

The following now describes a construction machine and an electric actuator for a construction machine relating to a first embodiment with reference to Figs. 1 to 4. The drawings may show components in an enlarged manner for the sake of better intelligibility. The dimensions of the components and the ratios thereof may be different from those of the actual components, and among the drawings.

### <Overall Configuration>

As shown in Fig. 1, an excavator 500, which is a construction machine, includes a traveling unit 510, a main machine 520, which is a vehicle body, a boom 530, an arm 540, and a bucket 550. The traveling unit 510 includes crawlers and other components for traveling. The main machine 520 is opposite to the ground surface with the traveling unit 510 being sandwiched. The main machine 520 includes a passenger seat for the operator and a battery compartment. Note that Fig. 1 does not show the passenger seat. In the present embodiment, the excavator 500 is used as a reference to define the up and down, left and right, and front and rear. Specifically, the main machine 520 is positioned higher than the traveling unit 510. The front is faced by the operator seated forward on the passenger seat of the main machine 520. The main machine 520 is rotatable about an axis extending substantially in the upward direction to the left and right relative to the traveling unit 510. The boom 530 extends frontward from the main machine 520. The boom 530 will be described in detail below. The arm 540 is shaped like a strip. The proximal end of the arm 540 is connected to the distal end of the boom 530, which is opposite to the end facing the main machine 520. The arm 540 is rotatable on its proximal end relative to the boom 530. The arm 540 extends frontward from the boom 530. The proximal end of the bucket 550 is connected to the distal end of the arm 540, which is opposite to the end facing the boom 530. The bucket 550 is rotatable on its proximal end relative to the arm 540. The bucket 550 is shaped like a box and has an aperture.

### <Boom Swing Mechanism>

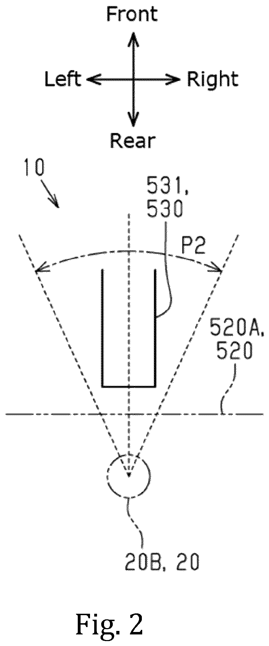

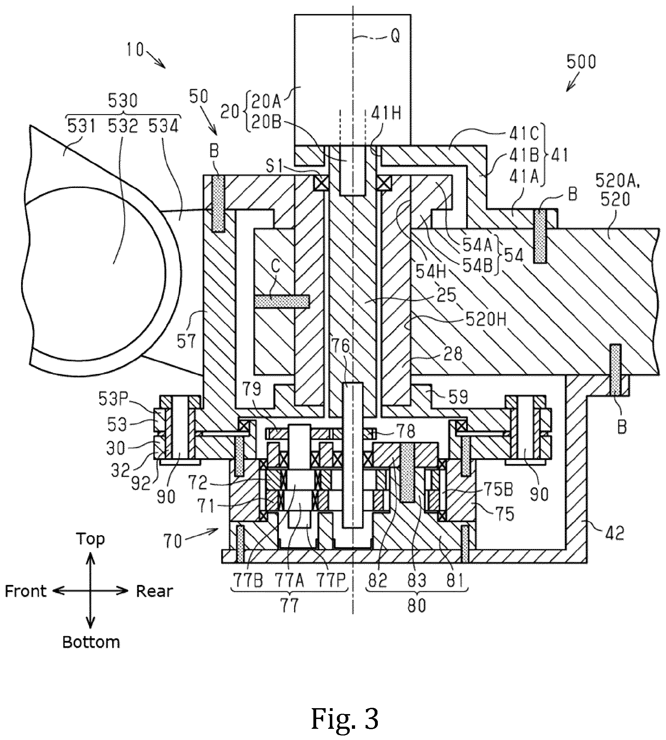

The excavator 500 includes a boom swing mechanism 10 at the joint where the main machine 520 and boom 530 are connected. The boom swing mechanism 10 constitutes an electric actuator. As shown in Fig. 2, the boom swing mechanism 10 is configured to cause the boom 530 to swing to the left and right relative to the main machine 520. The boom swing mechanism 10 relating to the present embodiment includes the main machine 520 as its component. Here, the term "main machine front portion 520A" refers to the frontward portion of the main machine 520. As shown in Fig. 3, the main machine front portion 520A is as a whole shaped like a rectangular parallelepiped. The main machine front portion 520A has a first through hole 520H. The first through hole 520H penetrates the main machine front portion 520A in the top-to-bottom direction. The central axis Q of the first through hole 520H extends substantially upward. In the drawings, some of the components of the boom swing mechanism 10 may be shown in plan view not in sectional view.

### <First Retainer>

As shown in Fig. 3, the boom swing mechanism 10 includes a first retainer 41. The first retainer 41 is positioned on the upper side with respect to the main machine front portion 520A. The first retainer 41 has a first mounting wall 41A, a first standing wall 41B, and a first retaining wall 41C. The first mounting wall 41A extends along the top surface of the main machine front portion 520A. The first mounting wall 41A is secured onto the top surface of the main machine front portion 520A by means of a bolt B. In Figs. 1, 3, and 4, the bolt B is indicated by the dots. The first standing wall 41B extends upward from the front end of the first mounting wall 41A. The first retaining wall 41C extends forward from the top end of the first standing wall 41B. The first retaining wall 41C has a through hole 41H. The through hole 41H penetrates the first retaining wall 41C in the top-to-bottom direction. The central axis Q of the through hole 41H substantially coincides with the central axis Q of the first through hole 520H. In Figs. 1, 3, and 4, a common sign Q is appended to identify the axes that substantially coincide with the central axis of the first through hole 520H.

### <Electric Motor>

The boom swing mechanism 10 includes an electric motor 20. The electric motor 20 is as a whole positioned on the upper side with respect to the first retaining wall 41C. The electric motor 20 includes a housing 20A, and an output shaft 20B. The housing 20A is fixedly attached onto the top surface of the first retaining wall 41C. In other words, the housing 20A is attached onto the main machine front portion 520A via the first retainer 41. The housing 20A houses a stator, a rotor and the like, which are not shown. The output shaft 20B extends inside the housing 20A and protrudes downward beyond the housing 20A. The output shaft 20B is shaped like a circular column. The diameter of the output shaft 20 is less than that of the through hole 41H in the first retaining wall 41C. The central axis Q of the output shaft 20B substantially coincides with the central axis Q of the through hole 41H in the first retaining wall 41C. The output shaft 20B is rotatable on its central axis Q and relative to the housing 20A. The output shaft 20B can rotate in both of the forward and reverse directions upon receiving electricity from a battery, which is not shown.

### < Transmission Shaft >

The boom swing mechanism 10 includes a transmission shaft 25. The transmission shaft 25 is disposed in the first through hole 520H in the main machine front portion 520A. The transmission shaft 25 extends through the first through hole 520H. The transmission shaft 25 is shaped like a circular column. The central axis Q of the transmission shaft 25 substantially coincides with the central axis Q of the first through hole 520H. Hereinafter, the term "axial direction" refers to the direction extending along the central axis Q of the transmission shaft 25. Also, the term "radial direction" refers to the radial direction centered on the central axis Q of the transmission shaft 25. Also, the term "circumferential direction" refers to the circumferential direction centered on the central axis Q of the transmission shaft 25. In the axial direction, the dimension of the transmission shaft 25 is greater than that of the first through hole 520H. The transmission shaft 25 protrudes beyond the first through hole 520H both upward and downward. The top end of the transmission shaft 25 is connected to the output shaft 20B of the electric motor 20. For example, spline connection is established between the top end of the transmission shaft 25 and the output shaft 20B of the electric motor 20, so that they are fixed to each other. The central axis Q of the transmission shaft 25 substantially coincides with the central axis Q of the output shaft 20B. The transmission shaft 25 is coaxial with the output shaft 20B and rotates together with the output shaft 20B.

### <Pin>

The boom swing mechanism 10 includes a pin 28. The pin 28 is disposed in the first through hole 520H of the main machine front portion 520A. The pin 28 extends through the first through hole 520H. The pin 28 is shaped like a circular tube. The central axis Q of the pin 28 substantially coincides with the central axis Q of the first through hole 520H. The inner diameter of the pin 28 is greater than the diameter of the transmission shaft 25. Inside the pin 28, the transmission shaft 25 is disposed. The transmission shaft 25 extends through the pin 28. The pin 28 is thus disposed inside the first through hole 520H, along with the transmission shaft 25. In the axial direction, the dimension of the pin 28 is greater than that of the first through hole 520H and less than that of the transmission shaft 25. The pin 28 protrudes beyond the first through hole 520H both upward and downward. The top end of the pin 28 is situated lower than the top end of the transmission shaft 25. The bottom end of the pin 28 is situated higher than the bottom end of the transmission shaft 25. The bottom end of the pin 28 is supported by an opposing wall 53, which will be described below. The outer diameter of the pin 28 is slightly less than the diameter of the first through hole 520H. Therefore, although not shown, a slight gap is present in terms of the radial direction between the outer peripheral surface of the pin 28 and the inner surface of the first through hole 520H. This gap is hereinafter referred to as the first gap. A restriction member C is inserted into the pin 28, which extends from the front surface of the main machine front portion 520A to the pin 28. The restriction member C prevents the pin 28 from moving in the circumferential direction while allowing the pin 28 to move in the first gap in the radial direction. The gap between the inner peripheral surface of the pin 28 and the transmission shaft 25 is referred to as a second gap. In the radial direction, the dimension of the second gap is greater than that of the first gap. Therefore, the pin 28 may move in the radial direction within the first gap, but the inner peripheral surface of the pin 28 never contacts the transmission shaft 25. At the top end of the pin 28, a seal member S1 is placed between the inner peripheral surface of the pin 28 and the transmission shaft 25 to prevent entry of foreign matter from the outside.

### <Second Retainer>

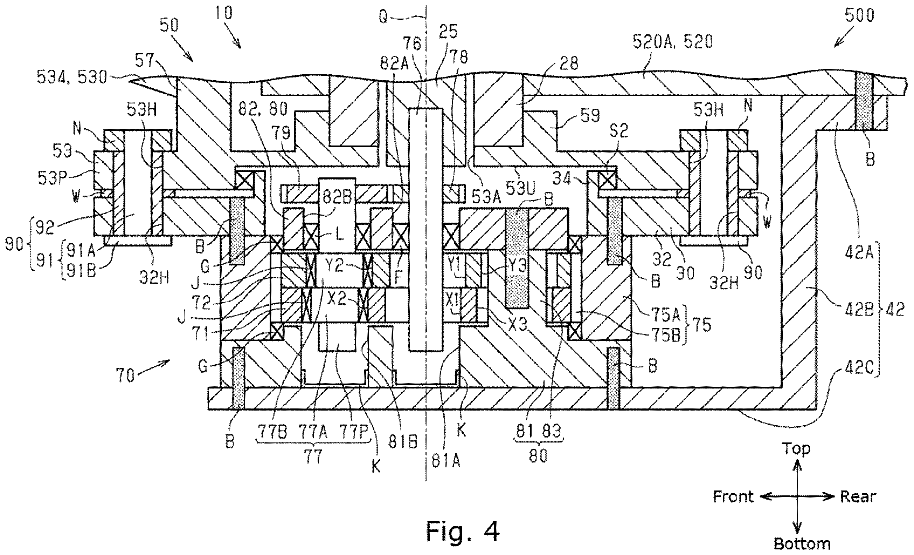

The boom swing mechanism 10 includes a second retainer 42. The second retainer 42 is positioned on the lower side with respect to the main machine front portion 520A. As shown in Fig. 4, the second retainer 42 has a second mounting wall 42A, a second standing wall 42B, and a second retaining wall 42C. The second mounting wall 42A extends along the bottom surface of the main machine front portion 520A. The second mounting wall 42A is secured onto the bottom surface of the main machine front portion 520A by means of a bolt B. The second standing wall 42B extends downward from the front end of the second mounting wall 42A. The second retaining wall 42C extends frontward from the bottom end of the second standing wall 42B. On the top surface of the second retaining wall 42C, a speed reducer 70 is placed. The speed reducer 70 will be described in detail below.

### < Output Member >

As shown in Fig. 4, the boom swing mechanism 10 includes an output member 30. The output member 30 is positioned between the speed reducer 70 and the main machine front portion 520A. The output member 30 includes an output wall 32 and a protruding wall 34. The output wall 32 is shaped like an annular plate. The central axis Q of the output wall 32 substantially coincides with the central axis Q of the transmission shaft 25. The output wall 32 has a plurality of second through holes 32H. The second through holes 32H are positioned in the edge portion of the output wall 32 that is close to the outer periphery. The second through holes 32H are arranged at equal intervals in the circumferential direction. The second through holes 32H penetrate the output wall 32 in the top-to-bottom direction. The central axis of each second through hole 32H is substantially parallel to the central axis Q of the output wall 32. The edge portion of the output wall 32 that is close to the outer periphery has a part, in the circumferential direction, that is positioned on the front side relative to the main machine front portion 520A.

The protruding wall 34 protrudes from the top surface of the output wall 32. The protruding wall 34 is positioned in the edge portion of the output wall 32 that is close to the inner periphery. The protruding wall 34 extends annularly along the central hole in the output wall 32. The inner surface of the protruding wall 34 is flush with the inner surface of the central hole in the output wall 32.

### <Swing Wall>

As shown in Fig. 3, the boom swing mechanism 10 includes a swing wall 50. The swing wall 50 has an opposing wall 53, a guide wall 59, an intermediate wall 57, and a contact wall 54. The swing wall 50 is described as an example of a swing bracket.

As shown in Fig. 4, the opposing wall 53 is positioned between the top surface of the output wall 32 and the bottom surface of the main machine front portion 520A. The opposing wall 53 is shaped like a circular plate. The diameter of the circular opposing wall 53 is substantially equal to the outer diameter of the output wall 32. The central axis Q of the circular opposing wall 53 substantially coincides with the central axis Q of the output wall 32. Being positioned in this manner, the opposing wall 53 is supported by the output wall 32 via washers W, which will be described below.

The opposing wall 53 has a central hole 53A. The central hole 53A extends through the opposing wall 53 in the top-to-bottom direction. The central axis Q of the central hole 53A substantially coincides with the central axis Q of the opposing wall 53. The diameter of the central hole 53A is substantially equal to the inner diameter of the pin 28. The transmission shaft 25, which is located inside the pin 28, has a bottom end positioned in the central hole 53A.

The opposing wall 53 has a central depression 53U. The central depression 53U is recessed upward from the bottom surface of the opposing wall 53. The central depression 53U is shaped like a circular column. The central axis Q of the columnar central depression 53U substantially coincides with the central axis Q of the central hole 53A. The diameter of the columnar central depression 53U is slightly greater than the outer diameter of the protruding wall 34 of the output member 30. The central depression 53U receives the protruding wall 34. A seal member S2 is placed between the side surface of the central depression 53U and the outer peripheral surface of the protruding wall 34 to prevent entry of foreign matter.

The term "specific portion 53P" refers to the portion of the opposing wall 53 that is outside the central depression 53U in the radial direction. In the axial direction, the bottom surface of the specific portion 53P faces the top surface of the output wall 32.

The opposing wall 53 has a plurality of third through holes 53H. The third through holes 53H correspond to the second through holes 32H in the output wall 32 on a one-to-one basis. In other words, each of the third through holes 53H is paired up with a corresponding one of the second through holes 32H. The number of the third through holes 53H is equal to that of the second through holes 32H. The third through holes 53H are positioned in the edge portion of the specific portion 53P that is close to the outer periphery. In both of the circumferential and radial directions, each third through hole 53H is co-located with the paired second through hole 32H. The central axis of each third through hole 53H substantially coincides with the central axis of the paired second through hole 32H. This means that each third through hole 53H faces the paired second through hole 32H. The diameter of the third through holes 53H is substantially equal to the diameter of the second through holes 32H.

A plurality of washers Ware interposed between the specific portion 53P of the opposing wall 53 and the output wall 32. The washers Ware shaped like an annular plate. The washers W correspond to the third through holes 53H on a one-to-one basis. This means that each washer W is paired with a corresponding one of the third through holes 53H and also with a corresponding one of the second through holes 32H. In both of the circumferential and radial directions, each washer W is co-located with the paired third through hole 53H. Since the washers Ware provided between the specific portion 53P and the output wall 32, a gap corresponding to the thickness of the washers W is present between the specific portion 53P and the output wall 32 in the axial direction. This gap is hereinafter referred to as the third gap. The dimension of the third gap in the axial direction is greater than the dimension of the first gap in the radial direction.

### <Guide Wall >

As shown in Fig. 4, the guide wall 59 protrudes from the top surface of the opposing wall 53. The guide wall 59 and opposing wall 53 are integrally molded. The guide wall 59 is shaped like a circular tube. The central axis Q of the guide wall 59 substantially coincides with the central axis Q of the opposing wall 53. The inner diameter of the guide wall 59 is slightly greater than the outer diameter of the pin 28. The inner peripheral portion of the opposing wall 53, which is the portion of the opposing wall 53 that is located inside the guide wall 59 in the radial direction, and the inner peripheral surface of the guide wall 59 demarcate a housing recess where the bottom end of the pin 28 can be accommodated. The inner peripheral portion described here supports the bottom end surface of the pin 28.

### <Intermediate Wall>

As shown in Fig. 3, the intermediate wall 57 protrudes from the top surface of the opposing wall 53. The intermediate wall 57 and opposing wall 53 are integrally molded. The intermediate wall 57 is positioned in the frontward portion of the opposing wall 53. The intermediate wall 57 externally surrounds a portion of the main machine front portion 520A that is in front of the pin 28. In other words, the intermediate wall 57 faces the front side of the main machine front portion 520A, and also faces a portion of the left and right sides of the main machine front portion 520A that is in front of the pin 28. For example, when viewed from above, the intermediate wall 57 is shaped like an arc centered on the central axis Q of the first through hole 520H. In the radial direction, the intermediate wall 57 is located slightly inside the third through holes 53H in the opposing wall 53. The top end of the intermediate wall 57 is positioned higher than the top surface of the main machine front portion 520A and lower than the bottom surface of the first retaining wall 41C of the first retainer 41.

### <Contact Wall>

Referring to Fig. 3, the contact wall 54 is as a whole positioned higher than the top end of the intermediate wall 57. The contact wall 54 includes a main portion 54A and an extension portion 54B. The main portion 54A closes the top opening of the intermediate wall 57 and extends rearward from the top opening. The rear end of the main portion 54A is positioned between the top surface of the main machine front portion 520A and the bottom surface of the first retaining wall 41C. The frontward portion of the main portion 54A is secured onto the top end of the intermediate wall 57 at a plurality of sites by means of bolts B. The main portion 54A has a through hole. The through hole is positioned in the rearward portion of the main portion 54A. The through hole penetrates the main portion 54A in the top-to-bottom direction. The extension portion 54B protrudes from the bottom surface of the main portion 54A. The extension portion 54B is shaped like a circular tube. The central axis Q of the extension portion 54B substantially coincides with the central axis Q of the through hole in the main portion 54A. The inner diameter of the extension portion 54B is substantially equal to the diameter of the through hole in the main portion 54A. The inner peripheral surface of the extension portion 54B and the inner surface of the through hole of the main portion 54A together constitute a single continuous fourth through hole 54H. The central axis Q of the fourth through hole 54H substantially coincides with the central axis Q of the pin 28. The diameter of the fourth through hole 54H is substantially equal to the outer diameter of the pin 28. The fourth through hole 54H receives a portion of the pin 28 that protrudes upward beyond the first through hole 520H. The inner surface of the fourth through hole 54H is in contact with the outer peripheral surface of the pin 28. The bottom end surface of the extension portion 54B is supported by the top surface of the main machine front portion 520A.

### <Boom>

As shown in Figs. 1 and 3, the boom swing mechanism 10 relating to the first embodiment includes the boom 530 as its component.

The boom 530 includes a base wall 534, a connecting shaft 532, and a boom body 531. The base wall 534 extends frontward from the intermediate wall 57. The base wall 534 is fixed to the surface of the intermediate wall 57 that faces away from the main machine front portion 520A. As described above, the contact wall 54 and opposing wall 53 are fixed to the intermediate wall 57. In other words, the contact wall 54 and opposing wall 53 are fixed to the base wall 534 via the intermediate wall 57.

The connecting shaft 532 connects the base wall 534 and the boom body 531. The connecting shaft 532 is shaped like a circular column. The central axis of the connecting shaft 532 extends in the left-to-right direction. The connecting shaft 532 can rotate about the base wall 534 upon reception of power from an electric motor, which is not shown.

As shown in Fig. 1, the boom body 531 is shaped like a strip. One end of the boom body 531 is fixed onto the connecting shaft 532. As indicated by the arrow P1 in Fig. 1, the boom body 531 rotates integrally with the connecting shaft 532. The other end of the boom body 531 is connected to the arm 540.

### < Connecting Member >

As shown in Fig. 4, the boom swing mechanism 10 includes a plurality of connecting members 90. The connecting members 90 correspond to the second through holes 32H in the output wall 32 on a one-to-one basis. This means that each connecting member 90 is paired up with a corresponding one of the second through holes 32H. The connecting members 90 each include a base 91 and a buffer portion 92. The base 91 is shaped like a step. Specifically, the base 91 has a first portion 91A shaped like a circular column, and a second portion 91B shaped like a circular column and having a greater diameter than the first portion 91A. The diameter of the second portion 91B is greater than that of the second through holes 32H. The central axis of the first portion 91A substantially coincides with the central axis of the second portion 91B. The base 91 is made of an iron-based metal.

The buffer portion 92 is shaped like a circular tube. The inner diameter of the buffer portion 92 is substantially equal to the diameter of the first portion 91A of the base 91. The outer diameter of the buffer portion 92 is substantially equal to the diameter of the second through hole 32H. Inside the buffer portion 92, the first portion 91A of the base 91 is disposed. The first portion 91A of the base 91 penetrates the buffer portion 92. The central axis of the buffer portion 92 substantially coincides with the central axis of the base 91. The buffer portion 92 is made of rubber. This means that the buffer portion 92 is made of a softer material than the base 91. In other words, the buffer portion 92 has a lower modulus of elasticity than the base 91.

The buffer portion 92, as well as the first portion 91A of the base 91, is disposed inside the second through hole 32H, washer Wand third through hole 53H, which are associated with each other. The buffer portion 92, together with the first portion 91A, passes through the second through hole 32H, washer W, and third through hole 53H. The central axis of the buffer portion 92 substantially coincides with the central axis of the second and third through holes 32H and 53H. The outer peripheral surface of the buffer portion 92 is in contact with the inner surface of the second through hole 32H and with the inner surface of the third through hole 53H. The second portion 91B of the base 91 is positioned lower than the bottom end of the buffer portion 92 and than the lower end of the second through hole 32H. The top end of the first portion 91A of the base 91 is positioned higher than top end of the buffer portion 92 and than the upper end of the third through hole 53H. The portion of the first portion 91A that protrudes beyond the buffer portion 92 and the third through hole 53H is kept in place by a nut N. The second portion 91B and nut N define the position of the connecting member 90 in the top-to-bottom direction. In addition, the connecting member 90 establishes connection between the output wall 32 and the opposing wall 53. As described above, the opposing wall 53 is fixed to the base wall 534 of the boom 530. In other words, the output wall 32 is connected to the boom 530 via the connecting members 90 and opposing wall 53.

### <Speed Reducer>

As shown in Fig. 3, the boom swing mechanism 10 includes the speed reducer 70. The speed reducer 70 is located on the opposite side of the electric motor 20 across the first through hole 520H of the main machine 520. The speed reducer 70 is a speed changer configured to change the speed of rotation of the output shaft 20B of the electric motor 20 and output the resulting rotation.

The speed reducer 70 includes a carrier 80. The carrier 80 includes a first wall 81, a second wall 82 and a plurality of columnar walls 83. As shown in Fig. 4, the first wall 81 is provided on the top surface of the second retaining wall 42C. The first wall 81 is shaped like a circular plate. The bottom surface of the first wall 81 is in contact with the top surface of the second retaining wall 42C. The first wall 81 is secured onto the top surface of the second retaining wall 42C by means of a bolt B. In other words, the first wall 81 and thus speed reducer 70 are attached onto the main machine front portion 520A via the second retainer 42. The central axis Q of the circular first wall 81 substantially coincides with the central axis Q of the output wall 32.

The first wall 81 has an input shaft hole 81A. The input shaft hole 81A is located near the center of the first wall 81. The input shaft hole 81A extends through the first wall 81 in the top-to-bottom direction. The central axis Q of the input shaft hole 81A substantially coincides with the central axis Q of the first wall 81. A seal member K is placed at the lower end of the input shaft hole 81A.

The first wall 81 has a plurality of eccentric shaft holes 81B. There are, for example, three eccentric shaft holes 81B. In the radial direction, the eccentric shaft holes 81B are located off the central axis Q of the first wall 81. The eccentric shaft holes 81B extend through the first wall 81 in the top-to-bottom direction. The eccentric shaft holes 81B are arranged at equal intervals in the circumferential direction. A seal member K is placed at the lower end of each eccentric shaft hole 81B.

The columnar walls 83 protrude from the top surface of the first wall 81. There are, for example, three columnar walls 83. In the radial direction, the columnar walls 83 are located off the central axis Q of the first wall 81. The columnar walls 83 are shaped like a circular column. The columnar walls 83 are arranged at equal intervals in the circumferential direction. The columnar walls 83 and first wall 81 are integrally molded.

The second wall 82 is positioned on the upper side with respect to the columnar walls 83. The second wall 82 is basically configured in the same manner as the first wall 81. Specifically, the second wall 82 is shaped like a circular plate, and has an input shaft hole 82A that is paired up with the input shaft hole 81A in the first wall 81. The central axis Q of the input shaft hole 82A in the second wall 82 substantially coincides with the central axis Q of the input shaft hole 81A in the first wall 81. The second wall 82 has a plurality of eccentric shaft holes 82B that are paired up with the eccentric shaft holes 81B in the first wall 81 on a one-to-one basis. In other words, the number of eccentric shaft holes 82B in the second wall 82 is equal to the number of eccentric shaft holes 81B in the first wall 81. The central axes of the paired eccentric shaft holes 81B and 82B are substantially coincident with each other. The second wall 82 is secured onto the top end surface of the columnar walls 83 by means of bolts B. The top surface of the second wall 82 faces the bottom of the central recess 53U in the opposing wall 53. The top surface of the second wall 82 is spaced away from the bottom of the central recess 53U. The diameter of the circular second wall 82 is less than the diameter of the circular first wall 81.

### <Case>

As shown in Fig. 4, the speed reducer 70 has a case 75. The case 75 is positioned on the upper side with respect to the first wall 81. The case 75 includes a case body 75A and a plurality of teeth 75B. The case body 75A is shaped like a circular tube. The outer diameter of the case body 75A is substantially equal to the diameter of the circular first wall 81. The inner diameter of the case body 75A is greater than the diameter of the circular second wall 82. The inner diameter of the case body 75A is substantially equal to the diameter of the central hole in the output wall 32. The central axis Q of the case body 75A substantially coincides with the central axis Q of the output wall 32. The bottom end surface of the case body 75A faces the outer peripheral portion of the top surface of the first wall 81. The top end surface of the case body 75A faces the bottom surface of the output wall 32. The case body 75A is secured onto the output wall 32 by means of a bolt B.

The teeth 75B protrude from the inner peripheral surface of the case body 75A. The teeth 75B are arranged at equal intervals in the circumferential direction. In the axial direction, the teeth 75B are located near the middle of the case body 75A. In the axial direction, the teeth 75B are sandwiched between bearings G. The upper one of the bearings G is interposed between the inner peripheral surface of the case body 75A and the outer peripheral surface of the second wall 82. The lower one of the bearings G is interposed between the inner peripheral surface of the case body 75A and the stepped surface of the first wall 81. The bearings G support the case body 75A in a rotatable manner. Being supported by the bearings G, the case body 75A is rotatable relative to the carrier 80.

### <External Gear>

The speed reducer 70 includes a first external gear 71. The first external gear 71 is provided between the first and second walls 81 and 82 of the carrier 80 and inside the case body 75A. Note that the sectional views showing the first external gear 71 also depict its appearance behind the cutting plane for the sake of illustrating its structure. The same applies to a second external gear 72 described below. The first external gear 71 is generally shaped like a circular plate. The diameter of the first external gear 71 is less than the inner diameter of the case body 75A. The central axis of the circular first external gear 71 is substantially parallel to the central axis Q of the case body 75A. The first external gear 71 has a plurality of teeth on the outer peripheral surface. The teeth are arranged at equal intervals in the circumferential direction. The drawings, however, do not show the teeth of the first external gear 71. Some of the teeth that are located in a specific portion in the circumferential direction are engaged with the teeth 75B of the case 75. On the other hand, the remaining teeth, which are located outside the specific portion in the circumferential direction, are spaced away from the teeth 75B of the case 75.

The first external gear 71 has an input shaft hole X1. The input shaft hole X1 is located near the center of the first external gear 71. The input shaft hole X1 extends through the first external gear 71 in the top-to-bottom direction. The input shaft hole X1 is in communication with the input shaft hole 81A in the first wall 81.

The first external gear 71 has a plurality of eccentric shaft holes X2. The eccentric shaft holes X2 are paired up with the eccentric shaft holes 81B in the first wall 81 on a one-to-one basis. In other words, the number of eccentric shaft holes X2 is equal to the number of eccentric shaft holes 81B in the first wall 81. In the radial direction, the eccentric shaft holes X2 are located off the central axis of the first external gear 71. The eccentric shaft holes X2 extend through the first external gear 71 in the top-to-bottom direction. Each of the eccentric shaft holes X2 is in communication with the corresponding one of the eccentric shaft holes 81B in the first wall 81.

The first external gear 71 has a plurality of column holes X3. In the radial direction, the column holes X3 are located off the central axis of the first external gear 71. The column holes X3 extend through the first external gear 71 in the top-to-bottom direction. The column holes X3 correspond to the columnar walls 83 on a one-to-one basis. The column holes X3 are penetrated by the columnar walls 83.

The speed reducer 70 includes a second external gear 72. The second external gear 72 is provided between the first external gear 71 and the second wall 82 of the carrier 80 and inside the case body 75A. The second external gear 72 is basically configured in the same manner as the first external gear 71. Specifically, the second external gear 72 has a plurality of column holes Y3, which correspond to the columnar walls 83 on a one-to-one basis. The second external gear 72 has an input shaft hole Y1 near its center. The input shaft hole Y1 is in communication with the input shaft hole X1 in the first external gear 71 and with the input shaft hole 82A in the second wall 82. As a result, the input shaft hole 81A in the first wall 81, the input shaft hole X1 in the first external gear 71, the input shaft hole Y1 in the second external gear 72, and the input shaft hole 82A in the second wall 82 constitute a single continuous first connecting hole. The second external gear 72 has a plurality of eccentric shaft holes Y2 that are paired up with the eccentric shaft holes X2 in the first external gear 71, and with the eccentric shaft holes 82B in the second wall 82 on a one-to-one basis. Each of the eccentric shaft holes Y2 is in communication with the corresponding one of the eccentric shaft holes X2 in the first external gear 71 and with the corresponding one of the eccentric shaft holes 82B in the second wall 82. As a result, each eccentric shaft hole 81B in the first wall 81, the corresponding eccentric shaft hole X2 in the first external gear 71, the corresponding eccentric shaft hole Y2 in the second external gear 72, and the corresponding eccentric shaft hole 82B in the second wall 82 constitute a single continuous second connecting hole. There are a plurality of second connecting holes, the number of which corresponds to the number of eccentric shaft holes 81B in the first wall 81. The second connecting holes are arranged at equal intervals in the circumferential direction.

### <Crankshaft>

The speed reducer 70 includes a plurality of crankshafts 77. The crankshafts 77 correspond to the second connecting holes, which are constituted by the eccentric shaft holes 81B in the first wall 81 and the like, on a one-to-one basis. Each crankshaft 77 includes a main shaft 77P, a first eccentric portion 77A, and a second eccentric portion 77B.

The main shaft 77P is largely located in the corresponding second connecting hole. The main shaft 77P is shaped like a circular column. The main shaft 77P extends in the axial direction. The top end of the main shaft 77P protrudes upward beyond the upper end of the second connecting hole, i.e., the upper end of the eccentric shaft hole 82B in the second wall 82. Between the outer peripheral surface of the main shaft 77P and the inner surface of the eccentric shaft hole 82B in the second wall 82, a bearing L is interposed. The main shaft 77P is supported by the bearing L in a rotatable manner. Although not shown, the main shaft 77P is also supported by a bearing in the eccentric shaft hole 81B in the first wall 81 in a rotatable manner.

The first eccentric portion 77A is located in the middle portion of the main shaft 77P in the axial direction. The first eccentric portion 77A is disposed in the eccentric shaft hole X2 in the first external gear 71. The first eccentric portion 77A protrudes from the outer peripheral surface of the main shaft 77P. When seen in plan view in the axial direction, the first eccentric portion 77A has a circular outer shape. When seen in plan view in the axial direction, the center of the first eccentric section 77A is not aligned with the center of the main shaft 77P. Between the outer peripheral surface of the first eccentric portion 77A and the inner surface of the eccentric shaft hole X2 in the first external gear 71, a bearing J is interposed. The first eccentric portion 77A is supported by the bearing J in a rotatable manner.

The second eccentric portion 77B is located in the middle portion of the main shaft 77P in the axial direction. The second eccentric portion 77B is disposed in the eccentric shaft hole Y2 in the second external gear 72. The second eccentric portion 77B protrudes from the outer peripheral surface of the main shaft 77P, like the first eccentric portion 77A. When seen in plan view in the axial direction, the second eccentric portion 77B has a circular outer shape. When seen in plan view in the axial direction, the center of the second eccentric section 77B is aligned with neither the center of the first eccentric portion 77A nor the center of the main shaft 77P. Between the outer peripheral surface of the second eccentric portion 77B and the inner surface of the eccentric shaft hole Y2 in the second external gear 72, a bearing J is interposed. The second eccentric portion 77B is supported by the bearing J in a rotatable manner.

The speed reducer 70 includes a plurality of driven gears 79. The driven gears 79 correspond to the crankshafts 77 on a one-to-one basis. Each of the driven gears 79 is attached to the main shaft 77P of the corresponding one of the crankshafts 77 at a portion that protrudes upward beyond the eccentric shaft hole 82B in the second wall 82. The driven gears 79 are generally shaped like an annular plate. Each of the driven gears 79 has a hole at the center, where the main shaft 77P is secured. Each of the driven gears 79 rotates integrally with the main shaft 77P. Each of the driven gears 79 has a plurality of teeth on the outer peripheral surface. The teeth are arranged at equal intervals in the circumferential direction.

### <Input Shaft>

The speed reducer 70 includes an input shaft 76. The input shaft 76 is partly located inside the first connecting hole, which is constituted by the input shaft hole 81A in the first wall 81 and the like. The input shaft 76 is shaped like a circular column. The input shaft 76 extends upward beyond the first connecting hole and reaches the bottom end of transmission shaft 25. The central axis Q of the input shaft 76 substantially coincides with the central axis Q of the case 75 and that of the transmission shaft 25. The top end of the input shaft 76 is connected with the bottom end of the transmission shaft 25. For example, spline connection is established between the top end of the input shaft 76 and the bottom end of the transmission shaft 25, so that they are fixed to each other. The input shaft 76 is coaxial with the transmission shaft 25 and rotates together with the transmission shaft 25. The input shaft 76 is supported by a bearing F in the input shaft hole 82A in the second wall 82 in a rotatable manner. Although not shown, the input shaft 76 is also supported by a bearing in the input shaft hole 81A in the first wall 81 in a rotatable manner.

The speed reducer 70 includes a driving gear 78. The driving gear 78 is attached to the input shaft 76. Specifically, the driving gear 78 is attached to the input shaft 76 at a portion that protrudes upward beyond the first connecting hole. The driving gear 78 is generally shaped like an annular plate. The driving gear 78 has a hole at the center, where the input shaft 76 is secured. The driving gear 78 rotates integrally with the input shaft 76. The driving gear 78 has a plurality of teeth on the outer peripheral surface. The teeth are arranged at equal intervals in the circumferential direction. Some of the teeth are engaged with the teeth of the driven gears 79.

The boom swing mechanism 10 is configured as described above. The components of the boom swing mechanism 10 relating to the present embodiment are all made of metal, except for the buffer portion 92 and the seal members described above.

### <Effect 1 of First Embodiment>

The following describes how the boom swing mechanism 10 shown in Fig. 3 works. In the boom swing mechanism 10, upon rotation of the output shaft 20B of the electric motor 20, the transmission shaft 25 and the input shaft 76 of the speed reducer 70 accordingly rotate. Upon rotation of the input shaft 76 of the speed reducer 70, the driving gear 78 and the driven gears 79 rotate. Upon rotation of the driven gears 79, the crankshafts 77 rotate. The crankshafts 77 transmit the input rotation to the first and second external gears 71 and 72 via the first and second eccentric portions 77A and 77B. On reception of power from the first and second eccentric portions 77A and 77B, the first and second external gears 71 and 72 oscillatorily rotate. That is to say, while orbiting around the input shaft 76 and thus the central axis Q of the transmission shaft 25, the first external gear 71 oscillates with its portion in the circumferential direction that is engaged with the teeth 75B of the case 75 changing. The second external gear 72 works in the same manner as the first external gear 71. As the first and second external gears 71 and 72 work in the above-described manner, this causes the case 75 to rotate on its own axis. As the case 75 rotates, the output wall 32, which is fixedly attached to the case 75, rotates integrally with the case 75. Specifically, upon application of torque from the speed reducer 70, the output wall 32 rotates about the central axis Q of the transmission shaft 25. The rotational speed of the case 75, and thus the output wall 32, results from reducing the rotational speed of the output shaft 20B of the electric motor 20 with a predetermined ratio. This means that the speed reducer 70 multiplies the torque output from the output shaft 20B of the electric motor 20 and output the resulting torque. Upon rotation of the output wall 32, the opposing wall 53, which is connected to the output wall 32 via the connecting members 90, rotates. The opposing wall 53 rotates about the central axis Q of the transmission shaft 25. As the opposing wall 53 rotates, the intermediate wall 57 and the base wall 534 of the boom 530 rotate. The boom body 531 resultantly rotates. Through the forgoing series of steps of power transmission, the boom 530 swings to the left and right around the output shaft 20B of the electric motor 20, as shown by the arrow P2 in Fig. 2.

In the boom swing mechanism 10, the transmission shaft 25, electric motor 20, speed reducer 70, and output member 30 constitute a drive device. The central axis Q of the transmission shaft 25 constitutes the rotation axis of the drive device. In the drive device, the electric motor 20 serves as the drive source. As described above, in the drive device, the output member 30 outputs torque centered on the rotation axis of the drive device if the electric motor 20 is driven. The swing wall 50, which is connected to the output member 30, is connected to the main machine front portion 520A via the pin 28 and drive device, such that the swing wall 50 can rotate around the rotation axis of the drive device. As a result, upon application of torque from the drive device, the swing wall 50 rotates about the rotation axis of the drive device, as described above.

### <Effect 2 of First Embodiment>

The following describes how the pin 28 and contact wall 54 function. While the excavator 500 shown in Fig. 1 is engaged in excavating work, the bucket 550 strikes the object to be excavated. When the bucket 550 collides with the object to be excavated, the reaction force is exerted by the object to be excavated. The collision causes impact to be transmitted to the boom 530 via the arm 540. The impact applies load to the boom 530 in various directions. For example, the load may act on the boom 530 in such a direction that the boom 530 may rotate upwards or downwards, as shown by the arrow P1 in Fig. 1. Furthermore, as indicated by the arrow P2 in Fig. 2, the load may act on the boom 530 in such a direction that the boom 530 may rotate leftwards or rightwards. As noted, the load may act on the boom 530 in at least one of the top-to-bottom direction or the left-to-right direction, as a result of which the boom 530 may attempt to move in the direction in which the load is exerted. In the present embodiment, such movement of the boom 530 is transmitted to the main machine 520 along a first path. The first path is routed through the intermediate wall 57 of the swing wall 50, contact wall 54, pin 28, and main machine 520 as shown in Fig. 3. Specifically, as the load acts on the boom 530, the boom body 531 and thus the base wall 534 move. As a result, the intermediate wall 57 of the swing wall 50 moves. Since the contact wall 54 of the swing wall 50 is in contact with the pin 28, the movement of the intermediate wall 57 is transmitted to the pin 28 through the contact wall 54. The outer peripheral surface of the pin 28 then hits the inner surface of the first through hole 520H in the main machine front portion 520A. In this way, the load acting on the boom 530 is transmitted to the main machine 520. The main machine 520 takes in the load.

The following now describes how the buffer portion 92 of each connecting member 90 functions. The above-described load may cause the boom 530 and thus swing wall 50 to rotate in the left-to-right direction. In this case, the movement can be transmitted to the speed reducer 70 along a second path, which is described in the following. The second path is routed through the intermediate wall 57 of the swing wall 50, opposing wall 53, connecting member 90, output wall 32, and case 75 of the speed reducer 70. Note that the buffer portion 92 of each connecting member 90 is made of rubber. Therefore, as for the power transmission from the opposing wall 53 to the output wall 32, the buffer portion 92 can attenuate the force applied by the opposing wall 53 and transmits the diminished force to the output wall 32. In other words, the movement of the output wall 32 is less than that of the opposing wall 53. Therefore, the load applied to the boom 530 is dramatically reduced while being transmitted to the speed reducer 70 along the second path.

### <Advantageous Effects of First Embodiment>

(1-1) As described in the "Effect 1 of First Embodiment" section, the rotation of the output shaft 20B of the electric motor 20 can be transmitted to the boom 530 along the following transmission path in the present embodiment. The transmission path is routed through the electric motor 20, transmission shaft 25, speed reducer 70, output member 30, swing wall 50 and boom 530. Through the power transmission along this path, the boom 530 can swing in the left-to-right direction by operating the output shaft 20B of the electric motor 20. In other words, the swing mechanism relating to the present embodiment for the boom 530 can use the electric motor 20 as the drive source. In the present embodiment, the swing mechanism for the boom 530 using the electric motor 20 as the drive source employs a layout where the electric motor 20 and speed reducer 70 sandwich the main machine front portion 520A in the top-to-bottom direction. In this manner, the space left around the main machine front portion 520A can be used effectively while the components can be arranged in a space-saving manner. In this way, the size of the boom swing mechanism 10 can be reduced as a whole.

(1-2) As described in the "Effect 2 of First Embodiment" section, the impact applied to the boom 530 via the bucket 550 is transmitted to the main machine 520 via the contact wall 54 and thus pin 28. The main machine 520 takes in the impact. In other words, the main machine 520 absorbs the load acting on the boom 530. As the main machine 520 plays a role of absorbing the load, the load that reaches the speed reducer 70 along the above-described second path can be reduced. If high load acts on the speed reducer 70, the various components of the speed reducer 70, such as the columnar walls 83 or bearings, need to be enlarged to accommodate the high load. This will lead to an increase in size of the speed reducer 70. According to the present embodiment, the load that reaches the speed reducer 70 can be reduced as described above. Therefore, the speed reducer 70 can accommodate the load without requiring an increase in size of its components. The present embodiment can thus prevent an increase in size of the speed reducer 70.

(1-3) As described in the "Effect 2 of First Embodiment", when the load acting on the boom 530 causes the boom 530 and thus opposing wall 53 of the swing wall 50 to rotate in the left-to-right direction, the connecting members 90 can diminish the movement of the opposing wall 53 before it is transmitted to the output wall 32. Therefore, the rotational movement of the opposing wall 53 in the left-to-right direction can be prevented from being transmitted to the speed reducer 70 in the present embodiment. Due to this fact and the effect (1-2), the load transmitted to the speed reducer 70 can be dramatically reduced. The present embodiment can thus prevent an increase in size of the speed reducer 70 as described in the section (1-2).

### <Modification Examples of First Embodiment>

The foregoing embodiment can be modified as described below. The above embodiment and the following modifications can be implemented in combination to the extent where they are technically consistent to each other.

The washers W may be eliminated. The third gap may be thus present in the entire area where the specific portion 53P of the opposing wall 53 faces the output wall 32. Even in this case, the swing wall 50 can be held in a predetermined position, which will be described below, because the bottom end surface of the extension portion 54B of the contact wall 54 is supported by the top surface of the main machine front portion 520A. The predetermined position is where the specific portion 53P of the opposing wall 53 faces the output wall 32 while they are separated from each other. Without the washers W, the third gap will be present in the entire area where the specific portion 53P of the opposing wall 53 faces the output wall 32. In this case, the following effects will be produced. If the boom 530 is impacted via the bucket 550, the base wall 534 of the boom 530 as well as the specific portion 53P of the opposing wall 53 may move in the top-to-bottom direction. Due to the presence of the third gap extending in the axial direction, however, the specific portion 53P is less likely to touch the output wall 32. The specific portion 53P of the opposing wall 53 may move in the top-to-bottom direction, but the third gap reduces direct transmission of the load from the opposing wall 53 to the output wall 32. Accordingly, the load acting on the opposing wall 53 is hardly transmitted to the output wall 32. As described above in relation with the embodiment, the dimension of the third gap in the axial direction is greater than the dimension of the first gap in the radial direction between the outer peripheral surface of the pin 28 and the inner surface of the first through hole 520H of the main machine front portion 520A. Therefore, when the impact on the boom 530 causes the base wall 534 as well as the opposing wall 53 to move, the pin 28 will strike the main machine front portion 520A before the opposing wall 53 collides with the output wall 32. Thus, the load acting on the boom 530 is largely absorbed by the main machine 520. As a result, the load that reaches the output wall 32 and thus speed reducer 70 can be significantly diminished. This can result in preventing an increase in size of the speed reducer 70, as described in the foregoing sections (1-2) and (1-3).

The material of the buffer portions 92 of the connecting members 90 is not limited to the example mentioned in the above embodiment. For example, the buffer portions 92 may be made of resin. Like the material of the buffer portions 92, the material of the bases 91 of the connecting members 90 is not limited to the example mentioned in the above embodiment. Any materials can be used for the buffer portions 92 and the bases 91 as long as they satisfy the following relation. The buffer portions 92 are required to have a lower modulus of elasticity than the bases 91.

The connecting members 90 may be configured in any other manners than described in the above in relation with the embodiment. For example, the buffer portions 92 may be shaped like a polygonal tube. The buffer portions 92 may not be provided. The connecting members 90 can be configured in any manner provided that they can connect the output wall 32 and the opposing wall 53. In other words, the connecting members 90 may be configured in any manner as long as they can transmit the movement of the output wall 32 caused by the output of the speed reducer 70, to the opposing wall 53.

The connecting members 90 may be eliminated. In this case, for example, the output wall 32 and opposing wall 53 may be integrally molded. If the output wall 32 and opposing wall 53 are integrally molded into a single component, this single component can transmit the rotation of the speed reducer 70 to the boom 530. Stated differently, the structure spanning from the output member 30 to the boom 530 can be configured in any manner, with or without the connecting members 90, as long as the rotation of the speed reducer 70 can be transmitted to the boom 530. As long as the structure is configured in this manner, the drive force from the electric motor 20 and thus the power of the speed reducer 70 can cause the boom 530 to swing in the left-to-right direction. In other words, the boom swing mechanism 10 may be configured in any manner, with or without the connecting member 90, as long as connection is established via the transmission shaft 25 between the electric motor 20 and the speed reducer 70, and the output member 30, which can rotate upon application of power from the speed reducer 70, is connected to the boom 530. Even without the connecting members 90, the pin 28 and contact wall 54 can reduce the load applied to the speed reducer 70 from the boom 530 upon impact on the boom 530. As will be discussed below, the pin 28 and contact wall 54 are not essential components. That is to say, the connecting member 90 may be eliminated, and the pin 28 and contact wall 54 may be additionally eliminated.

The output member 30 may be configured in any other manners than described in the above in relation with the embodiment. For example, when the shape of the buffer portions 92 of the connecting members 90 is changed as described in the above modification example, the shape of the second through holes 32H may be changed accordingly. The output member 30 may be configured in any manner as long as it can rotate about the central axis Q of the transmission shaft 25 upon application of power from the speed reducer 70.

The swing wall 50 may be configured in any other manners than described in the above in relation with the embodiment. The swing wall 50 may be configured in any manner as long as it can transmit to the boom 530 the power produced by the speed reducer 70 and transmitted to the swing wall 50 via the output member 30. For example, as in the above modification example of the output member 30, when the shape of the buffer portions 92 of the connecting members 90 is changed, the shape of the third through holes 53H in the opposing wall 53 may be changed accordingly. The swing wall 50 may be embodied without the guide wall 59. If the output wall 32 and opposing wall 53 are integrally molded into a single component as described in the above modification example, the opposing wall 53 may be eliminated, or there may be no wall component called the swing wall 50.

The swing wall 50 may be configured in a different manner than described in relation with the embodiment, in which case the shape of the contact wall 54 may be changed, for example. The contact wall 54 may be configured in any manner as long as it is fixed to the boom 530 and may contact the pin 28 as the boom 530 moves upon being impacted. Provided that the contact wall 54 satisfies these conditions, the contact wall 54 can transmit the impact applied onto the boom 530 to the main machine 520 via the pin 28.

The contact wall 54 is not an essential component. The boom swing mechanism 10 can be embodied without the contact wall 54 as long as connection is established via the transmission shaft 25 between the electric motor 20 and the speed reducer 70 and the output member 30, which can rotate upon application of power from the speed reducer 70, is connected to the boom 530. Provided that the boom swing mechanism 10 is configured in this manner, the drive force from the electric motor 20 can cause the boom 530 to swing in the left-to-right direction as described above. Even if the contact wall 54 is eliminated, the load applied to the speed reducer 70 from the boom 530 upon an impact on the boom 530 can be still reduced as described above by employing the connecting members 90 including the buffer portions 92, or providing the third gap. In addition to eliminating the contact wall 54, at least one of the connecting member 90 including the buffer portion 92 or the third gap may be eliminated.

The restriction member C configured to restrict the pin 28 from moving in the circumferential direction is not an essential component. The pin 28 may be configured in any other manners than described in the above in relation with the embodiment. For example, the pin 28 may be shaped like a polygonal tube. The pin 28 is configured in any manner as long as it is shaped like a tube to allow the transmission shaft 25 to be arranged therein and it is placed in the first through hole 520H in the main machine 520 together with the transmission shaft 25. Provided that the pin 28 satisfies these conditions, the pin 28 can transmit to the main machine 520 the load applied thereto from the contact wall 54.

The pin 28 may not be provided. As in the modification example of the contact wall 54, the boom swing mechanism 10 can be configured in any manner, with or without the pin 28, as long as the drive force produced by the electric motor 20 can cause the boom 530 to swing in the left-to-right direction.

The speed reducer 70 may be configured in any other manners than described in the above in relation with the embodiment. The speed reducer 70 may be configured in any manner as long as it can reduce the rotational speed of the output shaft 20B of the electric motor 20 and output the resulting rotation. Furthermore, a mechanism other than the speed reducer 70 may be employed as the speed changer. The speed changer can be configured in any manner as long as it can change the rotational speed of the electric motor 20 input thereto via the transmission shaft 25 and output the resulting rotation.

The first retainer 41 may be configured in any other manners than described in the above in relation with the embodiment. The first retainer 41 can be configured in any manner as long as it can hold the electric motor 20 at an appropriate position and in an appropriate orientation. The same applies to the second retainer 42. Specifically, the second retainer 42 can be configured in any manner as long as it can hold the speed reducer 70 at an appropriate position and in an appropriate orientation. The appropriate position and orientation are defined such that the transmission shaft 25 can transmit the rotation of the output shaft 20B of the electric motor 20 to the input shaft 76 of the speed reducer 70.

The shape of the main machine front portion 520A is not limited to the example described in the above embodiment. The main machine front portion 520A can be shaped in any manner as long as it has a through hole through which the transmission shaft 25 can extend and it can have the electric motor 20 and speed reducer 70 on the opposite sides across the through hole.

The boom swing mechanism 10 may be as a whole configured in any other manners than described in the above in relation with the embodiment. For example, the central axis Q of the transmission shaft 25 may extend slightly obliquely relative to the top-to-bottom direction. The central axis Q of the transmission shaft 25 may be only required to generally extend in the top-to-bottom direction of the main machine. The central axis Q may be tilted relative to the top-to-bottom direction within a range of about 15 degrees, for example. The boom swing mechanism 10 may be configured in any manner as long as the output shaft of the electric motor is connected to the input shaft of the speed reducer via the transmission shaft provided in the first through hole in the main machine and the output member, which is configured to rotate upon application of power from the speed reducer, can cause the swing wall 50 and thus the boom to rotate. The components of the boom swing mechanism 10 may be made from materials different from the examples described in the above embodiment. The appropriate materials for the respective components may be determined such that the drive force produced by the electric motor 20 can cause the boom 530 to swing.

In the foregoing embodiment, the boom swing mechanism 10 includes the main machine 520 as its components. In the excavator 500, however, the main machine 520 may be treated as one of the components of a different unit than the boom swing mechanism 10. In other words, the main machine 520 is not an essential component of the boom swing mechanism 10. The same applies to the boom 530. In the excavator 500, the boom 530 may be treated as one of the components of a different unit than the boom swing mechanism 10. In other words, the boom 530 is not an essential component of the boom swing mechanism 10.

The boom swing mechanism 10, which is an electric actuator, may be applied to any other construction machines than the excavator 500. The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems. For example, the walls are integrally molded in the foregoing embodiment. The walls, however, may be molded as separate members and then attached by means of bolts or the like. Some walls are attached together by means of bolts in the above embodiment, but may be alternatively integrally molded.

The technical ideas that can be grasped from the above embodiment and its modification examples are described in the following.
[1] A boom swing mechanism for a construction machine, the boom swing mechanism including:
   a main machine having a first through hole;
   an electric motor attached onto the main machine;
   a speed changer provided at a position opposing the electric motor with the first through hole being arranged therebetween, the speed changer being configured to change a rotational speed of an output shaft of the electric motor;
   a transmission shaft disposed in the first through hole, the transmission shaft being connected to the output shaft of the electric motor and to an input shaft of the speed changer;
   an output member configured to rotate on a central axis of the transmission shaft upon application of power from the speed changer; and
   a boom connected to the output member.
[2] The boom swing mechanism for a construction machine of [1], the boom swing mechanism including:
   a pin shaped like a tube, the pin having the transmission shaft arranged therein, the pin as well as the transmission shaft being arranged in the first through hole; and
   a contact wall fixed to the boom, the contact wall being in contact with the pin.
[3] The boom swing mechanism for a construction machine of [1] or [2], wherein the output member has a second through hole,
   wherein the boom swing mechanism includes:
      an opposing wall fixed to the boom, the opposing wall having a third through hole positioned to face the second through hole; and
      a connecting member connecting together the output member and the opposing wall, and
   wherein the connecting member includes:
      a base extending through the second and third through holes; and
      a buffer portion shaped like a tube, the buffer portion having the base arranged therein, the base and buffer portion extending through the second and third through holes, the buffer portion having a lower modulus of elasticity than the base.
[4] The boom swing mechanism for a construction machine of one of [1] to [3], including:
   an opposing wall fixed to the boom, the opposing wall facing the output member; and
   a connecting member connecting the opposing wall and the output member, wherein a gap is provided between the opposing wall and the output member.

### <Second Embodiment>

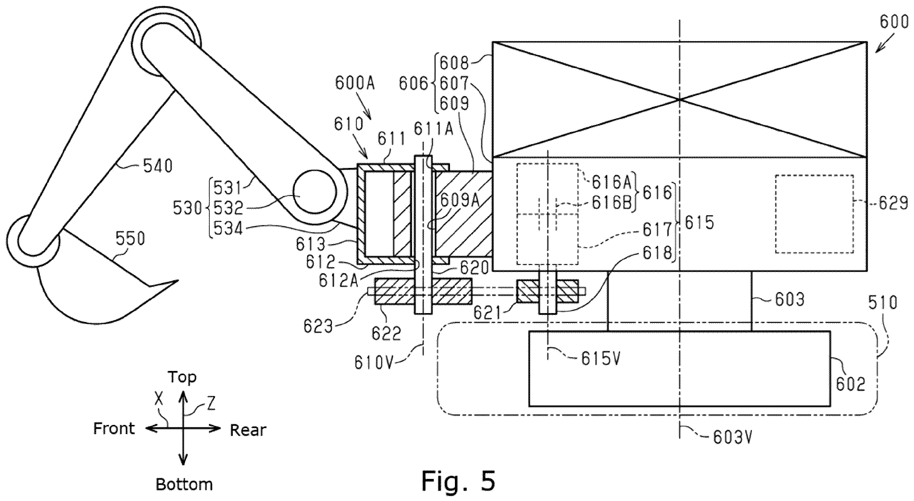

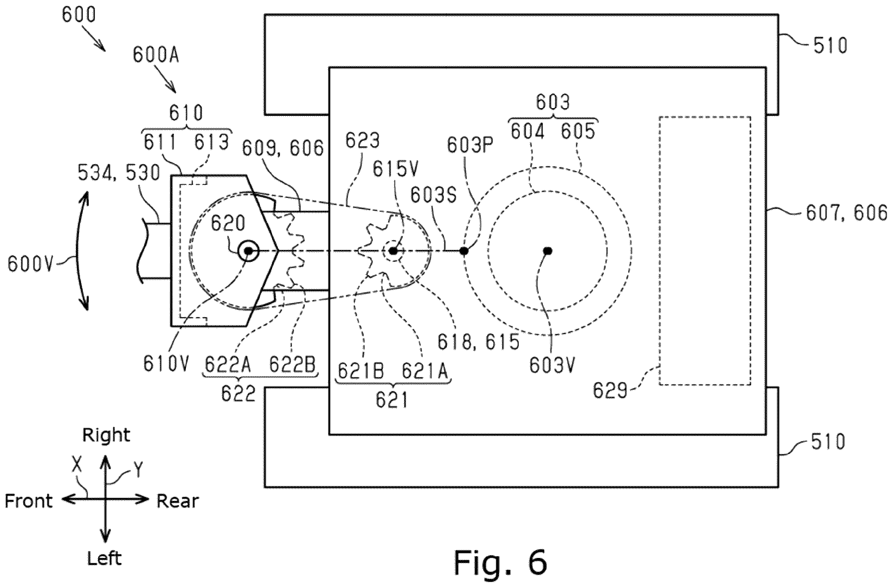

The following now describes a construction machine and an electric actuator for a construction machine relating to a second embodiment with reference to Figs. 5 to 6. The drawings may show the components in an enlarged manner for the sake of better intelligibility. The dimensions of the components and the ratios thereof may be different from those of the actual components, and among the drawings. In Figs. 5 and 6, the same reference labels as in Figs. 1 to 4 are used for the components that function the same or substantially the same as the corresponding components shown in Figs. 1 to 4. Sharing some common features with the first embodiment, the second embodiment is described in the following but redundant description may be omitted or simplified.

### <Overall Configuration>

As shown in Fig. 5, an excavator 600, which is a construction machine, includes a lower body 602, an upper body 606, which is a vehicle body, and a pair of traveling units 510. The upper body 606 is located on the opposite side to the ground surface with respect to the lower body 602. In the present embodiment, the excavator 600 is used as a reference to define the top (high, upper, upward), bottom (low, downward), left, right, front (forward), and rear. Specifically, when viewed from the lower body 602, the upper body 606 is located in the upward direction, and the opposite direction is the downward direction. A specific one of the directions orthogonal to the upward direction is the frontward direction, and the opposite direction is the rearward direction. Furthermore, the direction that is orthogonal to both of the upward and frontward directions faces the leftward and rightward directions, which are opposite to each other. In the following, the frontward and rearward directions may be referred to collectively as the X direction, the leftward and rightward directions as the Y direction, and the upward and downward directions as the Z direction. In Fig. 5, some of the components of the excavator 600 are shown in sectional views for the sake of convenience.

The lower body 602 is contoured like a rectangular parallelepiped, for example. The lower body 602 houses various mechanisms, devices, and parts necessary to operate the excavator 600. The traveling units 510 are provided at the left and right sides of the lower body 602. The traveling units 510 include crawlers and other components for traveling. The traveling units 510 causes the excavator 600 to travel.

As shown in Fig. 5, the upper body 606 has a casing 607, an operator compartment 608 and a support wall 609. The casing 607 is contoured like a rectangular parallelepiped. The casing 607 is hollow. The casing 607 houses therein various mechanisms, devices, and parts, like the lower body 602. For example, the casing 607 has a counterweight 629 at the rear end. The counterweight 629 is a weight to balance the weight of the excavator 600. The bottom surface of the casing 607 faces the lower body 602. The operator compartment 608 is positioned higher than the casing 607. The operator compartment 608 includes a passenger seat for the operator, and the like. The support wall 609 protrudes frontward from the front surface of the casing 607. The support wall 609 is fixed to the casing 607. The support wall 609 extends over the z-direction-wise middle portion of the casing 607. As shown in Fig. 6, the support wall 609 extends over the Y-direction-wise middle portion of the casing 607. Fig. 6 does not show the operator compartment 608. As shown in Fig. 5, the support wall 609 has a through hole 609A. The through hole 609A penetrates the support wall 609 in the top-to-bottom direction. The central axis of the through hole 609A extends substantially in the Z direction. Hereafter, the central axis of the through hole 609A may be referred to as a slew axis 610V. As shown in Fig. 6, in the Y direction, the slew axis 610V is located substantially at the middle of the casing 607.

### <Slewing Bearing>

As shown in Fig. 5, the excavator 600 includes a slewing bearing 603. The slewing bearing 603 is interposed between the lower body 602 and the upper body 606. In Fig. 5, the width of the slewing bearing 603 in the top-to-bottom or Z direction is shown in an exaggerated and enlarged manner. As shown in Fig. 6, the slewing bearing 603 has an annular inner race 604, an annular outer race 605, and a plurality of rolling elements. Fig. 6 does not show the rolling elements. The outer diameter of the inner race 604 is less than the inner diameter of the outer race 605. The central axis of the inner race 604 substantially coincides with the central axis of the outer race 605. The inner race 604 is situated inside the outer race 605 in the radial direction centered on its own central axis. The central axes of the inner and outer races 604 and 605 both extend substantially in the Z direction. Hereinafter, the central axis of the inner race 604 is referred to as a bearing axis 603V. The bearing axis 603V is located substantially at the middle of the casing 607 in both of the X and Y directions. The rolling elements are, for example, spheres. The rolling elements are interposed between the inner race 604 and the outer race 605. The rolling elements support the inner and outer races 604 and 605 such that they can rotate relative to each other. The outer race 605 is thus rotatable about the bearing axis 603V relative to the inner race 604. The inner race 604 is fixedly attached to the lower body 602. The outer race 605 is fixedly attached to the casing 607 of the upper body 606. Accordingly, the upper body 606 is rotatable about the bearing axis 603V relative to the lower body 602. The rear end of the outer race 605 is located in front of the counterweight 629.

Although not shown, a slewing drive unit is provided near the slewing bearing 603. The slewing drive unit includes an electric motor, and a speed reducer for reducing the rotational speed of the electric motor and outputting the resulting rotation. The electric motor can rotate in both forward and reverse directions. As the electric motor can rotate in both forward and reverse directions, the slewing drive unit can output torque in both forward and reverse directions. The torque output from the slewing drive unit causes the outer race 605 to rotate relative to the inner race 604. Accordingly, the upper body 606 slews to the left and right relative to the lower body 602. As described above, the upper body 606 is supported by the slewing bearing 603 such that the upper body 606 can slew relative to the lower body 602. The bearing axis 603V constitutes the central axis (a second slew axis) of the slewing of the upper body 606 relative to the lower body 602.

### <Excavation Machine>

As shown in Fig. 5, the excavator 600, which is an excavation machine, includes a boom 530, an arm 540, and a bucket 550. The boom 530, arm 540, and bucket 550 are basically configured in the same manner as in the first embodiment. Specifically, the boom 530 includes a base wall 534, a connecting shaft 532, and a boom body 531. The base wall 534 is positioned in front of the upper body 606. The base wall 534 is fixedly attached to a swing bracket 610, which will be described below. The base wall 534 can be shaped in any manner as long as it can be secured to the swing bracket 610. The connecting shaft 532 connects the base wall 534 and the boom body 531. One end of the boom body 531 is fixed onto the connecting shaft 532. The boom body 531 can rotate about the connecting shaft 532 upward and downward. The other end of the boom body 531 is connected to the arm 540. The arm 540 can rotate about the joint where it is connected with the boom body 531, relative to the boom body 531. The end of the arm 540 that is opposite to the end connected to the boom body 531 is connected to the bucket 550. The bucket 550 can rotate upward and downward about the joint where it is connected to the arm 540, relative to the arm 540.

### <Boom Swing Mechanism>

The excavator 600 includes a boom swing mechanism 600A. As indicated by the arrow 600V in Fig. 6, the boom swing mechanism 600A is configured to cause the boom 530 to swing to the left and right relative to the upper body 606. The boom swing mechanism 600A constitutes an electric actuator.

As shown in Fig. 5, the boom swing mechanism 600A includes a swing bracket 610. The swing bracket 610 is interposed between the casing 607 of the upper body 606 and the boom 530. The swing bracket 610 has an upper wall 611, a lower wall 612, a connecting wall 613.

The upper wall 611 is positioned higher than the support wall 609. The upper wall 611 extends frontward from the frontward portion of the support wall 609. The front end of the upper wall 611 is in front of the front surface of the support wall 609. The upper wall 611 is shaped like a plate having a thickness in the top-to-bottom direction. As shown in Fig. 6, the upper wall 611 is shaped like a pentagon when viewed from above. In other words, when viewed from above, the upper wall 611 is divided into a quadrangular first portion and a triangular second portion. The second portion is positioned behind the first portion. As shown in Fig. 5, a through hole 611A, which is positioned near the boundary between the first and second portions, penetrates the upper wall 611 in the top-to-bottom direction. The central axis of the through hole 611A extends substantially in the Z direction. The central axis of the through hole 611A substantially coincides with the slew axis 610V. The slew axis 610V is the center axis of the through hole 609A in the support wall 609, as described above. The diameter of the through hole 611A is less than that of the through hole 609A in the support wall 609.

As shown in Fig. 5, the connecting wall 613 protrudes downward from the bottom surface of the upper wall 611. For example, the connecting wall 613 and upper wall 611 are integrally molded. As shown in Fig. 6, the connecting wall 613 is positioned on the frontward portion of the upper wall 611. The connecting wall 613 extends along the edge of the upper wall 611. As shown in Fig. 5, the base wall 534 of the boom 530 is fixed to the surface of the connecting wall 613 that is opposite to the surface facing the support wall 609. The dimension of the connecting wall 613 in the Z direction is substantially equal to the dimension of the support wall 609 of the upper body 606 in the Z direction.

The lower wall 612 is positioned lower than the connecting wall 613. The lower wall 612 has substantially the same shape and dimensions as the upper wall 611. When the lower wall 612 is viewed from above, each side of the pentagonal lower wall 612 overlaps the corresponding side of the pentagonal upper wall 611. The central axis of the through hole 612A in the lower wall 612 substantially coincides with the slew axis 610V. For example, the lower wall 612 and connecting wall 613 are integrally molded.

The boom swing mechanism 600A includes a pin 620. The pin 620 extends through the through hole 609A in the support wall 609. The pin 620 is shaped like a circular column. The central axis of the pin 620 extends substantially in the Z direction. The central axis of the pin 620 substantially coincides with the slew axis 610V. The diameter of the pin 620 is less than that of the through hole 609A in the support wall 609. A gap is present between the outer surface of the pin 620 and the inner surface of the through hole 609A in the support wall 609. Fig. 5 shows the gap between the inner surface of the through hole 609A and the outer surface of the pin 620 in an exaggerated and enlarged manner. The pin 620 is rotatably supported on the inner surface of the through hole 609A. The pin 620 is rotatable about the slew axis 610V.

The pin 620 passes through the through hole 611A in the upper wall 611 and through the through hole 612A in the lower wall 612 of the swing bracket 610. The top end of the pin 620 is situated higher than the top surface of the upper wall 611. The bottom end of the pin 620 is situated lower than the bottom surface of the lower wall 612. Furthermore, in the Z direction, the bottom end of the pin 620 is located lower than the bottom surface of the casing 607 of the upper body 606. The diameter of the pin 620 is substantially equal to that of the through hole 611A in the upper wall 611 and to that of the through hole 612A in the lower wall 612. The pin 620 is fixedly attached to the upper and lower walls 611 and 612. Therefore, as the pin 620 rotates about the slew axis 610V, the upper and lower walls 611 and 612 rotate together with the pin 620. As described above, the swing bracket 610 is connected to the support wall 609 via the pin 620 so that it can rotate about the slew axis 610V (a first slew axis).

### <Drive Device>

As shown in Fig. 5, the boom swing mechanism 600A includes a drive device 615. The drive device 615 is entirely housed in the casing 607. The drive device 615 includes an electric motor 616, a speed reducer 617, and a transmission shaft 618.

The electric motor 616 is the drive source for the drive device 615. The electric motor 616 includes a housing 616A, and an output shaft 616B. The electric motor 616 operates upon receiving electricity fed from a battery, which is not shown. The housing 616A is housed in the casing 607. The housing 616A is mounted onto the inner wall of the casing 607. The housing 616A is positioned in front of the slewing bearing 603. In the Y direction, the housing 616A is positioned substantially at the middle of the casing 607. The housing 616A is contoured like a circular column. The central axis of the housing 616A extends substantially in the Z direction. The central axis of the housing 616A is substantially parallel to the slew axis 610V described in the above in relation with the swing bracket 610. The output shaft 616B protrudes downward beyond the housing 616A. The output shaft 616B is shaped like a circular column. The central axis of the output shaft 616B substantially coincides with the central axis of the housing 616A. The output shaft 616B is configured to rotate relative to the housing 616A. The output shaft 616B rotates about its own central axis. The output shaft 616B can rotate in both of the forward and reverse directions upon power supply to the housing 616A.

The speed reducer 617 is positioned lower than the electric motor 616. The speed reducer 617 is housed in the casing 607. The speed reducer 617 is mounted onto the inner wall of the casing 607. The speed reducer 617 is contoured like a circular column. The outer diameter of the speed reducer 617 is substantially equal to that of the housing 616A of the electric motor 616. The central axis of the speed reducer 617 substantially coincides with the central axis of the output shaft 616B of the electric motor 616. The speed reducer 617 is connected to the output shaft 616B of the electric motor 616. The speed reducer 617 thus receives the torque of the output shaft 616B of the electric motor 616. The speed reducer 617 multiplies the torque of the output shaft 616B of the electric motor 616 with a predetermined ratio and outputs the resulting torque. The speed reducer 617 may be of, for example, an eccentric oscillation gear type or planetary gear type. The speed reducer 617 can be of any type as long as it is capable of multiplying and outputting the torque from the electric motor 616.

The transmission shaft 618 is positioned lower than the speed reducer 617. The transmission shaft 618 is partly housed in the casing 607. The remaining part of the transmission shaft 618 protrudes downward beyond the bottom surface of the casing 607. The transmission shaft 618 is shaped like a circular column. The diameter of the transmission shaft 618 is less than that of the speed reducer 617. The central axis of the transmission shaft 618 substantially coincides with the central axis of the output shaft 616B of the electric motor 616. The transmission shaft 618 is connected to the speed reducer 617. The transmission shaft 618 rotates on its own central axis upon application of the torque from the speed reducer 617. Stated differently, with the central axis of the transmission shaft 618 being referred to as a rotation axis 615V, the transmission shaft 618 and thus the drive device 615 output torque centered on the rotation axis 615V.

The following describes in detail how the drive device 615 is positioned in the X and Y directions. The position of the drive device 615 is defined in relation to the slew axis 610V, which is the central axis of the through hole 609A in the support wall 609, and to the bearing axis 603V, which is the central axis of the slewing of the upper body 606. The term "first direction" refers to the direction in which the slew axis 610V is located as viewed from the bearing axis 603V. In the present embodiment, the first direction is the frontward direction. Referring to Fig. 6, the reference label "603P" indicates the portion of the outer race 605 of the slewing bearing 603 that is the closest to the slew axis 610V in the first direction. This portion is referred to as the specific portion 603P. The specific portion 603P is the front edge of the outer race 605 of the slewing bearing 603. The reference label "603S" indicates the imaginary line segment connecting the specific portion 603P and the slew axis 610V when the excavator 600 is viewed in the direction extending along the slew axis 610V. This imaginary line segment is referred to as the specific line segment 603S. The position of the drive device 615 satisfies the following first condition. The first condition is that the rotation axis 615V of the drive device 615 is positioned on the specific line segment 603S when the excavator 600 is viewed in the direction extending along the slew axis 610V.

### <Drive Sprocket>

As shown in Fig. 5, the boom swing mechanism 600A includes a drive sprocket 621. The drive sprocket 621 is a drive member. The drive sprocket 621 is mounted onto the transmission shaft 618. Stated differently, the drive sprocket 621 is attached to the casing 607 via the drive device 615. As shown in Fig. 6, the drive sprocket 621 has a body 621A and a plurality of teeth 621B. Fig. 6 schematically shows only some of the teeth 621B. The body 621A is annular. The central axis of the body 621A substantially coincides with the rotation axis 615V. The body 621A has a hole at the center, which is penetrated by the transmission shaft 618. The body 621A is fixed onto the transmission shaft 618. The body 621A rotates together with the transmission shaft 618. In other words, upon application of the torque from the drive device 615, the body 621A rotates about the rotation axis 615V. The teeth 621B protrude from the outer peripheral surface of the body 621A. The teeth 621B are arranged at equal intervals in the circumferential direction centered on the rotation axis 615V. In the drive sprocket 621, the teeth 621B protrude from the outer peripheral surface of the body 621A. This fact is equivalent to that the drive sprocket 621 has the teeth 621B on the outer peripheral surface of the body 621A.

### <Driven Sprocket>

As shown in Fig. 5, the boom swing mechanism 600A includes a driven sprocket 622. The driven sprocket 622 is a transmission target member. The driven sprocket 622 is mounted onto the pin 620. Stated differently, the driven sprocket 622 is attached to the swing bracket 610 via the pin 620. As shown in Fig. 6, the driven sprocket 622 has a body 622A and a plurality of teeth 622B. Fig. 6 schematically shows only some of the teeth 622B. The body 622A is annular. The outer diameter of the body 622A is greater than that of the body 621A of the drive sprocket 621. The central axis of the body 622A substantially coincides with the slew axis 610V. The body 622A has a hole at the center, which is penetrated by the pin 620. The body 622A is fixed onto the pin 620. The body 622A rotates together with the pin 620. This means that the body 622A can rotate about the slew axis 610V. The teeth 622B protrude from the outer peripheral surface of the body 622A. The teeth 622B are arranged at equal intervals in the circumferential direction centered on the slew axis 610V. In the driven sprocket 622, the teeth 622B protrude from the outer peripheral surface of the body 622A. This fact is equivalent to that the driven sprocket 622 has the teeth 622B on the outer peripheral surface of the body 622A.

### <Chain>

The boom swing mechanism 600A includes a chain 623. The chain 623 is a transmission mechanism. The chain 623 is wound around the drive sprocket 621 and driven sprocket 622. The chain 623 meshes with the teeth 621B of the drive sprocket 621 and with the teeth 622B of the driven sprocket 622. The chain 623 transmits the rotation of the drive sprocket 621 to the driven sprocket 622. The chain 623 causes the drive sprocket 621 and driven sprocket 622 to rotate in a coordinated manner.

### <How Second Embodiment Works>

In the boom swing mechanism 600A, upon rotation of the output shaft 616B of the electric motor 616, the transmission shaft 618 accordingly rotates as well as the output shaft 616B. Upon rotation of the transmission shaft 618, the drive sprocket 621 rotates. The rotation of the drive sprocket 621 causes the chain 623 to circle, which resultantly causes the driven sprocket 622 to rotate. When the driven sprocket 622 rotates, the pin 620 and swing bracket 610 rotate. The rotation of the swing bracket 610 causes the boom 530 to swing to the left and right around the slew axis 610V, as indicated by the arrow 600V in Fig. 6.

### <Advantageous Effects of Second Embodiment>

(2-1) As described above in the "How Second Embodiment Works" section, the excavator 600 relating to the second embodiment can use the electric motor 616 as the drive source to cause the boom 530 to swing to the left and right.

As described in the first embodiment, an external load may be applied to the boom 530 when the bucket 550 collides with the object to be excavated. This load is hereinafter referred to as the collision load. As shown in Fig. 5, in the excavator 600 relating to the present embodiment, the collision load can be transmitted to the driven sprocket 622 via the swing bracket 610 and pin 620. Upon application of the collision load, the driven sprocket 622 slightly moves. This movement of the driven sprocket 622 is absorbed by the chain 623, which may be bent to some extent. The movement of the driven sprocket 622 is thus hardly transmitted to the drive sprocket 621 and thus drive device 615. In the excavator 600 relating to the present embodiment, the collision load acting upon the boom 530 can be prevented from reaching the drive device 615. Therefore, the present embodiment can produce the same effect as the first embodiment. It is no longer necessary to configure the speed reducer 617 and electric motor 616 such that they can withstand the collision load. Accordingly, the second embodiment can prevent an increase in size of the speed reducer 617.

(2-2) The present embodiment uses the mechanism constituted by the sprockets and chain in order to transmit the torque of the drive device 615 to the boom 530. With the use of the sprockets and chain, the torque of the drive device 615 can be efficiently transmitted to the pin 620 and thus boom 530 without a loss due to the meshing between the teeth of the sprockets and the chain. In addition, as described in (2-1), the chain can absorb the load that reaches the driven sprocket 622 by bending.

(2-3) According to the present embodiment, the outer diameter of the driven sprocket 622 is greater than that of the drive sprocket 621. As the sizes of the sprockets satisfy this relationship, the torque of the drive device 615 can be converted into a large torque and then transmitted to the pin 620 and thus boom 530. Therefore, in the second embodiment, the drive device 615 is only required to produce a small torque in order to cause the boom 530 to swing.

(2-4) In the present embodiment, the drive device 615 and thus drive sprocket 621 are positioned such that they satisfy the first condition. Specifically, the rotation axis 615V of the drive device 615, i.e., the rotation axis of the drive sprocket 621, is located between the front edge of the outer race 605 of the slewing bearing 603 and the slew axis 610V, on which the driven sprocket 622 is centered. As the drive device 615 and drive sprocket 621 are arranged in this manner, the distance from the drive sprocket 621 to the driven sprocket 622 is short. This means that a short chain can be used as the chain 623 wound around the drive sprocket 621 and driven sprocket 622. As a result, the power can be transmitted from the drive sprocket 621 to the driven sprocket 622 with a reduced loss. Stated differently, the power can be efficiently transmitted from the drive sprocket 621 to the driven sprocket 622.

### <Modification Examples of Second Embodiment>

The second embodiment can be modified as described below. The first and second embodiments and the following modifications can be combined with each other to such an extent that they are technically consistent with each other.

The drive member is not limited to the example described in the above in relation with the embodiment. The drive member may be, for example, an annular drive pulley centered on the rotation axis 615V. In other words, the drive member may be configured without teeth on its outer peripheral surface. When the drive pulley is employed as the drive member, an annular driven pulley centered on the slew axis 610V may be employed as the transmission target member. Like the drive pulley, the driven pulley is configured without teeth on its outer peripheral surface. When the drive and driven pulleys are respectively employed as the drive member and transmission target member, the transmission mechanism may be a belt that is wound around the drive and driven pulleys. When the drive pulley, driven pulley, and belt are employed, noise and vibration can be reduced during the power transmission from the drive pulley to the driven pulley. The drive member, transmission target member, and transmission mechanism may not be limited to the pulleys and belt described above and may be configured in any other manner as long as power can be transmitted. For example, the drive member, transmission target member, and transmission mechanism may be configured as a mechanism including a series of gears.

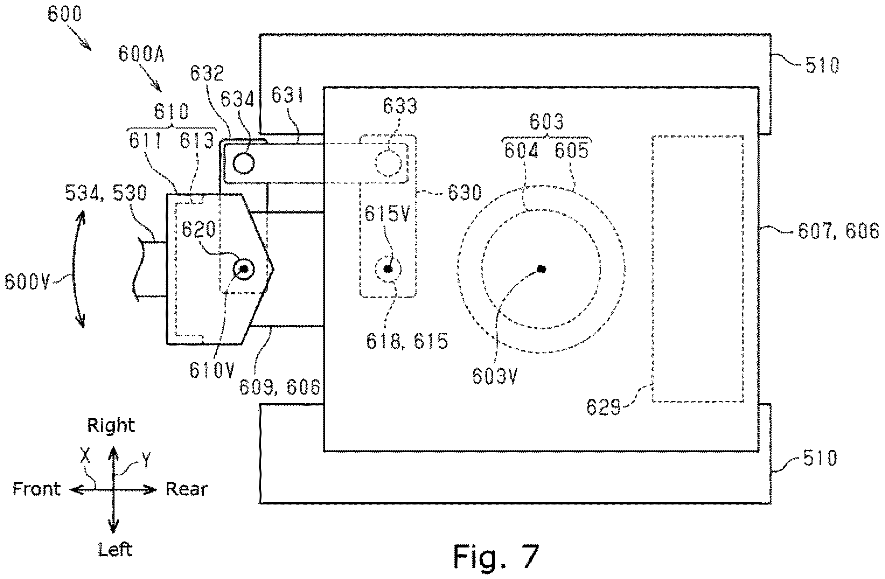

For example, as shown in Fig. 7, the drive member, transmission target member, and transmission mechanism may be configured as a link mechanism including a series of links. Specifically, the drive member in the configuration shown in Fig. 7 is a drive link 630. The transmission target member is a driven link 632. The transmission mechanism includes a transmission link 631, a first link shaft 633, and a second link shaft 634. The drive link 630, driven link 632, and transmission link 631 are shaped like an elongated plate. The first and second link shafts 633 and 634 are shaped like a circular column. A first end of the drive link 630 is fixed to the transmission shaft 618 of the drive device 615. The drive link 630 can rotate together with the transmission shaft 618. A second end of the drive link 630 is connected to the transmission link 631 via the first link shaft 633. Specifically, the second end of the drive link 630 is fixed to the first link shaft 633. The central axis of the first link shaft 633 extends substantially in the Z direction. The first link shaft 633 extends through a first end of the transmission link 631. The transmission link 631 and first link shaft 633 are rotatable relative to each other. The first link shaft 633 is retained to the drive link 630 and transmission link 631. A second end of the transmission link 631 is connected to the driven link 632 via the second link shaft 634. Specifically, the second end of the transmission link 631 is penetrated by the second link shaft 634. The central axis of the second link shaft 634 extends substantially in the Z direction. The transmission link 631 and second link shaft 634 are rotatable relative to each other. The second link shaft 634 is fixed to a first end of the driven link 632. The second link shaft 634 is retained to the transmission link 631 and driven link 632. A second end of the driven link 632 is fixed to the pin 620. The driven link 632 can rotate together with the pin 620. According to the above-described configuration, as the transmission shaft 618 rotates, this causes the drive link 630 to rotate about the rotation axis 615V. The rotation of the drive link 630 is transmitted to the driven link 632 via the transmission link 631. As a result, the driven link 632 can rotate about the slew axis 610V together with the pin 620. The rotation of the pin 620 causes the swing bracket 610 and thus boom 530 to rotate. For example, some components may be interposed between the transmission shaft 618 of the drive device 615 and the pin 620. The link mechanism shown in Fig. 7 may be effectively employed in order to establish connection between the transmission shaft 618 and the pin 620 without interfering with such interposed components. The link mechanism described above can be adaptively modified in terms of how many link components are used to constitute the link mechanism and how those link components are arranged. Some of the components shown in Fig. 7 function in the same or substantially the same manner as the corresponding components shown in Figs. 5 and 6. Those components are labeled with the same reference numerals as used in Figs. 5 and 6. Fig. 7 does not show the operator compartment 608, like Fig. 6.

The drive member and transmission target member may be shaped like an annulus, a circular tube or a circular column. In these cases, the relationship between the outer diameter of the drive member and that of the transmission target member is not limited to the example described above in relation with the embodiment. For example, the outer diameter of the drive member may be substantially equal to that of the transmission target member.

How the drive member is connected to the drive device 615 is not limited to the example described in the above in relation with the embodiment. The drive member may be connected in any other manners as long as it can rotate about the rotation axis 615V upon application of the torque from the drive device 615. For example, one or more additional components may be interposed between the drive member and the drive device 615. The drive member may be positioned differently than described in relation with the foregoing embodiment depending on how the drive member is connected to the drive device 615.

How the transmission target member is connected to the swing bracket 610 is not limited to the example described in the above in relation with the embodiment. In the foregoing embodiment, the pin 620 penetrates the lower wall 612. As an alternative example, a columnar member may be mounted to the lower surface of the lower wall 612 in place of the pin 620. Onto this columnar member, the transmission target member may be mounted. The transmission target member may be fixed directly to the lower surface of the lower wall 612. The transmission target member may be positioned differently than in the above-described embodiment depending on how the transmission target member is connected to the swing bracket 610. The transmission target member may be placed at any position as long as it can rotate about the slew axis 610V of the swing bracket 610.

The swing bracket 610 may be configured and positioned in any other manners than described in the above in relation with the embodiment. The swing bracket 610 may be configured and positioned in any manner as long as it is fixedly attached to the boom 530 and connected to the vehicle body such that is can rotate about the slew axis 610V. For example, the upper wall 611 may be shaped in a different manner than described in the above in relation with the embodiment.

How the swing bracket 610 is connected to the vehicle body is not limited to the example described in the above in relation with the embodiment. The swing bracket 610 may be connected to the vehicle body in any manner as long as the swing bracket 610 can rotate about the slew axis 610V.

The vehicle body, which supports the swing bracket 610, may be configured in any other manners than described in the above in relation with the embodiment. For example, the through hole 609A in the support wall 609, and thus the slew axis 610V, may be shifted from the center of the casing 607 in the Y direction. The swing bracket 610 may be positioned differently relative to the vehicle body depending on how the vehicle body for supporting the swing bracket 610 is configured.

The boom 530 may be fixed to the swing bracket 610 at any other sites than described in the above in relation with the embodiment. The boom 530 may be fixed to the swing bracket 610 at any site.

The slewing bearing 603 may be configured and positioned in any other manners than described in the above in relation with the embodiment. The slewing bearing 603 may be configured and positioned in any manner as long as it can support the upper and lower bodies 606 and 602 such that the upper body 606 can slew relative to the lower body 602.

The bearing axis 603V and the slew axis 610V may be positioned relative to each other differently than described in the above in relation with the embodiment depending on where the through hole 609A and the slew bearing 603 are positioned, and so are the specific portion, first direction, and specific line segment for the first condition.

The drive device 615 may be configured and positioned in any other manners than described in the above in relation with the embodiment. The drive device 615 may be configured and positioned in any manner as long as it is attached to the vehicle body, includes the electric motor 616 and can output torque centered on the rotation axis. For example, the electric motor 616 may have a different shape than a circular column. For example, the drive device 615 may be embodied without the speed reducer 617 and transmission shaft 618. In this case, the drive member may be directly attached onto the output shaft 616B of the electric motor 616. The drive device 615 may be configured such that the central axis of the output shaft 616B of the electric motor 616 is positioned differently than the rotation axis of the torque that is output from the drive device 615 to a component external to the drive device 615. This may be possible if the drive device 615 is provided with a mechanism for changing the direction of rotation of the electric motor 616. The rotation axis of the torque output from the drive device 615 is only required to extend in the top-to-bottom direction of the vehicle body as a whole. For example, it may be tilted relative to the Z direction within a range of approximately 15 degrees, for example.

The drive device 615 and thus the drive member are positioned so as to satisfy the first condition, which is not limited to the example described in the above in relation with the embodiment. The first condition may be defined in any manner as long as it requires that the drive member is at least partly positioned on the specific line segment 603S when the excavator 600 is viewed in the direction extending along the slew axis 610V. As long as the drive member is positioned to satisfy this first condition, the same effect as described in the (2-4) section can be produced.

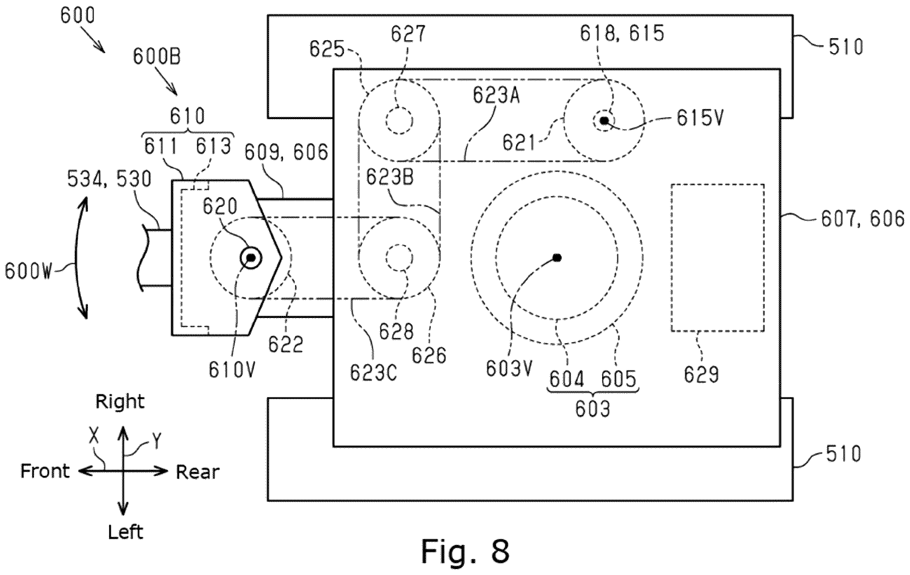

It is not essential that the position of the drive member satisfies the first condition. The drive member may be positioned anywhere ignoring the first condition. In this case, a boom swing mechanism 600B shown in Fig. 8 may be employed, for example. As in the second embodiment, the boom swing mechanism 600B constitutes an electric actuator. Some of the components shown in Fig. 8 function in the same or substantially the same manner as the corresponding components shown in Figs. 5 and 6. Those components are labeled with the same reference numerals as used in Figs. 5 and 6. Fig. 8 does not show the operator compartment 608, like Fig. 6.

As in the second embodiment described above, the term "first direction" hereinafter refers to the direction in which the slew axis 610V is located as viewed from the bearing axis 603V. The term "second direction" refers to the direction opposite to the first direction. In the example shown in Fig. 8, the first direction is the frontward direction. The second direction is the rearward direction.

In the boom swing mechanism 600B shown in Fig. 8, the drive device 615 and drive sprocket 621 are behind the bearing axis 603V. In other words, the drive device 615 and drive sprocket 621 are located on the second direction side with respect to bearing axis 603V. The drive device 615 and drive sprocket 621 are positioned on the right side relative to the outer race 605 of the slewing bearing 603. The drive device 615 and drive sprocket 621 are connected to each other in the same manner as described above in relation with the embodiment.

In the boom swing mechanism 600B shown in Fig. 8, the driven sprocket 622 is positioned at the same position as in the above-described embodiment. In the boom swing mechanism 600B shown in Fig. 8, the outer diameter of the driven sprocket 622 is substantially equal to that of the drive sprocket 621.

The boom swing mechanism 600B includes a first intermediate shaft 627 and a second intermediate shaft 628. The first intermediate shaft 627 is in front of the drive sprocket 621. Specifically, the first intermediate shaft 627 is in front of the outer race 605 of the slewing bearing 603. The first intermediate shaft 627 is located at substantially the same position as the drive sprocket 621 in the Y direction. The first intermediate shaft 627 is shaped like a circular column. The central axis of the first intermediate shaft 627 extends substantially in the Z direction. In other words, the central axis of the first intermediate shaft 627 is substantially parallel to the rotation axis 615V pertaining to the drive device 615. The upper end surface of the first intermediate shaft 627 is fixedly attached to the lower surface of the casing 607. Stated differently, the first intermediate shaft 627 is mounted onto the casing 607.

The second intermediate shaft 628 is positioned on the left side with respect to the first intermediate shaft 627. When the excavator 600 is viewed in the direction extending along the slew axis 610V, the second intermediate shaft 628 is positioned on an imaginary line segment connecting the bearing axis 603V and the slew axis 610V. In other words, the second intermediate shaft 628 is located at substantially the same position as the transmission shaft 618 relating to the second embodiment in the X and Y directions. The second intermediate shaft 628 is shaped like a circular column, like the first intermediate shaft 627. The diameter of the second intermediate shaft 628 is substantially equal to that of the first intermediate shaft 627. The central axis of the second intermediate shaft 628 extends substantially in the Z direction. In other words, the central axis of the second intermediate shaft 628 is substantially parallel to the rotation axis 615V pertaining to the drive device 615. The upper end surface of the second intermediate shaft 628 is fixedly attached to the lower surface of the casing 607. Stated differently, the second intermediate shaft 628 is mounted onto the casing 607.

The boom swing mechanism 600B includes a first intermediate sprocket 625 and a second intermediate sprocket 626. The first and second intermediate sprockets 625 and 626 are both intervening members. The first intermediate sprocket 625 is mounted onto the first intermediate shaft 627. Although not shown in detail, the first intermediate sprocket 625 has an annular body, a first group of teeth protruding from the outer peripheral surface of the body, and a second group of teeth protruding from the outer peripheral surface of the body. For example, the first group of teeth is located at one end of the body in the direction extending along the central axis of the body. The second group of teeth is located at the other end of the body in the direction extending along the central axis of the body. The inner diameter of the body is slightly greater than the diameter of the first intermediate shaft 627. The body has a hole at the center, which is penetrated by the first intermediate shaft 627. The central axis of the body substantially coincides with the central axis of the first intermediate shaft 627. The body can rotate relative to the first intermediate shaft 627. The body can rotate about the first intermediate shaft 627 and thus about its own central axis. Although not shown, a tubular member is attached to the portion of the first intermediate shaft 627 that is opposite to the lower surface of the casing 607 with the first intermediate sprocket 625 being sandwiched, in order to prevent the first intermediate sprocket 625 from falling. In other words, the first intermediate sprocket 625 is mounted onto the casing 607 and thus to the vehicle body by means of the first intermediate shaft 627. With the first intermediate sprocket 625 being mounted onto the casing 607, the first group of teeth of the first intermediate sprocket 625 is located at substantially the same position in the Z direction as the teeth of the drive sprocket 621. The second group of teeth of the first intermediate sprocket 625 is located at substantially the same position in the Z direction as a second group of teeth of the second intermediate sprocket 626, which will be described below.

The second intermediate sprocket 626 is configured in the same manner as the first intermediate sprocket 625. Specifically, the second intermediate sprocket 626 has an annular body, a first group of teeth protruding from the outer peripheral surface of the body, and a second group of teeth protruding from the outer peripheral surface of the body. The first and second groups of teeth are spaced away from each other in the direction extending along the central axis of the body. The body has a hole at the center, which is penetrated by the second intermediate shaft 628. The body can rotate relative to the second intermediate shaft 628. The body can rotate about the second intermediate shaft 628 and thus about its own central axis. A tubular member is attached to the portion of the second intermediate shaft 628 that is opposite to the lower surface of the casing 607 with the second intermediate sprocket 626 being sandwiched, in order to prevent the second intermediate sprocket 626 from falling. Stated differently, the second intermediate sprocket 626 is attached to the casing 607 and thus to the vehicle body by means of the second intermediate shaft 628. With the second intermediate sprocket 626 being mounted onto the casing 607, the first group of teeth of the second intermediate sprocket 626 is located at substantially the same position in the Z direction as the teeth of the driven sprocket 622.

The boom swing mechanism 600B includes a first chain 623A, a second chain 623B, and a third chain 623C. The first, second and third chains 623A, 623B, and 623C constitute the transmission mechanism.

The first chain 623A is wound around the drive sprocket 621 and the first group of teeth of the first intermediate sprocket 625. The first chain 623A meshes with the teeth of the drive sprocket 621 and with the first group of teeth of the first intermediate sprocket 625. The first chain 623A transmits the rotation of the drive sprocket 621 to the first intermediate sprocket 625. Stated differently, the first chain 623A causes the drive sprocket 621 and the first intermediate sprocket 625 to rotate in a coordinated manner.

The second chain 623B is wound around the second group of teeth of the first intermediate sprocket 625 and the second group of teeth of the second intermediate sprocket 626. The second chain 623B meshes with the teeth of the first intermediate sprocket 625 and with the teeth of the second intermediate sprocket 626. The second chain 623B transmits the rotation of the first intermediate sprocket 625 to the second intermediate sprocket 626. Stated differently, the second chain 623B causes the first intermediate sprocket 625 and the second intermediate sprocket 626 to rotate in a coordinated manner.

The third chain 623C is wound around the first group of teeth of the second intermediate sprocket 626 and the driven sprocket 622. The third chain 623C meshes with the first group of teeth of the second intermediate sprocket 626 and with the teeth of the driven sprocket 622. The third chain 623C transmits the rotation of the second intermediate sprocket 626 to the driven sprocket 622. Stated differently, the third chain 623C causes the second intermediate sprocket 626 and the driven sprocket 622 to rotate in a coordinated manner.

In the boom swing mechanism 600B shown in Fig. 8, the drive device 615 outputs torque, and the torque causes the drive sprocket 621, first intermediate sprocket 625, second intermediate sprocket 626, and driven sprocket 622 to rotate in a coordinated manner. When the driven sprocket 622 rotates, the pin 620 and swing bracket 610 rotate. The rotation of the swing bracket 610 causes the boom 530 to swing to the left and right around the slew axis 610V, as indicated by the arrow 600W in Fig. 8.

With the boom swing mechanism 600B shown in Fig. 8, the drive device 615 and drive sprocket 621 can be positioned as close to the rear end of the excavator 600 as possible. In this case, the weight of the excavator 600 is shifted rearward by the amount equal to the total weight of the drive device 615 and drive sprocket 621. Thus, the weight of the excavator 600 can be balanced even with a lighter counterweight 629, which is provided at the rear end of the casing 607. Thus, the counterweight 629 can have a reduced weight. This will be translated into a reduction in the total weight of the excavator 600.

In the boom swing mechanism 600B shown in Fig. 8, the number and positions of the intermediate sprockets interposed between the drive sprocket 621 and the driven sprocket 622 are not limited to the examples shown in Fig. 8. The number and positions of the intermediate sprockets may be adaptively determined such that the power can be smoothly transmitted from the drive sprocket 621 to the driven sprocket 622.

The intermediate sprockets are connected to the vehicle body in any other manners than described in relation with Fig. 8. The connection can be designed in any manner as long as the intermediate sprockets can rotate about an axis that is parallel to the rotation axis 615V relating to the drive device 615.

Referring to the boom swing mechanism 600B shown in Fig. 8, the drive member, transmission target member, intermediate member, and transmission mechanism may be configured in any other manners than described in the above. The drive member, transmission target member, intermediate member, and transmission mechanism may be configured in any manner as long as they can transmit the torque produced by the drive device 615 to the swing bracket 610. For example, the sprockets may be replaced by pulleys having no teeth formed on their outer peripheral surface as the drive member, transmission target member, and intermediate member. When the drive member, transmission target member, and intermediate member are pulleys, the transmission mechanism may be a belt. The drive member, transmission target member, intermediate member, and transmission mechanism may be configured as a link or gear mechanism.

The slewing bearing 603 is not an essential component of the excavator 600. Specifically, the excavator 600 may be configured such that the upper body 606 cannot slew with respect to the lower body 602. The upper and lower bodies 606 and 602 may be integrated into a single structure. In this case, the upper and lower bodies 606 and 602 constitute the vehicle body. Specifically, the vehicle body is not limited to the example described above in relation with the second embodiment.

The boom swing mechanisms 600A and 600B, which serve as an electric actuator, may be applied to any other construction machines than the excavator 600. In the foregoing embodiment, any two members may be fixedly attached in various manners. Any two components can be fixedly attached using, for example, bolting, welding, integral molding, and spline connection.

The foregoing embodiments describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### <Third Embodiment>

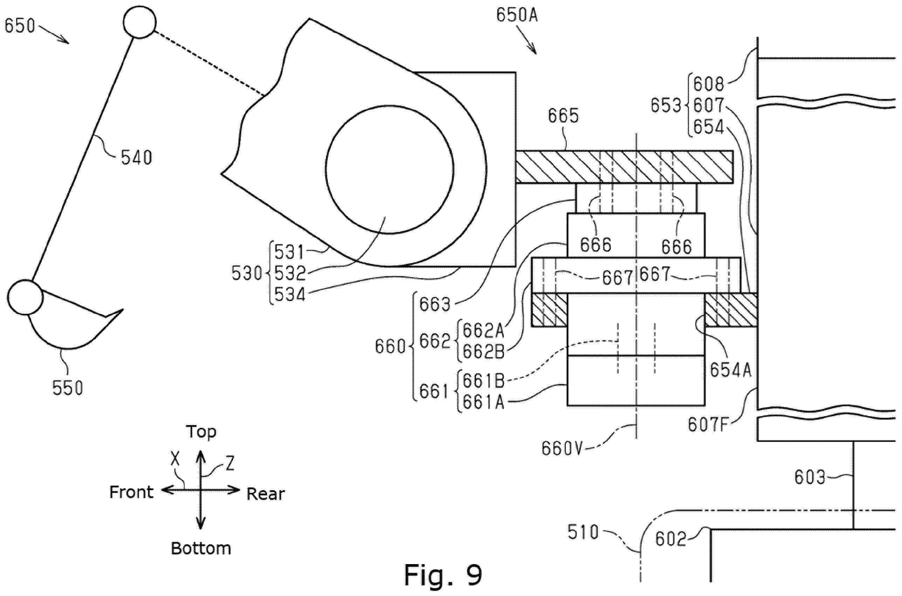

The following now describes a construction machine and an electric actuator for a construction machine relating to a third embodiment with reference to Fig. 9. The drawing may show the components in an enlarged manner for the sake of better intelligibility. The dimensions of the components and the ratios thereof may be different from those of the actual components, and among the drawings. In Fig. 9, the same reference labels as in Figs. 1 to 8 are used for the components that function the same or substantially the same as the corresponding components shown in Figs. 1 to 8. Sharing some common features with the first and second embodiments, the third embodiment is described in the following but redundant description may be omitted or simplified.

### < Overall Configuration >

As shown in Fig. 9, an excavator 650, which is a construction machine, includes a lower body 602, an upper body 653, which is a vehicle body, a pair of traveling units 510, and a slewing bearing 603. The lower body 602, traveling units 510, and slewing bearing 603 are configured in the same manner as in the second embodiment. These components are thus not described in the following. The upper body 653 will be described below. The upper body 653 is located on the opposite side to the ground surface with respect to the lower body 602. In the present embodiment, the up and down, left and right, and front and rear are defined in the same manner as in the second embodiment. In Fig. 9, some of the components of the excavator 650 are shown in sectional views for the sake of convenience.

The upper body 653 has a casing 607, an operator compartment 608 and a support wall 654. The casing 607 and operator compartment 608 are configured in the same manner as in the second embodiment. The support wall 654 protrudes frontward from the front surface 607F of the casing 607. The support wall 654 is fixed to the front surface 607F of the casing 607. The support wall 654 extends over the Y-direction-wise middle portion of the casing 607. The support wall 654 has a through hole 654A. The through hole 654A penetrates the support wall 654 in the top-to-bottom direction. The central axis of the through hole 654A extends substantially in the Z direction.

The excavator 650, which is an excavation machine, includes a boom 530, an arm 540, and a bucket 550. The boom 530, arm 540 and bucket 550 are positioned in front of the upper body 653. The boom 530, arm 540, and bucket 550 are configured in the same manner as in the second embodiment. These components are thus not described in the following.

### <Boom Swing Mechanism>

The excavator 650 includes a boom swing mechanism 650A. The boom swing mechanism 650A is configured to cause the boom 530 to swing to the left and right relative to the upper body 653. The boom swing mechanism 650A constitutes an electric actuator.

The boom swing mechanism 650A includes a swing bracket 665. In the X direction, the swing bracket 665 is interposed between the casing 607 of the upper body 653, and the boom 530. Specifically, the swing bracket 665 is located at substantially the same position as the support wall 654 in the X direction. The swing bracket 665 is shaped like a plate having a thickness in the top-to-bottom direction. The base wall 534 of the boom 530 is fixed to the front end of the swing bracket 665.

The boom swing mechanism 650A includes a drive device 660. The drive device 660 is located lower than the swing bracket 665. The drive device 660 includes an electric motor 661, a speed reducer 662, and an output member 663.

The electric motor 661 includes a housing 661A, and an output shaft 661B. The electric motor 661 operates upon receiving electricity fed from a battery, which is not shown. The housing 661A is positioned lower than the support wall 654 of the upper body 653. The housing 661A is contoured like a circular column. The central axis of the housing 661A extends substantially in the Z direction. The output shaft 661B protrudes upward beyond the housing 661A. The output shaft 661B is shaped like a circular column. The central axis of the output shaft 661B substantially coincides with the central axis of the housing 661A. The output shaft 661B is configured to rotate relative to the housing 661A. The output shaft 661B rotates about its own central axis. The output shaft 661B can rotate in both of the forward and reverse directions upon power supply to the housing 661A.

The speed reducer 662 is positioned higher than the electric motor 661. The speed reducer 662 includes a reducer body 662A and a flange 662B. The reducer body 662A is contoured like a circular column. The central axis of the reducer body 662A extends substantially in the Z direction. The central axis of the reducer body 662A substantially coincides with the central axis of the housing 661A of the electric motor 661. The diameter of the reducer body 662A is substantially equal to the diameter of the through hole 654A in the support wall 654. The reducer body 662A extends through the through hole 654A in the support wall 654. The reducer body 662A is partly located within the through hole 654A. The bottom end surface of the reducer body 662A is secured onto the housing 661A of the electric motor 661. The reducer body 662A receives therein the portion of the output shaft 661B of the electric motor 661 that protrudes beyond the housing 661A. To the reducer body 662A, the torque of the output shaft 661B of the electric motor 661 is input. The reducer body 662A multiplies the torque output from the output shaft 661B of the electric motor 661 with a predetermined ratio and outputs the resulting torque. The reducer body 662A may be of, for example, an eccentric oscillation gear type or planetary gear type. The reducer body 662A can be of any type as long as it is capable of multiplying and outputting the torque from the electric motor 661.

The flange 662B protrudes from the outer peripheral surface of the reducer body 662A. The flange 662B extends along the entire length of the reducer body 662A in the circumferential direction centered on the central axis of the reducer body 662A. In other words, the flange 662B is annular. The flange 662B is positioned higher than the top surface of the support wall 654. The bottom surface of the flange 662B faces the top surface of support wall 654. The flange 662B and support wall 654 are fastened and secured onto each other using a plurality of bolts 667. As a result, the speed reducer 662 and thus the drive device 660 are attached to the support wall 654, which is part of the vehicle body, by means of the flange 662B.

The output member 663 is positioned higher than the reducer body 662A. The output member 663 is shaped like a circular plate. The central axis of the output member 663 substantially coincides with the central axis of the reducer body 662A. The output member 663 is connected to the reducer body 662A. The output member 663 receives the torque output from the reducer body 662A. Upon application of the torque from the reducer body 662A, the output member 663 rotates on its own central axis. Stated differently, with the central axis of the output member 663 being referred to as a rotation axis 660V, the output member 663 and thus the drive device 660 output torque centered on the rotation axis 660V.

The top surface of the output member 663 faces the bottom surface of the swing bracket 665. The output member 663 and swing bracket 665 are fastened and secured onto each other using a plurality of bolts 666. As a result, upon application of the torque from the drive device 660, specifically from the output member 663, the swing bracket 665 rotates about the rotation axis 660V. As described above, the drive device 660 is mounted onto the support wall 654. Accordingly, the swing bracket 665 is connected to the support wall 654 via the drive device 660 such that the swing bracket 665 can rotate about the rotation axis 660V. Here, as described above, the electric motor 661, speed reducer 662 and output member 663 are coaxially arranged. This fact indicates the following. The output shaft 661B of the electric motor 661 outputs torque centered on the rotation axis 660V. The speed reducer 662 outputs the torque output from the electric motor 661 to the output member 663, and thus to the swing bracket 665, coaxially with the electric motor 661.

### <How Third Embodiment Works>

The following describes the series of steps to assemble the drive device 660 and swing bracket 665 in the manufacturing process of the excavator 650. Prior to the assembling, the swing bracket 665 and the base wall 534 of the boom 530 are combined into a single structure in advance. In addition, the electric motor 661, speed reducer 662 and output member 663 are combined into a single structure or drive device 660 in advance. With these preparatory steps being completed, the drive device 660 is attached to the support wall 654 of the upper body 653. Specifically, the drive device 660 is inserted from above into the through hole 654A in the support wall 654. The flange 662B of the speed reducer 662 is brought into contact with the top surface of the support wall 654, and the flange 662B and support wall 654 are secured with each other using the bolts 667. After this, the swing bracket 665 is placed from above onto the output member 663 of the drive device 660. The swing bracket 665 and output member 663 are then secured with each other using the bolts 666. Specifically, the bolts 666 are inserted from above into the swing bracket 665, so that the swing bracket 665 and output member 663 are combined together.

### <Advantageous Effects of Third Embodiment>

(3-1) In the excavator 650 relating to the third embodiment, the swing bracket 665 rotates upon rotation of the output shaft 661B of the electric motor 661. This resultantly causes the boom 530 to swing to the left and right. As described above, the excavator 650 relating to the third embodiment can use the electric motor 661 as the drive source to cause the boom 530 to swing to the left and right.

In the excavator 650 relating to the third embodiment, the drive device 660 is directly connected to the swing bracket 665. In the present embodiment, the mechanism for causing the boom 530 to swing with the electric motor 661 being used as the drive source can be embodied without requiring any mechanisms and components between the drive device 660 and the swing bracket 665 in order to transmit the torque of the electric motor 661 to the swing bracket 665. In other words, the third embodiment uses a minimized number of parts to provide the mechanism for causing the boom 530 to swing with the electric motor 661 being used as the drive source.

(3-2) In the drive device 660 relating to the present embodiment, the electric motor 661, speed reducer 662, and output member 663 are coaxially arranged. In the present embodiment, the drive device 660 is thus shaped like a column as a whole. Since the drive device 660 is columnar, the drive device 660 can be attached to the support wall 654 by simply inserting the drive device 660 straight into the through hole 654A. The present embodiment thus facilitates the process of assembling the drive device 660 to the support wall 654.

(3-3) In the excavator 650 relating to the third embodiment, the swing bracket 665 is positioned higher than the drive device 660. The following describes a comparative example for the third embodiment. According to the comparative example, the swing bracket 665 is positioned lower than the drive device 660 while the drive device 660 positioned at the same position in the Z direction as in the third embodiment. The comparative example presents the following problem to the worker in relation with the process of assembling the drive device 660 and swing bracket 665. The worker is forced to get into the narrow space under the drive device 660 and even under the swing bracket 665. The worker must thus work in an environment with poor vision. In such an environment, the worker can not smoothly perform the process of assembling the drive device 660 and swing bracket 665.

In the third embodiment, on the other hand, the swing bracket 665 is located higher than the drive device 660. When performing the task of assembling the drive device 660 and swing bracket 665, the worker faces no limitation in space and can easily maintain vision. In other words, the third embodiment facilitates the process of assembling the drive device 660 and swing bracket 665.

As the swing bracket 665 is located higher than the drive device 660, the swing bracket 665 and the output member 663 of the drive device 660 can be positioned relatively high off the ground surface. In this case, the swing bracket 665 and output member 663 are less likely to be contained by soil. If soil accumulates around the swing bracket 665 and output member 663, the soil may produce frictional resistance against the rotation of the output member 663 and swing bracket 665, which can strain the operation of the output member 663 and swing bracket 665. To avoid this issue, maintenance is required to eliminate the soil that accumulates around the output member 663 and swing bracket 665. The third embodiment can reduce the frequency of the maintenance to remove the soil that accumulates around the output member 663 and swing bracket 665.

### <Modification Examples of Third Embodiment>

The third embodiment can be modified as described below. The first to third embodiments and the following modifications can be combined with each other to such an extent that they are technically consistent with each other.

How the swing bracket 665 is positioned relative to the drive device 660 is not limited to the example described in the above in relation with the embodiment. For example, the drive device 660 may be located higher than the swing bracket 665.

The manner of securing the swing bracket 665 to the drive device 660 is not limited to the bolts 666. Any manner is acceptable as long as the swing bracket 665 and drive device 660 can be secured.

The swing bracket 665 may be configured in any other manners than described in the above in relation with the embodiment. The swing bracket 665 may be configured in any manner as long as it is fixedly attached to the boom 530 and it can rotate about the rotation axis of the drive device 660 upon application of the torque from the drive device 660. For example, the swing bracket 665 may be shaped in a different manner than described in the above in relation with the embodiment.

The boom 530 may be fixed to the swing bracket 665 at any other sites than described in the above in relation with the embodiment. The boom 530 may be fixed to the swing bracket 665 at any site.

The drive device 660 is attached to the vehicle body, which may be configured in any other manners than described in the above in relation with the embodiment. The vehicle body may be adaptively configured such that the drive device 660 can be properly mounted to the vehicle body.

The drive device 660 may be configured in any other manners than described in the above in relation with the embodiment. The drive device 660 may be configured in any manner as long as it is attached to the vehicle body, includes the electric motor 661 and can output torque centered on the rotation axis. For example, the electric motor 661 may have a different shape than a circular column. For example, the drive device 660 may be embodied without the speed reducer 662 and output member 663. In this case, the output shaft 661B of the electric motor 661 may be treated as the output member of the drive device 660. The swing bracket 665 may be then directly attached onto the output shaft 661B of the electric motor 661. The drive device 660 may be configured such that the central axis of the output shaft 661B of the electric motor 661 is positioned differently than the rotation axis of the torque that is output from the drive device 660 to a component external to the drive device 615. This may be possible if the drive device 660 is provided with a mechanism for changing the direction of rotation of the output shaft 611B of the electric motor 661. The rotation axis of the torque output from the drive device 660 is only required to extend in the top-to-bottom direction of the vehicle body as a whole. For example, it may be tilted relative to the Z direction within a range of approximately 15 degrees, for example.

The slewing bearing 603 is not an essential component of the excavator 650. Specifically, the excavator 650 may be configured such that the upper body 653 cannot slew with respect to the lower body 602. The upper and lower bodies 653 and 602 may be integrated into a single structure. In this case, the upper and lower bodies 653 and 602 constitute the vehicle body. Specifically, the vehicle body is not limited to the example described above in relation with the third embodiment.

The boom swing mechanism 650A, which serves as an electric actuator, may be applied to any other construction machines than the excavator 650. In the foregoing embodiment, any two members may be fixedly attached in various manners. Any two components can be fixedly attached using, for example, bolting, welding, integral molding, and spline connection.

The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### <Fourth Embodiment>

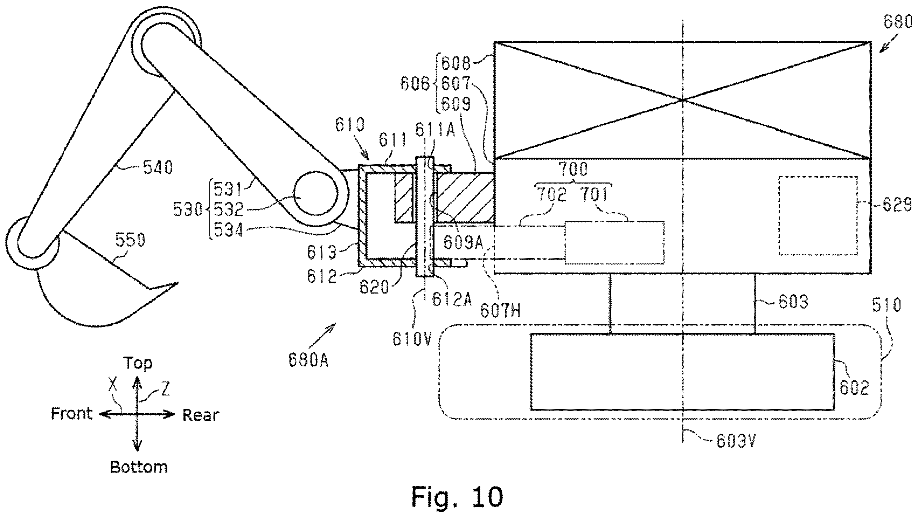

The following now describes a construction machine and an electric actuator for a construction machine relating to a fourth embodiment with reference to Figs. 10 to 14. The drawings may show the components in an enlarged manner for the sake of better intelligibility. The dimensions of the components and the ratios thereof may be different from those of the actual components, and among the drawings. In Figs. 10 to 14, the same reference labels as in Figs. 1 to 9 are used for the components that function the same or substantially the same as the corresponding components shown in Figs. 1 to 9. In Figs. 10, 11, 13 and 14, some of the components are shown in sectional views for the sake of convenience. Sharing some common features with the first to third embodiments, the fourth embodiment is described in the following but redundant description may be omitted or simplified.

### <Overall Configuration>

As shown in Fig. 10, an excavator 680, which is a construction machine, includes a lower body 602, an upper body 606, which is a vehicle body, a pair of traveling units 510, and a slewing bearing 603. The lower body 602, traveling units 510, and slewing bearing 603 are configured in the same manner as in the second embodiment. These components are thus not described in the following. The upper body 606 will be described below. The upper body 606 is located on the opposite side to the ground surface with respect to the lower body 602. In the present embodiment, the up and down, left and right, and front and rear are defined in the same manner as in the second embodiment.

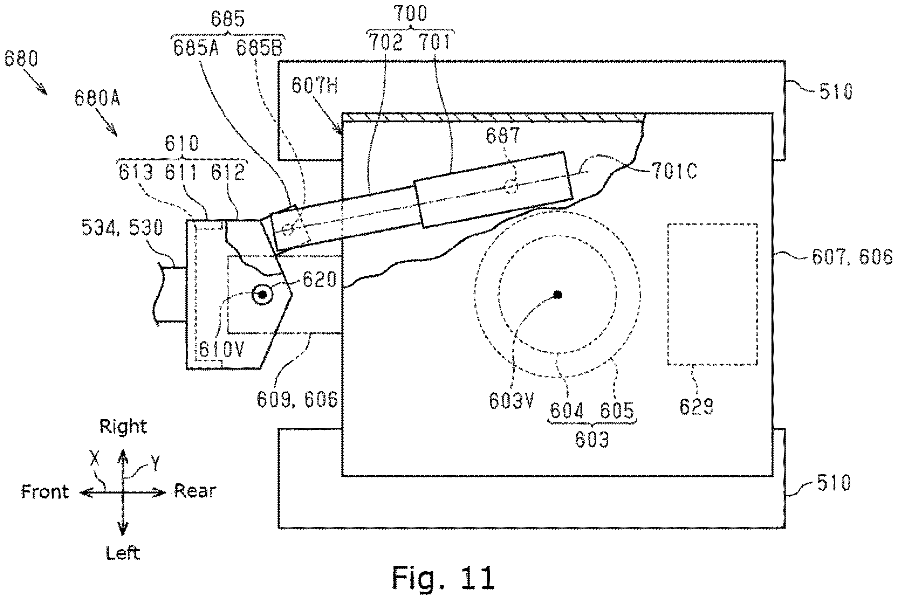

The upper body 606 is basically configured in the same manner as in the second embodiment. Specifically, the upper body 606 has a casing 607 shaped like a rectangular parallelepiped, an operator compartment 608 located higher than the casing 607, and a support wall 609 located in front of the casing 607. The support wall 609 has a through hole 609A extending through it in substantially the Z direction. The central axis of the through hole 609A constitutes the slew axis 610V of the boom 530. Unlike the second embodiment, the upper body 606 has an opening 607H through which the inside and outside of the casing 607 is communicated. The opening 607H is in the downward portion of the front wall of the casing 607. As the opening 607H is provided, the support wall 609, which protrudes from the front wall of the casing 607, only extends above the opening 607H. As a result, the Z-direction-wise dimension of the support wall 609 is less than that of a connecting wall 613 of a swing bracket 610, which will be described below. In Figs. 11, 13 and 14, the support wall 609 is represented by the chain double-dashed line, for convenience. Figs. 11, 13 and 14 show the casing 607 in a cutaway manner.

As shown in Fig. 10, the excavator 680, which is an excavation machine, includes a boom 530, an arm 540, and a bucket 550. The boom 530, arm 540 and bucket 550 are positioned in front of the upper body 606. The boom 530, arm 540, and bucket 550 are configured in the same manner as in the second embodiment. These components are thus not described in the following.

### <Boom Swing Mechanism>

As shown in Fig. 10 the excavator 680 includes a boom swing mechanism 680A. The boom swing mechanism 680A is configured to cause the boom 530 to swing to the left and right relative to the upper body 606. The boom swing mechanism 680A constitutes an electric actuator.

The boom swing mechanism 680A includes a swing bracket 610 and a pin 620. The swing bracket 610 and pin 620 are configured in the same manner as in the second embodiment. Specifically, the swing bracket 610 has an upper wall 611, a lower wall 612, and a connecting wall 613, as shown in Fig. 10. As shown in Fig. 11, the upper and lower walls 611 and 612 are shaped like a pentagon when seen in plan view. As in the second embodiment, the upper wall 611 is divided into a quadrangular first portion and a triangular second portion. The same applies to the lower wall 612. Figs. 11, 13 and 14 show the upper wall 611 in a cutaway manner. As shown in Fig. 10, the connecting wall 613 connects the frontward portions of the upper and lower walls 611 and 612. The base wall 534 of the boom 530 is fixed to the surface of the connecting wall 613 that is opposite to the surface facing the support wall 609. The upper, lower and connecting walls 611, 612 and 613 are not described in any further details.

The swing bracket 610 is connected to the support wall 609 of the upper body 606 by means of the pin 620. Specifically, the upper and lower walls 611 and 612 are penetrated by the pin 620, which also passes through the through hole 609A in the support wall 609. Fig. 10 shows the gap between the through hole 609A and the pin 620 in an exaggerated and enlarged manner. As in the second embodiment, the pin 620 is rotatable with respect to the through hole 609A. The pin 620 is supported by the through hole 609A such that it is rotatable about the central axis of the through hole 609A or the slew axis 610V. The pin 620 is, on the other hand, fixedly attached to the upper and lower walls 611 and 612. Therefore, as the pin 620 rotates about the slew axis 610V, the upper and lower walls 611 and 612 rotate together with the pin 620. The swing bracket 610 is thus rotatable about the slew axis 610V.

As shown in Fig. 11, the boom swing mechanism 680A has an extension member 685. The extension member 685 is provided on the rearward portion of the swing bracket 610. The extension member 685 has an extension wall 685A and a swing connecting shaft 685B. Fig. 10 does not show the extension member 685.

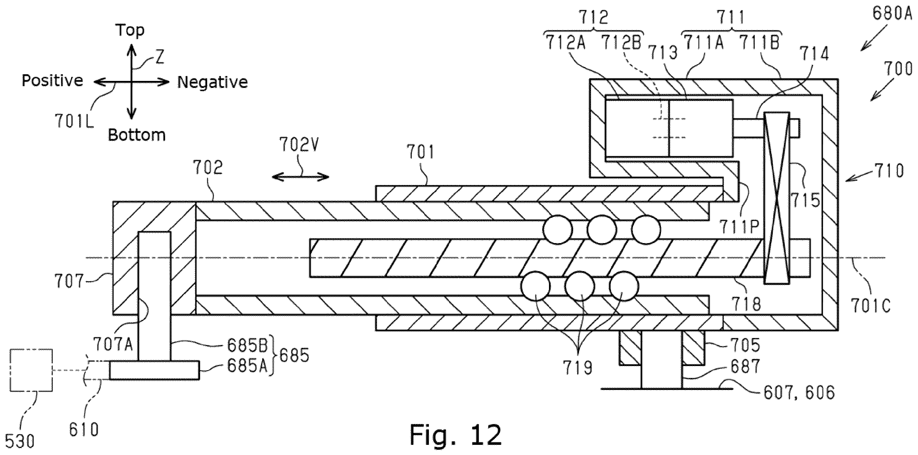

As shown in Fig. 11, the extension wall 685A is shaped like a quadrangular plate, for example. The extension wall 685A is fixedly attached to the lower wall 612 of the swing bracket 610. In detail, the extension wall 685A is fixedly attached to the edge of the lower wall 612 that corresponds to one of the sides of the triangle. In the fourth embodiment, the extension wall 685A is located on the right side with respect to the slew axis 610V. As shown in Fig. 12, the swing connecting shaft 685B protrudes upward from the top surface of the extension wall 685A. The swing connecting shaft 685B is shaped like a circular column. The central axis of the swing connecting shaft 685B extends substantially in the Z direction. In other words, the central axis of the swing connecting shaft 685B is substantially parallel to the slew axis 610V.

As shown in Fig. 11, the boom swing mechanism 680A has a body connecting shaft 687. The body connecting shaft 687 is positioned inside the casing 607 of the upper body 606. In the X direction, the body connecting shaft 687 is positioned in front of the bearing axis 603V. As described in relation with the second embodiment, the bearing axis 603V is located substantially at the middle of the casing 607 in both of the X and Y directions. In the Y direction, the body connecting shaft 687 is positioned on the right side with respect to the right edge of the outer race 605 of the slewing bearing 603. In the Y direction, the body connecting shaft 687 is also positioned on the right side with respect to the swing connecting shaft 685B. As shown in Fig. 12, the body connecting shaft 687 protrudes upward from the bottom wall of the casing 607. The body connecting shaft 687 is shaped like a circular column. The central axis of the body connecting shaft 687 extends substantially in the Z direction. In other words, the central axis of the body connecting shaft 687 is substantially parallel to the slew axis 610V.

### <Power Supply Unit>

As shown in Figs. 10 and 11, the boom swing mechanism 680A includes a power supply unit 700. In Fig. 10, the power supply unit 700 is shown by the chain double-dashed line, for convenience. The power supply unit 700 is largely housed in the casing 607. The power supply unit 700 partly protrudes frontward beyond the casing 607.

As shown in Fig. 12, the power supply unit 700 includes a first member 701. The first member 701 is shaped like a circular tube. Hereinafter, the central axis of the first member 701 is referred to as a reference axis 701C. The reference axis 701C extends substantially perpendicularly to the Z direction. In the following, the two directions extending along the reference axis 701C may be collectively referred to as a reference axis direction 701L if they do not need to be distinguished from each other. A particular one of the two directions extending in the reference axis direction 701L is identified as the positive direction, and the opposite direction as the negative direction.

The power supply unit 700 includes a first connecting wall 705. The first connecting wall 705 is positioned lower than the first member 701. The first connecting wall 705 is positioned near the negative end of the first member 701. The first connecting wall 705 is fixedly attached to the first member 701. The first connecting wall 705 is shaped like a circular tube. The central axis of the first connecting wall 705 extends substantially in the Z direction. The inner diameter of the first connecting wall 705 is substantially equal to the diameter of the body connecting shaft 687. The first connecting wall 705 houses the body connecting shaft 687. The first connecting wall 705 can rotate relative to the body connecting shaft 687. In other words, the first connecting wall 705 and thus the first member 701 are connected to the casing 607 in such a manner that they can rotate about the central axis of the body connecting shaft 687.

The power supply unit 700 includes a second member 702. The second member 702 is inserted into the first member 701 through the positive end of the first member 701. The positive end portion of the second member 702 protrudes toward the positive direction beyond the first member 701. The second member 702 extends along the reference axis 701C. The second member 702 is shaped like a circular tube. The central axis of the second member 702 substantially coincides with the reference axis 701C. The second member 702 has a greater dimension in the reference axis direction 701L than the first member 701. The outer diameter of the second member 702 is slightly less than the inner diameter of the first member 701. The outer peripheral surface of the second member 702 is configured to slide relative to the inner peripheral surface of the first member 701. The inner peripheral surface of the second member 702 is internally threaded. The second member 702 is internally threaded along substantially the entire length in the reference axis direction 701L. Fig. 12 does not show the internal threads. The second member 702 can reciprocate relative to the first member 701 in the reference axis direction 701L upon application of the force applied from a drive mechanism 710, which will be described below.

The power supply unit 700 includes a second connecting wall 707. The second connecting wall 707 is provided at the positive end of the second member 702. For example, the second connecting wall 707 is shaped like a rectangular parallelepiped. The second connecting wall 707 closes the end of the second member 702 that opens toward the positive direction. The second connecting wall 707 is fixedly attached to the positive end of the second member 702. The second connecting wall 707 has a receiving recess 707A. The receiving recess 707A opens toward the downward direction. The receiving recess 707A is contoured like a circular column. The diameter of the receiving recess 707A is substantially equal to the diameter of the swing connecting shaft 685B. The receiving recess 707A houses the swing connecting shaft 685B. The second connecting wall 707 can rotate relative to the swing connecting shaft 685B. In other words, the second connecting wall 707 and thus the second member 702 are connected to the extension member 685 and thus to the swing bracket 610 in such a manner that they can rotate about the central axis of the swing connecting shaft 685B.

As shown in Fig. 11, the positions of the body connecting shaft 687 and swing connecting shaft 685B determine the positions of the first and second members 701 and 702, which are connected to the body connecting shaft 687 and swing connecting shaft 685B. Specifically, the first and second members 701 and 702 are positioned on the right side of the Y-direction-wise middle of the casing 607. In addition, the reference axis 701C is inclined relative to the X direction such that the leftward distance between the reference axis 701C and the X direction increases toward the rearward direction.

### <Drive Mechanism>

As shown in Fig. 12, the power supply unit 700 includes an electric drive mechanism 710. The drive mechanism 710 includes a case 711. The case 711 includes a first portion 711A and a second portion 711B. The first portion 711A is positioned higher than the first member 701. In the reference axis direction 701L, the first portion 711A is positioned on the negative side relative to the middle of the first member 701. The first portion 711A is shaped like a circular tube. The central axis of the first portion 711A is substantially parallel to the reference axis 701C. The end of the first portion 711A facing the positive direction is closed. The second portion 711B is positioned on the negative side relative to the first portion 711A. The second portion 711B is shaped like a rectangular parallelepiped. The second portion 711B is hollow. In the Z direction, the second portion 711B extends over the first portion 711A and first member 701. The second portion 711B has a plurality of side walls including a first side wall 711P, which is connected to the end of the first portion 711A facing the negative direction and to the end of the first member 701 facing the negative direction. The interior of the second portion 711B is in communication with the interior of the first portion 711A. The interior of the second portion 711B is also in communication with the interior of the first member 701.

The drive mechanism 710 includes an electric motor 712. The electric motor 712 is the drive source of the drive mechanism 710 and configured to cause the second member 702 to reciprocate relative to the first member 701. The electric motor 712 is located inside the first portion 711A of the case 711. The electric motor 712 operates upon receiving electricity fed from a battery, which is not shown. The electric motor 712 includes a housing 712A, and an output shaft 712B. The housing 712A is fixedly mounted onto the inner wall of the first portion 711A. The output shaft 712B protrudes beyond the housing 712A. The output shaft 712B is shaped like a circular column. The central axis of the output shaft 712B is substantially parallel to the reference axis 701C. The output shaft 712B is configured to rotate relative to the housing 712A. The output shaft 712B rotates about its own central axis. In other words, the central axis of the output shaft 712B is the rotation axis of the electric motor 712. The output shaft 712B can rotate in both of the forward and reverse directions upon power supply to the housing 712A.

The drive mechanism 710 includes a speed reducer 713. The speed reducer 713 is adjacent to the electric motor 712 in the reference axis direction 701L. The speed reducer 713 is positioned on the negative side relative to the electric motor 712. The speed reducer 713 is located inside the first portion 711A of the case 711, like the electric motor 712. The speed reducer 713 is fixedly mounted onto the inner wall of the first portion 711A. The speed reducer 713 is connected to the output shaft 712B of the electric motor 712. The speed reducer 713 thus receives the torque of the output shaft 712B of the electric motor 712. The speed reducer 713 multiplies the torque of the output shaft 712B of the electric motor 712 with a predetermined ratio and outputs the resulting torque. The speed reducer 713 may be of, for example, an eccentric oscillation gear type or planetary gear type. The speed reducer 713 can be of any type as long as it is capable of multiplying and outputting the torque from the electric motor 712.

The drive mechanism 710 includes an output member 714. The output member 714 protrudes toward the negative direction from the speed reducer 713. The output member 714 is located inside the second portion 711B of the case 711. The output member 714 is shaped like a circular column. The central axis of the output member 714 substantially coincides with the central axis of the output shaft 712B of the electric motor 712. The central axis of the output member 714 is substantially parallel to the reference axis 701C. The output member 714 is connected to the speed reducer 713. Upon application of the torque from the speed reducer 713, the output member 714 rotates on its own central axis.

The drive mechanism 710 includes a threaded shaft 718. The threaded shaft 718 is inserted into the second member 702 through the negative end of the second member 702. The negative end portion of the threaded shaft 718 protrudes toward the negative direction beyond the second member 702. The portion of the threaded shaft 718 that protrudes out of the second member 702 is located inside the second portion 711B of the case 711. The threaded shaft 718 is shaped like a circular column. The diameter of the threaded shaft 718 is less than the inner diameter of the second member 702. The central axis of the threaded shaft 718 substantially coincides with the reference axis 701C. The outer peripheral surface of the threaded shaft 718 is externally threaded. The threaded shaft 718 is externally threaded along substantially the entire length in the reference axis direction 701L. In the reference axis direction 701L, the negative end of the threaded shaft 718 is located at substantially the same position as the negative end of the output member 714.

The drive mechanism 710 includes a plurality of balls 719. Fig. 12 representatively shows six of the balls 719. The number of balls 719 is not limited to six. The balls 719 are interposed between the inner peripheral surface of the second member 702 and the outer peripheral surface of the threaded shaft 718. The balls 719 are retained between the inner peripheral surface of the second member 702 and the outer peripheral surface of the threaded shaft 718. The balls 719 guide the rotation of the threaded shaft 718 relative to the second member 702. As being guided by the balls 719, the threaded shaft 718 rotates on its own central axis, i.e., the reference axis 701C.

The drive mechanism 710 includes a transmission mechanism 715. The transmission mechanism 715 is located inside the second portion 711B of the case 711.The transmission mechanism 715 has, for example, a tubular first pulley, a tubular second pulley, and a belt. The output member 714 is attached to the first pulley. The first pulley rotates together with the output member 714. The threaded shaft 718 is attached to the second pulley. The second pulley rotates together with the threaded shaft 718. The belt is wound around the first and second pulleys. The belt transmits the rotation of the first pulley to the second pulley. The belt causes the first and second pulleys to work in coordination with each other. Configured in this manner, the transmission mechanism 715 transmits the rotation of the output shaft 712B of the electric motor 712, i.e., the rotation of the output member 714, to the threaded shaft 718. The electric motor 712 thus causes the threaded shaft 718 to rotate. Specifically, the threaded shaft 718 rotates about the reference axis 701C as the output shaft 712B of the electric motor 712 rotates. The transmission mechanism 715 can be of any type as long as it can cause the output member 714 and threaded shaft 718 to operate in a coordinated manner. For example, the transmission mechanism 715 may employ a combination of sprockets and a chain, in place of the combination of pulleys and a belt. For example, the transmission mechanism 715 may be a gear mechanism including gears that can mesh with each other to cause the output member 714 and threaded shaft 718 to operate in a coordinated manner.

### <How Fourth Embodiment Works>

In the power supply unit 700, upon rotation of the output shaft 712B of the electric motor 712, the rotation of the output shaft 712B is transmitted to the threaded shaft 718. The threaded shaft 718 rotates in one of the forward and reverse directions that is determined by the direction of the rotation of the output shaft 712B of the electric motor 712. The rotation of the threaded shaft 718 is transmitted to the second member 702 via the balls 719. As the threaded shaft 718 rotates, the second member 702 moves relative to the threaded shaft 718 and first member 701 in the reference axis direction 701L. In other words, the second member 702 is moved by the force applied by the threaded shaft 718 via the balls 719. As indicated by the arrow 702V in Fig. 12, the second member 702 moves toward the positive or negative direction relative to the first member 701, depending on the direction of the rotation of the threaded shaft 718. As the second member 702 moves in this manner, the amount of protrusion of the second member 702 relative to the first member 701 increases or decreases. In other words, the power supply unit 700 expands and contracts in length in the reference axis direction 701L.

The expansion and contraction in length of the power supply unit 700 as described above causes the swing bracket 610 and thus the boom 530 to swing to the left and right. This is now described. Fig. 11 illustrates the original position of the extension member 685. Specifically, the extension member 685 is at the original position when the swing bracket 610 and boom 530 face forward relative to the upper body 606. When the extension member 685 is at the original position, the entire length of the power supply unit 700 takes a first value. Specifically, the entire length of the power supply unit 700 is the length of the power supply unit 700 in the direction extending along the reference axis 701C.

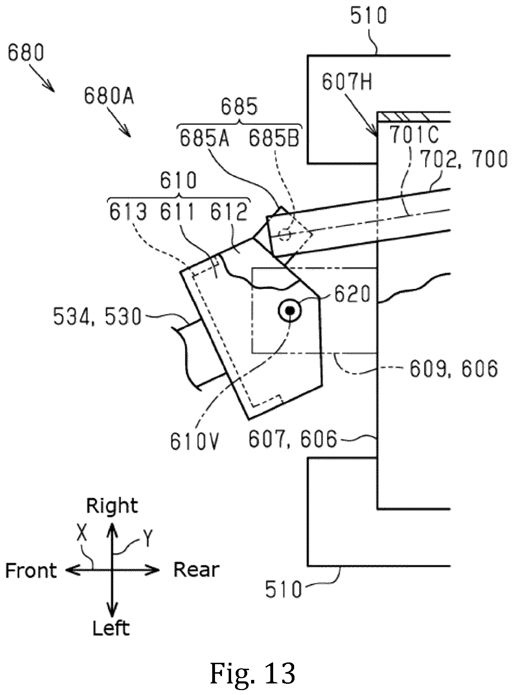

The following first describes how the boom 530 swings to the left. The extension member 685 is now at the original position. In this circumstance, the second member 702 may move toward the positive direction relative to the first member 701. The entire length of the power supply unit 700 accordingly changes to take a value greater than the first value. As shown in Fig. 13, the extension member 685, which is connected to the power supply unit 700, then moves toward the forward direction from the original position shown in Fig. 11. That is to say, the extension member 685 moves away from the front wall of the casing 607 of the upper body 606. As a result, the swing bracket 610, which is connected to the extension member 685, rotates to the left side about the slew axis 610V. The boom 530 resultantly rotates to the left side about the slew axis 610V.

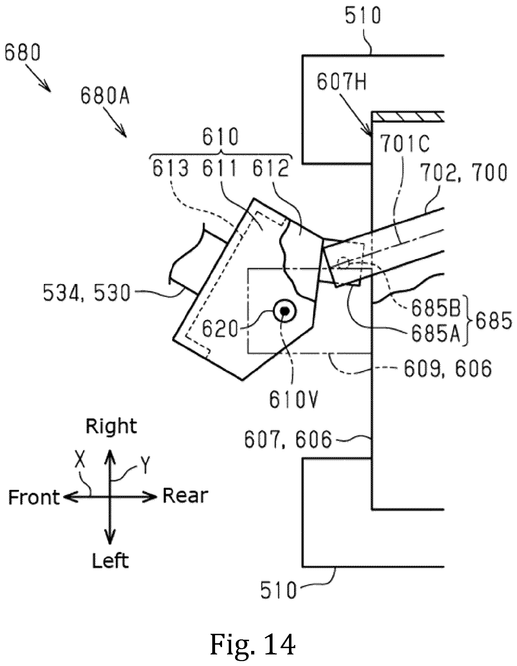

The following now describes how the boom 530 swings to the right. The extension member 685 is now at the original position. In this circumstance, the second member 702 may move toward the negative direction relative to the first member 701. The entire length of the power supply unit 700 accordingly changes to take a value less than the first value. As shown in Fig. 14, the extension member 685 moves toward the rearward direction from the original position shown in Fig. 11. That is to say, the extension member 685 moves toward the front wall of the casing 607 of the upper body 606. As a result, the swing bracket 610, which is connected to the extension member 685, rotates to the right side about the slew axis 610V. The boom 530 resultantly rotates to the right side about the slew axis 610V.

As described above, the boom 530 swings as the power supply unit 700 expands and contracts in length. Although not illustrated in detail, the reference axis 701C rotates to the left and right about the body connecting shaft 687 as the boom 530 swings. This rotation of the reference axis 701C allows the power supply unit 700 to freely expand and contract in length. In other words, since the power supply unit 700 is rotatably connected to the body connecting shaft 687 and swing connecting shaft 685B in the present embodiment, the power supply unit 700 can reliably expand and contract in length to a large extent. Since the power supply unit 700 can reliably expand and contract in length to a large extent, the swing bracket 610 is allowed to rotate over a wide range.

### <Advantageous Effects of Fourth Embodiment>

(4-1) As described above in the "How Fourth Embodiment Works" section, the excavator 680 relating to the fourth embodiment can use the electric motor 712 as the drive source to cause the boom 530 to swing to the left and right.

(4-2) In the excavator 680 relating to the present embodiment, the rotational motion of the electric motor 712 serving as the drive source is converted into the linear motion of the second member 702, thereby causing the second member 702 to reciprocate relative to the first member 701. In the fourth embodiment, the so-called ball screw mechanism is used as the mechanism for performing the motion conversion. A ball screw mechanism can smoothly convert rotational motion into linear motion.

(4-3) As described in the first embodiment, an external load may be applied to the boom 530 when the bucket 550 collides with the object to be excavated. This load is hereinafter referred to as the collision load. In the excavator 680 relating to the present embodiment, the collision load can be transmitted to the threaded shaft 718 via the swing bracket 610, extension member 685 and second member 702. Here, the collision load acting on the threaded shaft 718 has a main component acting in the reference axis direction 701L, in which the threaded shaft 718 extends. On the other hand, the collision load hardly acts as a force that causes the parts to move in the direction intersecting the reference axis direction 701L. Stated differently, the collision load acting on the threaded shaft 718 is unlikely to be transmitted as a force acting in the Z direction from the threaded shaft 718. The collision load acting on the threaded shaft 718 is thus hardly transmitted to the transmission mechanism 715 and thus to the output member 714. This means that the collision load acting on the threaded shaft 718 can be prevented from reaching the speed reducer 713 and electric motor 712 in the present embodiment. For this reason, the present embodiment can produce the same effect as the second embodiment. It is no longer necessary to configure the speed reducer 617 and electric motor 712 such that they can withstand the collision load. The present embodiment can thus prevent an increase in size of the speed reducer 713.

### <Modification Examples of Fourth Embodiment>

The fourth embodiment can be modified as described below. The first to fourth embodiments and the following modifications can be combined with each other to such an extent that they are technically consistent with each other.

The power transmission path from the electric motor 712 to the threaded shaft 718 may be configured in any other manners than described in the above in relation with the embodiment. For example, the power transmission path from the electric motor 712 to the threaded shaft 718 may be embodied without the speed reducer 713 and output member 714. In this case, the output shaft 712B of the electric motor 712 may be connected to the threaded shaft 718 by means of the transmission mechanism 715. The power transmission path may be embodied without the transmission mechanism 715. In addition, the threaded shaft 718 and electric motor 712 may be coaxially arranged. In other words, it is not essential that the rotation axis of the electric motor 712 be differently positioned and parallel to the reference axis 701C. The power transmission path can be configured in any manner as long as the rotation of the electric motor 712 can be transmitted to the threaded shaft 718.

The first member 701 may be alternatively connected to the part to which the second member 702 is connected in the above-described embodiment, and the second member 702 may be alternatively connected to the part to which the first member 701 is connected in the above-described embodiment. Specifically, the first member 701 may be connected to the swing connecting shaft 685B, and the second member 702 may be connected to the body connecting shaft 687.

The body connecting shaft 687 can be positioned at any other sites than described in the above embodiment. The body connecting shaft 687 may be provided anywhere on the vehicle body as long as the range of rotation of the swing bracket 610 and thus the boom 530 is taken into consideration.

The swing connecting shaft 685B may be positioned at any other sites than described in the above embodiment. For example, the swing connecting shaft 685B may be provided directly on the swing bracket 610. The swing connecting shaft 685B may be provided anywhere as long as the range of rotation of the swing bracket 610 and thus the boom 530, which is determined by the position of the body connecting shaft 687, is taken into consideration, and it can move together with the swing bracket 610.

If the swing connecting shaft 685B and body connecting shaft 687 are positioned differently than is described in relation with the fourth embodiment, the power supply unit 700 may be also positioned differently than is described in relation with the fourth embodiment. In this case, the excavator 680 can be configured in any manner as long as the power supply unit 700 can freely expand and contract in length and the expansion and contraction can be transmitted to the swing bracket 610.

The first connecting wall 705 may be configured and positioned in any other manners than described in the above in relation with the embodiment. For example, the first connecting wall 705 may be positioned near the middle of the first member 701 in the reference axis direction 701L. The first connecting wall 705 may be configured in any manner as long as it can house the body connecting shaft 687 and rotate relative to the body connecting shaft 687. Like the first connecting wall 705, the second connecting wall 707 may be configured and positioned in any other manners than described in the above in relation with the embodiment. The second connecting wall 707 may be configured in any manner as long as it can house the swing connecting shaft 685B and rotate relative to the swing connecting shaft 685B.

The first and second members 701 and 702 are rotatably connected in any other manners than described in the above in relation with the embodiment. For example, the first and second members 701 and 702 may be connected without using the walls such as the first and second connecting walls 705 and 707. The first member 701 may be only required to be connected to one of the vehicle body or the swing bracket 610 such that it can rotate about the central axis parallel to the slew axis 610V. The second member 702 may be only required to be connected to the other of the vehicle body or the swing bracket 610 such that it can rotate about the central axis parallel to the slew axis 610V.

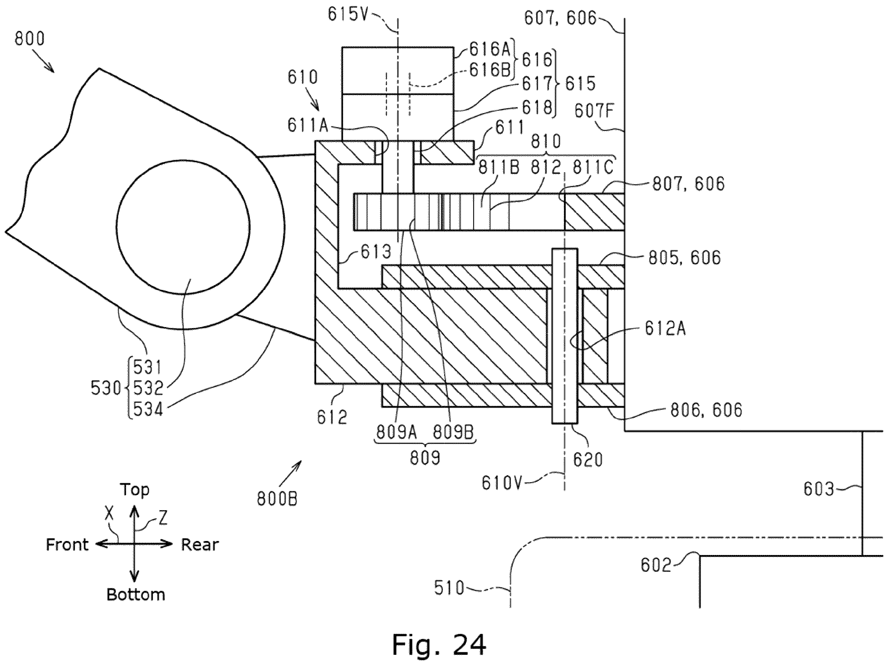

The swing bracket 610 can be modified in any manner as described in relation with the modification examples of the second embodiment. How the swing bracket 610 is configured, positioned and connected to the vehicle body is not limited to the example described in the above in relation with the embodiment. The swing bracket 610 may be configured and positioned in any manner as long as it is fixedly attached to the boom 530 and connected to the vehicle body such that is can rotate about the slew axis 610V. The vehicle body can be modified in any manner as described in relation with the modification examples of the second embodiment. The vehicle body, which supports the swing bracket 610, may be configured in any other manners than described in the above in relation with the embodiment. The slew axis 610V may be shifted from the middle of the casing 607 in the Y direction. The slew axis 610V may be only required to generally extend in the top-to-bottom direction of the vehicle body. The slew axis 610V may be tilted relative to the Z direction within a range of about 15 degrees, for example. The swing bracket 610 can be configured, positioned and connected to the vehicle body in the same manner as in a sixth embodiment, which will be described below with reference to Fig. 24.

The boom 530 may be fixed to the swing bracket 610 at any other sites than described in the above in relation with the embodiment. The boom 530 may be fixed to the swing bracket 610 at any site.

The slewing bearing 603 is not an essential component of the excavator 680. Specifically, the excavator 680 may be configured such that the upper body 606 cannot slew with respect to the lower body 602. The upper and lower bodies 606 and 602 may be integrated into a single structure. In this case, the upper and lower bodies 606 and 602 constitute the vehicle body. Stated differently, the vehicle body is not limited to the example described above in relation with the fourth embodiment.

The boom swing mechanism 680A, which serves as an electric actuator, may be applied to any other construction machines than the excavator 680. In the foregoing embodiment, any two members may be fixedly attached in various manners. Any two components can be fixedly attached using, for example, bolting, welding, integral molding, and spline connection.

The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

The power supply unit 700 may be configured in any other manners than described in the above in relation with the embodiment. The power supply unit 700 may be configured in any manner as long as its entire length may increase or decrease as the second member 702 moves relative to the first member 701. The excavator 680 can be configured in any manner as long as the expansion and contraction in length of the power supply unit 700 can be translated into the rotation of the swing bracket 610. For example, the first member 701 may be shaped in any other manners than a perfect circular tube as long as it is generally shaped like a tube. The second member 702 may be configured in any manner as long as it can reciprocate inside the first member 701. The first connecting wall 705 may be configured and positioned in any other manners than described in the above in relation with the embodiment as long as the first member 701 can be rotatably connected to the vehicle body or swing bracket 610 by means of the first connecting wall 705. The same applies to the second connecting wall 707. The drive mechanism 710 is not limited to using the ball screw mechanism. The drive mechanism 710 can be configured in any manner as long as it can be electrically operated and can output a force that can cause the second member 702 to reciprocate in the reference axis direction 701L.

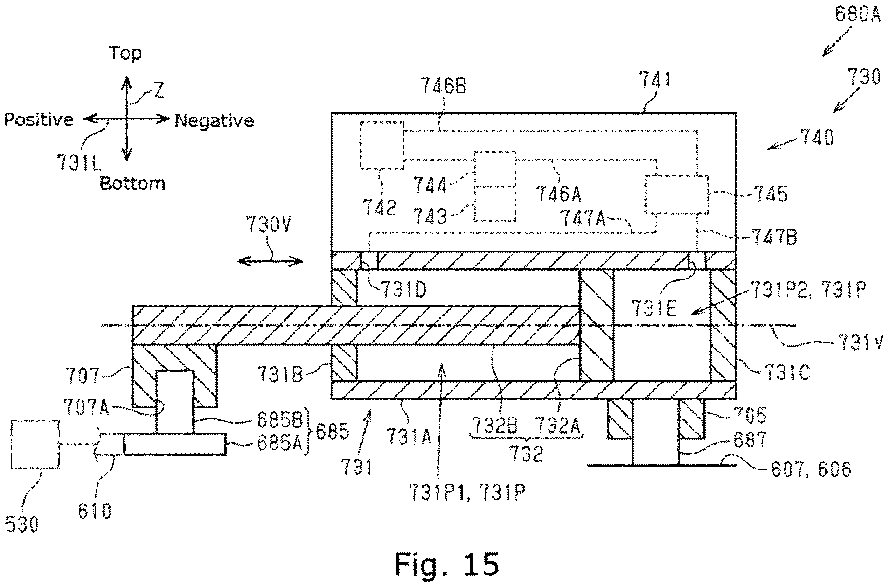

For example, the power supply unit 700 of the fourth embodiment may be replaced by a power supply unit 730 shown in Fig. 15. In Fig. 15, the same reference labels as in Figs. 10 to 14 are used for the components that function the same or substantially the same as the corresponding components shown in Figs. 10 to 14.

The power supply unit 730 includes a first member 731. The first member 731 has a circumferential wall 731A, a first end wall 731B, a second end wall 731C, a first port hole 731D, and a second port hole 731E. The circumferential wall 731A is shaped like a circular tube. Hereinafter, the central axis of the circumferential wall 731A is referred to as a reference axis 731V. The reference axis 731V extends substantially perpendicularly to the Z direction. In the following, the two directions extending along the reference axis 731V may be collectively referred to as a reference axis direction 731L if they do not need to be distinguished from each other. A particular one of the two directions extending in the reference axis direction 731L is identified as the positive direction, and the opposite direction as the negative direction.

The first end wall 731B closes the end of the circumferential wall 731A facing the positive direction. The second end wall 731C closes the end of the circumferential wall 731A facing the negative direction. The circumferential wall 731A, first end wall 731B, and second end wall 731C demarcate a fluid chamber 731P into and from which a hydraulic fluid is fed and drained. The first port hole 731D is provided in the circumferential wall 731A near its positive end. The first port hole 731D penetrates the circumferential wall 731A in the radial direction centered on the reference axis 731V. The second port hole 731E is provided in the circumferential wall 731A near its negative end. The second port hole 731E penetrates the circumferential wall 731A in the above-mentioned radial direction.

The power supply unit 730 includes a first connecting wall 705. The first connecting wall 705 is positioned lower than the circumferential wall 731A of the first member 731. The first connecting wall 705 is positioned near the negative end of the circumferential wall 731A. The first connecting wall 705 is fixedly attached to the circumferential wall 731A. The first connecting wall 705 is configured in the same manner as described with reference to Fig. 12. Specifically, the first connecting wall 705 is shaped like a circular tube. The first connecting wall 705 houses a body connecting shaft 687. The first connecting wall 705 can rotate relative to the body connecting shaft 687. In other words, the first connecting wall 705 and thus the first member 731 are connected to the casing 607 in such a manner that they can rotate about the central axis of the body connecting shaft 687.

The power supply unit 730 includes a second member 732. The second member 732 has a piston 732A and a rod 732B. The piston 732A is inside the fluid chamber 731P. The piston 732A is shaped like a circular plate, for example. The central axis of the piston 732A substantially coincides with the reference axis 731V. The diameter of the piston 732A is substantially equal to the inner diameter of the circumferential wall 731A of the first member 731. The piston 732A divides the fluid chamber 731P into two fluid chambers next to each other in the reference axis direction 731L. The two fluid chambers 731P are a first fluid chamber 731P1 that is positioned on the positive side, and a second fluid chamber 731P2 that is on the negative side. The rod 732B is inserted into the first member 731 through the positive end of the first member 731. In other words, the rod 732B extends through the first end wall 731B and into the interior of the circumferential wall 731A. The rod 732B is shaped like a circular column. The central axis of the rod 732B substantially coincides with the reference axis 731V. The end of the rod 732B that faces the negative direction is fixedly attached to the piston 732A. In other words, from the perspective of the piston 732A, the rod 732B extends from the piston 732A in the forward direction. The positive end portion of the rod 732B protrudes out of the first member 731. The combination of the rod 732B and piston 732A can reciprocate relative to the first member 731 in the reference axis direction 731L upon application of force applied from a drive mechanism 740, which will be described below.

The power supply unit 730 includes a second connecting wall 707. The second connecting wall 707 is provided near the positive end of the rod 732B of the second member 732. The second connecting wall 707 is positioned lower than the rod 732B. The second connecting wall 707 is fixedly attached to the rod 732B. The second connecting wall 707 is configured in the same manner as described with reference to Fig. 12. Specifically, the second connecting wall 707 has a receiving recess 707A that is open downward. The receiving recess 707A houses the swing connecting shaft 685B. The second connecting wall 707 can rotate relative to the swing connecting shaft 685B. In other words, the second connecting wall 707 and thus the second member 732 are connected to the extension member 685 in such a manner that they can rotate about the central axis of the swing connecting shaft 685B.

The power supply unit 730 includes an electric drive mechanism 740. The drive mechanism 740 has a case 741, a tank 742, an electric motor 743, a pump 744, and a switching valve 745. The drive mechanism 740 additionally has a fluid path including a first base flow channel 746A, a second base flow channel 746B, a first extension flow channel 747A, and a second extension flow channel 747B. The drive mechanism 740 constitutes a fluid circuit.

The case 741 is positioned higher than the first member 731. The case 741 is fixedly attached to the first member 731. The case 741 houses the components of the drive mechanism 740.

The tank 742 stores a hydraulic fluid. The first base flow channel 746A connects the tank 742 and the switching valve 745. The second base flow channel 746B connects the tank 742 and the switching valve 745. The first extension flow channel 747A connects the switching valve 745 and the first port hole 731D. The second extension flow channel 747B connects the switching valve 745 and the second port hole 731E. The switching valve 745 establishes connection between the first base flow channel 746A and one of the first extension flow channel 747A or the second extension flow channel 747B. The switching valve 745 establishes connection between the second base flow channel 746B and the other of the first extension flow channel 747A or the second extension flow channel 747B. Specifically, the switching valve 745 operates in a first or second mode. In the first mode, the switching valve 745 connects the first base flow channel 746A to the first extension flow channel 747A, and connects the second base flow channel 746B to the second extension flow channel 747B. In the second mode, the switching valve 745 connects the first base flow channel 746A to the second extension flow channel 747B, and connects the second base flow channel 746B to the first extension flow channel 747A. The pump 744 is disposed on the first base flow channel 746A. The pump 744 uses the electric motor 743 as the drive source and is driven by the electric motor 743. The pump 744 pumps the hydraulic fluid from the tank 742 toward the switching valve 745. The electric motor 743 receives power fed from a battery, which is not shown. The power supply unit 730 is configured as described above.

The following now describes how the power supply unit 730 works. In the power supply unit 730, the second member 732 can reciprocate in the reference axis direction 731L when actuated by the drive mechanism 740, as shown by the arrow 730V in Fig. 15. The reciprocation is now described. The following first describes how the second member 732 moves toward the negative direction. It is assumed that the piston 732A is positioned near the middle of the circumferential wall 731A of the first member 731 in the reference axis direction 731L. It is also assumed that both the first and second fluid chambers 731P1 and 731P2 are filled with the hydraulic fluid. This state is referred to as the original state. With the original state being kept, the switching valve 745 is set in the first mode, and the pump 744 is driven. The hydraulic fluid in the tank 742 is accordingly fed to the first fluid chamber 731P1 through the first base flow channel 746A and first extension flow channel 747A. In other words, the first base flow channel 746A and first extension flow channel 747A can supply the hydraulic fluid to the first fluid chamber 731 P1 as the pump 744 is driven. As the first fluid chamber 731P1 receives the hydraulic fluid, hydraulic pressure is applied to the piston 732A toward the negative direction. The piston 732A accordingly moves toward the negative direction. Concurrently, the hydraulic fluid in the second fluid chamber 731P2 is discharged to the tank 742 through the second extension flow channel 747B and the second base flow channel 746B. In other words, the second extension flow channel 747B and second base flow channel 746B can drain the hydraulic fluid from the second fluid chamber 731P2 as the pump 744 is driven. When the piston 732A moves toward the negative direction, the combination of the piston 732A and rod 732B moves toward the negative direction relative to the first member 731. As a result, the entire length of the power supply unit 730 in the reference axis direction 731L becomes shorter than in the original state.

The following next describes how the second member 732 moves toward the positive direction. With the original state being kept, the switching valve 745 is set in the second mode, and the pump 744 is driven. The hydraulic fluid in the tank 742 is accordingly fed to the second fluid chamber 731P2 through the first base flow channel 746A and second extension flow channel 747B. In other words, the first base flow channel 746A and second extension flow channel 747B can supply the hydraulic fluid to the second fluid chamber 731P2 as the pump 744 is driven. As the second fluid chamber 731P2 receives the hydraulic fluid, hydraulic pressure is applied to the piston 732A toward the positive direction. The piston 732A accordingly moves toward the positive direction. Concurrently, the hydraulic fluid in the first fluid chamber 731P1 is discharged to the tank 742 through the first extension flow channel 747A and the second base flow channel 746B. In other words, the first extension flow channel 747A and second base flow channel 746B can drain the hydraulic fluid from the first fluid chamber 731P1 as the pump 744 is driven. When the piston 732A moves toward the positive direction, the combination of the piston 732A and rod 732B moves toward the positive direction relative to the first member 731. As a result, the entire length of the power supply unit 730 in the reference axis direction 731L becomes longer than in the original state.

As described above, the second member 732 operates upon application of the pressure created by the hydraulic fluid from the drive mechanism 740. As a result, the power supply unit 730 expands and contracts in length. The expansion and contraction in length of the power supply unit 730 described above results in the swing bracket 610 and thus the boom 530 swin0ging to the left and right, as described above in relation with Figs. 11 to 14.

The excavator 680 using the power supply unit 730 has the following advantages. As described in the (4-3) section, an external load may be applied to the boom 530 when the bucket 550 collides with the object to be excavated. This load is hereinafter referred to as the collision load. In the excavator 680 using the power supply unit 730, the collision load can be transmitted to the second member 732 via the swing bracket 610 and extension member 685. When acting on the second member 732, the collision load can cause the second member 732 to move in the reference axis direction 731L. Here, the piston 732A of the second member 732 is inside the fluid chamber 731P. The collision load may cause the second member 732 to move, but the piston 732A in the fluid chamber 731P experiences resistance from the hydraulic fluid. The hydraulic fluid thus prevents the piston 732A from moving. Therefore, the piston 732A and thus the second member 732 may move, but the movement is highly limited. In other words, when the power supply unit 730 is employed, the collision load applied to the second member 732 can be attenuated by the hydraulic pressure in the fluid chamber 731P. Therefore, when the power supply unit 730 is employed, the drive mechanism 740 no longer requires a structure to take care of the collision load. Accordingly, the fourth embodiment can prevent an increase in size of the drive mechanism 740.

The power supply unit 730 may be configured in any other manners than described in the above in relation with the example shown in Fig. 15. The power supply unit 730 can be configured in any manner as long as the second member 732 can move relative to the first member 731 upon application of the fluid pressure. For example, the flow channel from the tank 742 to the fluid chamber 731P may be configured differently than described in relation with the example shown in Fig. 15. The flow channel may be configured in any manner as long as it can feed and drain the hydraulic fluid to/from the first and second fluid chambers 731 P1 and 731P2 as the pump 744 operates by being driven by the electric motor 743. The fluid fed to and drained from the first and second fluid chambers 731P1 and 731P2 is not limited to the hydraulic fluid. Alternatively, the fluid can be air. The circumferential wall 731A of the first member 731 may be shaped in other manners than a circular tube. The circumferential wall 731A may be shaped like a polygonal tube. The circumferential wall 731A is only required to have a tubular shape as a whole. The shape of the piston 732A may be adaptively modified to match the shape of the circumferential wall 731A. The piston 732A can be configured in any manner as long as it can divide the fluid chamber 731P into two chambers next to each other in the reference axis direction 731L. The rod 732B can be shaped in any other manners than a circular column as long as it is shaped like a column.

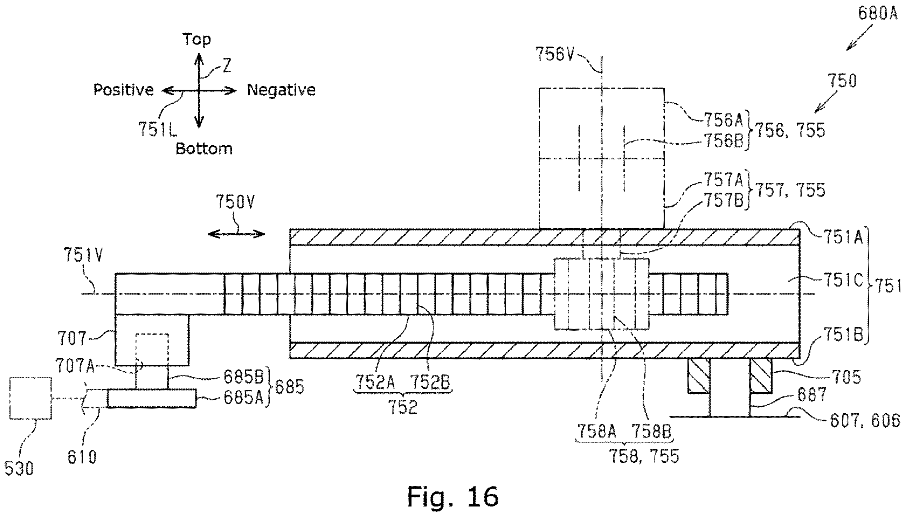

The excavator 680 may employ a power supply unit 750 shown in Figs. 16 to 18. In Figs. 16 to 18, the same reference labels as in Figs. 10 to 15 are used for the components that function the same or substantially the same as the corresponding components shown in Figs. 10 to 15.

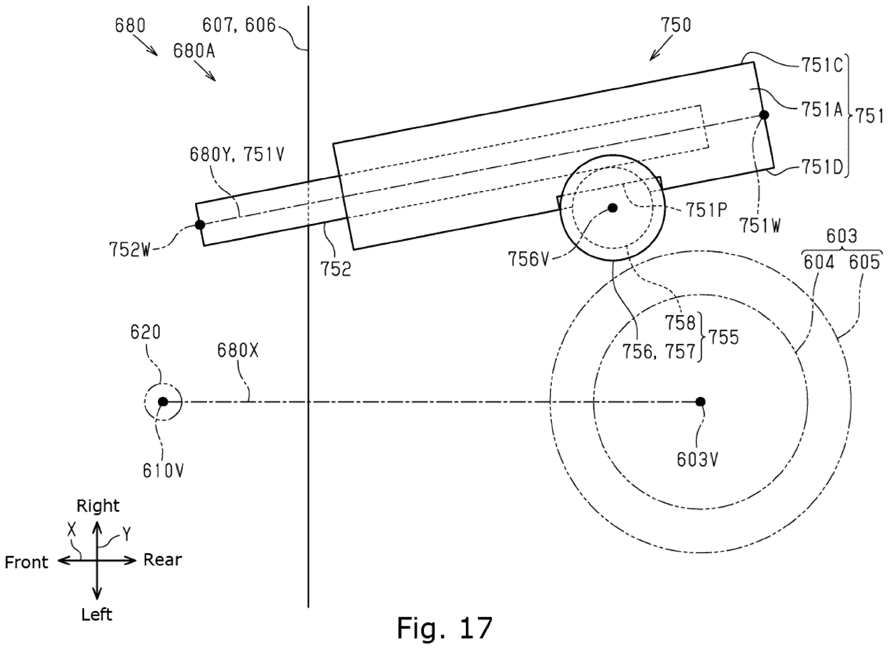

The power supply unit 750 is described with reference to Fig 17. The reference label "680X" indicates the imaginary line segment connecting the slew axis 610V and the bearing axis 603V when the excavator 680 is viewed in plan view in the direction extending along the slew axis 610V. This imaginary line segment is referred to as the first line segment 680X. As described in relation with the second embodiment, in the Y direction, the slew axis 610V and bearing axis 603V are both located substantially at the middle of the casing 607. This means that the first line segment 680X extends in the X direction while substantially passing through the Y-direction-wise middle of the casing 607.

As shown in Fig. 16, the power supply unit 750 includes a first member 751. As shown in Fig. 17, the first member 751 positioned on the right side of the first line segment 680X, that is to say, the Y-direction-wise middle of the casing 607. As shown in Figs. 16 and 17, the first member 751 is shaped like a quadrangular tube. Hereinafter, the central axis of the first member 751 is referred to as a reference axis 751V. The reference axis 751V extends substantially perpendicularly to the Z direction. In the following, the two directions extending along the reference axis 751V may be collectively referred to as a reference axis direction 751L if they do not need to be distinguished from each other. A particular one of the two directions extending in the reference axis direction 751L is identified as the positive direction, and the opposite direction as the negative direction.

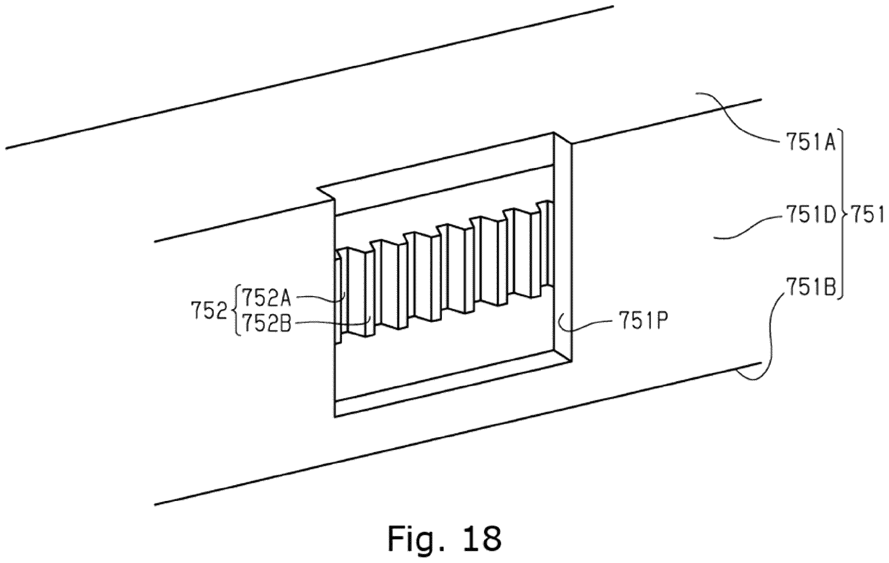

As shown in Fig. 16, the first member 751 has a first wall 751A, a second wall 751B, and a third wall 751C. As shown in Fig. 17, the first member 751 also has a fourth wall 751D. The walls are shaped like a rectangular plate and long in the reference axis direction 751L. As shown in Fig. 16, the principal surfaces of the first wall 751A face those of the second wall 751B in the top-to-bottom direction. The principal surfaces of a plate-shaped object are the surfaces with the largest area. The first wall 751A is positioned higher than the second wall 751B. As shown in Figs. 16 and 17, the third wall 751C connects the longer side of the first wall 751A and that of the second wall 751B. The fourth wall 751D is opposite to the third wall 751C with the first and second walls 751A and 751B being sandwiched therebetween, and connects the longer side of the first wall 751A and that of the second wall 751B. As shown in Fig. 17, the fourth wall 751D is closer to the center of the casing 607 than are the first, second and third walls 751A, 751B and 751C. As shown in Fig. 18, the fourth wall 751D has a communication port 751P. The communication port 751P is an opening through which the interior of the first member 751 is in communication with the outside. As shown in Fig. 17, the communication port 751P is positioned near the middle of the fourth wall 751D in the reference axis direction 751L.

As shown in Fig. 16, the power supply unit 750 includes a first connecting wall 705. The first connecting wall 705 is positioned lower than the second wall 751B of the first member 751. The first connecting wall 705 is positioned near the negative end of the second wall 751B. The first connecting wall 705 is fixedly attached to the second wall 751B. The first connecting wall 705 is configured in the same manner as described with reference to Fig. 12. Specifically, the first connecting wall 705 is shaped like a circular tube. The first connecting wall 705 houses a body connecting shaft 687. The first connecting wall 705 can rotate relative to the body connecting shaft 687. In other words, the first connecting wall 705 and thus the first member 751 are connected to the casing 607 in such a manner that they can rotate about the central axis of the body connecting shaft 687.

The power supply unit 750 includes a second member 752. The second member 752 extends through the inside and outside the first member 751. The second member 752 includes a body 752A and a plurality of rack teeth 752B. The body 752A is shaped like a quadrangular column. The central axis of the body 752A substantially coincides with the reference axis 751V. The body 752A is inserted into the first member 751 through the positive end of the first member 751. The positive end portion of the body 752A is exposed beyond the first member 751. The rack teeth 752B protrude from one of the outer surfaces of the body 752A that faces the fourth wall 751D of the first member 751. The rack teeth 752B are arranged at equal intervals in the reference axis direction 751L. The rack teeth 752B are present in substantially the entire range of the body 752A in the reference axis direction 751L. The second member 752 can reciprocate relative to the first member 751 in the reference axis direction 751L upon application of the force applied from a drive mechanism 755, which will be described below.

The power supply unit 750 includes a second connecting wall 707. The second connecting wall 707 is provided near the positive end of the body 752A of the second member 752. The second connecting wall 707 is positioned lower than the body 752A. The second connecting wall 707 is fixedly attached to the body 752A. The second connecting wall 707 is configured in the same manner as described with reference to Fig. 12. Specifically, the second connecting wall 707 has a receiving recess 707A that is open downward. The receiving recess 707A houses a swing connecting shaft 685B. The second connecting wall 707 can rotate relative to the swing connecting shaft 685B. In other words, the second connecting wall 707 and thus the second member 752 are connected to the extension member 685 in such a manner that they can rotate about the central axis of the swing connecting shaft 685B.

The power supply unit 750 includes an electric drive mechanism 755. The drive mechanism 755 is positioned near the middle of the first member 751 in the reference axis direction 751L. As shown in Fig. 17, the drive mechanism 755 is positioned closer to the fourth wall 751D with respect to the reference axis 751V. As shown in Fig. 16, the drive mechanism 755 includes an electric motor 756, a speed reducer 757, and a pinion gear 758.

The electric motor 756 operates upon receiving electricity fed from a battery, which is not shown. The electric motor 756 includes a housing 756A, and an output shaft 756B. The housing 756A is positioned outside the first member 751. The housing 756A is positioned higher than the first wall 751A of the first member 751. The output shaft 756B protrudes downward beyond the housing 756A. The output shaft 756B is shaped like a circular column. The central axis of the output shaft 756B extends substantially in the Z direction. The output shaft 756B is configured to rotate relative to the housing 756A. The output shaft 756B rotates about its own central axis. In other words, the central axis of the output shaft 756B serves as a rotation axis 765V of the electric motor 756. The output shaft 756B can rotate in both of the forward and reverse directions upon power supply to the housing 756A.

The speed reducer 757 is positioned lower than the electric motor 756. The speed reducer 757 includes a reducer body 757A and a transmission shaft 757B. Like the electric motor 756, the reducer body 757A is positioned outside the first member 751 and higher than the first wall 751A of the first member 751. The reducer body 757A is fixedly mounted onto the first wall 751A. The reducer body 757A is connected to the output shaft 756B of the electric motor 756. To the reducer body 757A, the torque of the output shaft 756B of the electric motor 756 is input. The reducer body 757A multiplies the torque of the output shaft 756B of the electric motor 756 with a predetermined ratio and outputs the resulting torque to the transmission shaft 757B. The transmission shaft 757B protrudes downward beyond the reducer body 757A. The transmission shaft 757B is shaped like a circular column. The central axis of the transmission shaft 757B substantially coincides with the rotation axis 756V of the electric motor 756. In the Z direction, the lower half of the transmission shaft 757B that is lower than its middle is located inside the first member 751. The transmission shaft 757B is configured to rotate relative to the reducer body 757A. The transmission shaft 757B rotates about its own central axis. The speed reducer 757 may be of, for example, an eccentric oscillation gear type or planetary gear type. The speed reducer 757 can be of any type as long as it is capable of multiplying and outputting the torque from the electric motor 756.

The pinion gear 758 is positioned lower than the reducer body 757A. In the Z direction, the pinion gear 758 is positioned between the first and second walls 751A and 751B of the first member 751. As shown in Fig. 17, in the Y direction, the pinion gear 758 extends over the fourth wall 751D of the first member 751. Specifically, the pinion gear 758 is partly positioned outside the first member 751. The remaining portion of the pinion gear 758 is received in the first member 751 through the communication port 751P in the fourth wall 751D. As shown in Fig. 16, the pinion gear 758 has a gear body 758A and a plurality of pinion teeth 758B. The gear body 758A is shaped like a circular tube. The central axis of the gear body 758A substantially coincides with the rotation axis 756V of the electric motor 756. The gear body 758A has a hole at the center, where the transmission shaft 757B of the speed reducer 757 is received. The gear body 758A is fixed onto the transmission shaft 757B. The gear body 758A rotates together with the transmission shaft 757B. In other words, the gear body 758A can rotate about an axis that is substantially orthogonal to the reference axis 751V. The gear body 758A can rotate when driven by the electric motor 756. The pinion teeth 758B protrude from the outer peripheral surface of the gear body 758A. The pinion teeth 758B are arranged at equal intervals in the circumferential direction centered on the central axis of the gear body 758A. Some of the pinion teeth 758B are engaged with the rack teeth 752B of the second member 752. There is a gap, called backlash, between the pinion teeth 758B and the rack teeth 752B.

The following now describes in detail how the drive mechanism 755 is positioned. As shown in Fig. 17, the reference numeral "680Y" indicates the imaginary line segment connecting the negative end 751W of the first member 751 and the positive end 752W of the second member 752 in the reference axis direction 751L. This line segment is referred to as a second line segment 680Y. When the excavator 680 is viewed in plan view in the direction parallel to the slew axis 610V, the rotation axis 756V of the electric motor 756, and thus the center axis of the pinion gear 758, is located between the first line segment 680X and the second line segment 680Y. As shown in Fig. 16, the negative end of the first member 751 is opposite to the end of the first member 751 through which the second member 752 is inserted into the first member 751. The power supply unit 750 is configured as described above.

The following now describes how the power supply unit 750 works. In the power supply unit 750, upon rotation of the output shaft 756B of the electric motor 756, the rotation of the output shaft 756B causes the pinion gear 758 to rotate. The pinion gear 758 rotates in one of the forward and reverse directions that is determined by the direction of the rotation of the output shaft 756B of the electric motor 756. The rotation of the pinion gear 758 is transmitted to the second member 752 through the engagement between the pinion teeth 758B and the rack teeth 752B. As the pinion gear 758 rotates, the second member 752 moves relative to the first member 751 in the reference axis direction 751L. In other words, the second member 752 is moved by the force applied by the pinion gear 758. As indicated by the arrow 750V in Fig. 16, the second member 752 moves toward the positive or negative direction relative to the first member 751, depending on the direction of the rotation of the pinion gear 758. As the second member 752 moves in this manner, the amount of protrusion of the second member 752 relative to the first member 751 increases or decreases. In other words, the power supply unit 750 expands and contracts in length in the reference axis direction 751L. The expansion and contraction in length of the power supply unit 750 as described above causes the swing bracket 610 and thus the boom 530 to swing to the left and right, as described above in relation with Figs. 11 to 14.

The excavator 680 using the power supply unit 750 has the following advantages. As described in the (4-3) section, an external load may be applied to the boom 530 when the bucket 550 collides with the object to be excavated. This load is hereinafter referred to as the collision load. In the excavator 680 using the power supply unit 750, the collision load can be transmitted to the second member 752 via the swing bracket 610 and extension member 685. The collision load, however, is hardly transmitted to the pinion gear 758 or speed reducer 757, and also to the electric motor 756 for the following two reasons. Firstly, there is a gap between the rack teeth 752B of the second member 752 and the pinion teeth 758B of the pinion gear 758. The gap can release the collision load, so that the collision load is not transmitted from the rack teeth 752B to the pinion teeth 758B. Secondly, the second member 752 extends substantially perpendicularly to the central axis of the pinion gear 758. Here, the collision load acting on the second member 752 has a main component acting in the reference axis direction 751L, in which the second member 752 extends. The collision load thus hardly acts as a force that causes the parts to move in the direction intersecting the reference axis direction 751L. Therefore, the collision load acting on the second member 752 is unlikely to be translated into a force that causes the pinion gear 758 to move in the direction extending along its central axis. Therefore, the collision load acting on the second member 752 is unlikely to act as a force that causes the pinion gear 758 and speed reducer 757, and also the electric motor 756, to move in the direction along their central axes. As a result, the collision load acting on the second member 752 can be prevented from reaching the speed reducer 757 and electric motor 756 in the modification shown in Figs. 16 to 18. According to the modification shown in Figs. 16 to 18, it is no longer necessary to configure the speed reducer 757 and electric motor 756 such that they can withstand the collision load. Accordingly, the modification can prevent an increase in size of the speed reducer 757, like the second embodiment.

In the power supply unit 750, the drive mechanism 755 is located between the first line segment 680X and the second line segment 680Y. In other words, the drive mechanism 755 is positioned close to the Y-direction-wise middle of the casing 607. In this case, the electric motor 756 or speed reducer 757 can be accommodated within the casing 607, even if the diameter of the electric motor 756 or speed reducer 757 is increased to some extent, for example. Thus, the excavator 680 can have a compact size as a whole.

The power supply unit 750 may be configured in any other manners than described in the above in relation with the example shown in Figs. 16 to 18. The power supply unit 750 can be configured in any manner as long as the rack and pinion mechanism is employed to cause the second member 752 to move relative to the first member 751. For example, in the power supply unit 750, the drive mechanism 755 may be differently positioned than in the example shown in Figs. 16 to 18. For example, the drive mechanism 755 may be fixed to the casing 607 at a site that is positioned on the positive side relative to the positive end of the first member 751. In this case, the pinion gear 758 may mesh with the rack teeth 752B of the second member 752 at a site that is spaced away from the first member 751 in the reference axis direction 751L. Alternatively, the drive mechanism 755 may be positioned opposite to the Y-direction-wise middle of the casing 607 with the first member 751 being sandwiched. In the drive mechanism 755, the central axis of the pinion gear 758 may intersect with the rotation axis 756V of the electric motor 756. The drive mechanism 755 may be embodied without the speed reducer 757, and the pinion gear 758 may be attached to the output shaft 756B of the electric motor 756. The first member 751 may be shaped in any other manner than a quadrangular tube and is only required to have a tubular shape as a whole. The second member 752 may be shaped in any other manner than a quadrangular tube, and shaped in any manner as long as it is shaped like a column extending in the reference axis direction 751L and it has the rack teeth 752B on the outer surface.

### <Fifth Embodiment>

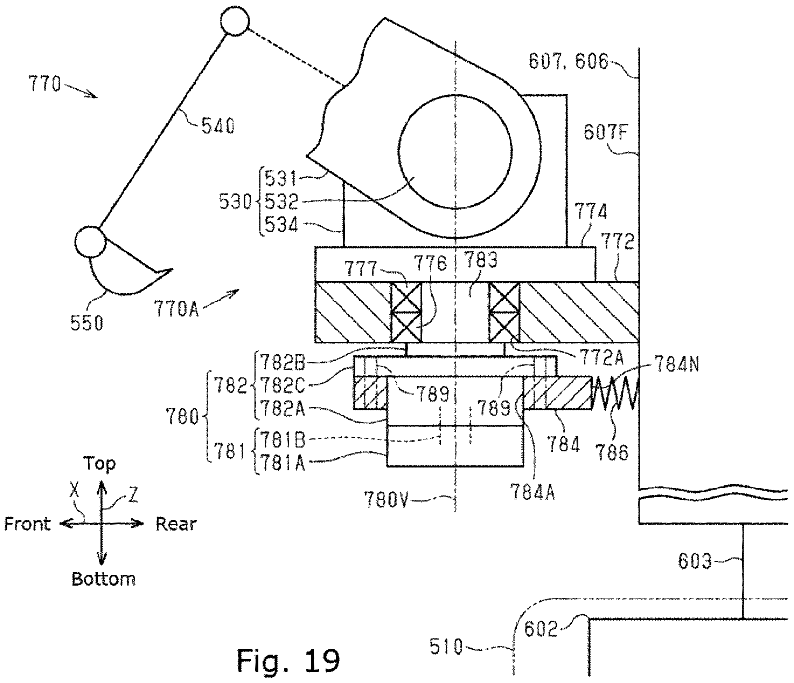

The following now describes a construction machine and an electric actuator for a construction machine relating to a fifth embodiment with reference to Fig. 19. The drawings may show the components in an enlarged manner for the sake of better intelligibility. The dimensions of the components and the ratios thereof may be different from those of the actual components, and among the drawings. In Fig. 19, the same reference labels as in Figs. 1 to 18 are used for the components that function the same or substantially the same as the corresponding components shown in Figs. 1 to 18. Sharing some common features with the first to fourth embodiments, the fifth embodiment is described in the following but redundant description may be omitted or simplified.

As shown in Fig. 19, an excavator 770, which is a construction machine, includes a lower body 602, an upper body 606, which is a vehicle body, a pair of traveling units 510, and a slewing bearing 603. The lower body 602, traveling units 510, and slewing bearing 603 are configured in the same manner as in the second embodiment. These components are thus not described in the following. The upper body 606 is configured in the same manner as in the second embodiment, except for that no support wall is provided. Fig. 19 does not show the operator compartment. The upper body 606 is located on the opposite side to the ground surface with respect to the lower body 602. In the present embodiment, the up and down, left and right, and front and rear are defined in the same manner as in the second embodiment. In Fig. 19, some of the components of the excavator 770 are shown in sectional views for the sake of convenience.

The excavator 770, which is an excavation machine, includes a boom 530, an arm 540, and a bucket 550. The boom 530, arm 540 and bucket 550 are positioned in front of the upper body 606. The boom 530, arm 540, and bucket 550 are configured in the same manner as in the second embodiment. These components are thus not described in the following.

### <Boom Swing Mechanism>

As shown in Fig. 19 the excavator 770 includes a boom swing mechanism 770A. The boom swing mechanism 770A is configured to cause the boom 530 to swing to the left and right relative to the upper body 606. The boom swing mechanism 770A constitutes an electric actuator.

The boom swing mechanism 770A includes a mounting wall 772. The mounting wall 772 is shaped like a quadrangular plate, for example. The mounting wall 772 is positioned in front of the casing 607 of the upper body 606. The mounting wall 772 protrudes frontward from the front surface 607F of the casing 607. The mounting wall 772 is fixed to the front surface 607F of the casing 607. The principal surfaces of the mounting wall 772 face upward and downward. The principal surfaces of a plate-shaped object are the surfaces with the largest area. The mounting wall 772 has a through hole 772A. The through hole 772A penetrates the mounting wall 772 in the top-to-bottom direction. The central axis of the through hole 772A extends substantially in the Z direction.

The boom swing mechanism 770A includes a swing bracket 774. The swing bracket 774 is located higher than the mounting wall 772. The swing bracket 774 is shaped like a circular plate. The swing bracket 774 is positioned on the upper surface of the mounting wall 772. The principal surfaces of the swing bracket 774 face upward and downward. The area of the principal surfaces of the swing bracket 774 is greater than the opening area of the through hole 772A in the mounting wall 772. The swing bracket 774 thus covers the through hole 772A in the mounting wall 772. The swing bracket 774 is configured to slide relative to the mounting wall 772. The swing bracket 774 is spaced away from the front surface 607F of the casing 607. The base wall 534 of the boom 530 is fixed to the upper surface of the swing bracket 774. As in the second embodiment, the boom body 531 is connected to the base wall 534 via the connecting shaft 532. The boom body 531 can rotate about the connecting shaft 532 upward and downward.

The boom swing mechanism 770A includes a drive device 780. The drive device 780 is located lower than the mounting wall 772. The drive device 780 includes an electric motor 781, and a speed reducer 782.

The electric motor 781 includes a housing 781A, and an output shaft 781B. The electric motor 781 operates on receiving power fed from a battery, which is not shown. The housing 781A is contoured like a circular column. The central axis of the housing 781A extends substantially in the Z direction. The output shaft 781B protrudes upward beyond the housing 781A. The central axis of the output shaft 781B substantially coincides with the central axis of the housing 781A. The output shaft 781B is configured to rotate relative to the housing 781A. The output shaft 781B rotates about its own central axis. The output shaft 781B can rotate in both of the forward and reverse directions upon power supply to the housing 781A.

The speed reducer 782 is positioned higher than the electric motor 781. The speed reducer 782 includes a reducer body 782A , an output member 782B, and a projecting portion 782C. The reducer body 782A is contoured like a circular column. The central axis of the reducer body 782A substantially coincides with the central axis of the housing 781A of the electric motor 781. The reducer body 782A is connected to the output shaft 781B of the electric motor 781. To the reducer body 782A, the torque of the output shaft 781B of the electric motor 781 is input. The reducer body 782A multiplies the torque of the output shaft 781B of the electric motor 781 with a predetermined ratio and outputs the resulting torque to the output member 782B. The output member 782B is positioned higher than the reducer body 782A. The output member 782B is shaped like a circular column. The diameter of the output member 782B is less than that of the reducer body 782A. The central axis of the output member 782B substantially coincides with the central axis of the reducer body 782A. The output member 782B is configured to rotate relative to the reducer body 782A. The output member 782B rotates about its own central axis. The central axis of the output member 782B constitutes the rotation axis 780V of the drive device 780. Stated differently, the output member 782B and thus the drive device 780 output torque centered on the rotation axis 780V. The projecting portion 782C protrudes from the outer peripheral surface of the reducer body 782A. The projecting portion 782C is provided on the upper portion of the reducer body 782A. The projecting portion 782C extends along the entire length of the reducer body 782A in the circumferential direction centered on the central axis of the reducer body 782A. In other words, the projecting portion 782C is annular. The speed reducer 782 may be of, for example, an eccentric oscillation gear type or planetary gear type. The speed reducer 782 can be of any type as long as it is capable of multiplying and outputting the torque from the electric motor 781.

The boom swing mechanism 770A includes a transmission member 783. The transmission member 783 is positioned higher than the speed reducer 782. The transmission member 783 is located inside the through hole 772A in the mounting wall 772. The transmission member 783 is shaped like a circular column. The diameter of the transmission member 783 is less than that of the through hole 772A. The central axis of the transmission member 783 substantially coincides with the rotation axis 780V of the drive device 780. The lower end surface of the transmission member 783 is fixed to the upper end surface of the output member 782B of the speed reducer 782. The upper end surface of the transmission member 783 is fixedly attached to the lower surface of the swing bracket 774. In other words, the transmission member 783 and swing bracket 774 are aligned with the drive device 780 in the direction extending along the rotation axis 780V and arranged on the rotation axis 780V of the drive device 780. The transmission member 783 rotates together with both the output member 782B and swing bracket 774. Thus, the transmission member 783 is interposed between the drive device 780 and the swing bracket 774 and transmits the torque of the drive device 780 to the swing bracket 774. Upon application of the torque from the drive device 780 via the transmission member 783, the swing bracket 774 rotates about the rotation axis 780V. As described above, the transmission member 783 connects the drive device 780 and the swing bracket 774. The swing bracket 774 is supported on the upper surface of the mounting wall 772. As a result, the drive device 780 is suspended from the lower surface of the swing bracket 774. At the same time, the drive device 780 is supported by the swing bracket 774 from above. Stated differently, the drive device 780 is attached to the casing 607 via the swing bracket 774 and mounting wall 772. From a different perspective, by being supported on the upper surface of the mounting wall 772, the swing bracket 774 is connected to the casing 607 such that the swing bracket 774 can rotate about the rotation axis 780V.

The boom swing mechanism 770A includes a first bearing 776. The first bearing 776 is placed inside the through hole 772A in the mounting wall 772. The first bearing 776 is interposed between the inner surface of the through hole 772A and the transmission member 783. The first bearing 776 is positioned in the lower portion of the through hole 772A. The first bearing 776 is annularly shaped as a whole. The first bearing 776 is a ball bearing, for example. Although not shown, the first bearing 776 has an annular inner race, an annular outer race, and a plurality of rolling elements. The outer diameter of the inner race is less than the inner diameter of the outer race. The central axis of the inner race substantially coincides with the central axis of the outer race. The inner race is situated inside the outer race in the radial direction centered on its own central axis. The rolling elements are interposed between the inner race and the outer race. The rolling elements are shaped like, for example, a sphere or a circular column. The rolling elements guide the rotation of the inner race relative to the outer race. The inner race has a hole at the center, which is penetrated by the transmission member 783. The inner peripheral surface of the inner race is fixedly attached to the transmission member 783. The inner race rotates together with the transmission member 783. The outer peripheral surface of the outer race is fixed to the inner surface of the through hole 772A in the mounting wall 772. Stated differently, the first bearing 776 is mounted onto the casing 607 of the upper body 606 by means of the mounting wall 772. In addition, the first bearing 776 supports the transmission member 783 such that the transmission member 783 can rotate relative to the mounting wall 772.

The boom swing mechanism 770A includes a second bearing 777. The second bearing 777 is interposed between the inner surface of the through hole 772A in the mounting wall 772 and the transmission member 783, like the first bearing 776. The second bearing 777 is positioned higher than the first bearing 776. The second bearing 777 is aligned with the first bearing 776 in the Z direction, and thus in the direction extending along the rotation axis 780V of the drive device 780. The second bearing 777 is configured in the same manner as the first bearing 776. The second bearing 777 is thus not described in detail here. The second bearing 777 supports the transmission member 783 in a rotatable manner.

The boom swing mechanism 770A includes a retainer 784. The retainer 784 is located lower than the mounting wall 772. In other words, in the direction extending along the rotation axis 780V of the electric motor 781, the retainer 784 is located on the opposite side of the swing bracket 774 with the first and second bearings 776 and 777 being sandwiched. The retainer 784 is spaced away from the mounting wall 772. The retainer 784 is also spaced away from the front surface 607F of the casing 607. The retainer 784 is shaped like a quadrangular plate. The principal surfaces of the retainer 784 face upward and downward. The retainer 784 has a housing hole 784A. The housing hole 784A extends through the retainer 784 in the top-to-bottom direction. The central axis of the housing hole 784A substantially coincides with the rotation axis 780V of the drive device 780. The diameter of the housing hole 784A is substantially equal to the diameter of the reducer body 782A of the drive device 780. The housing hole 784A is penetrated by the reducer body 782A. The top surface of the retainer 784 faces the projecting portion 782C of the speed reducer 782. The retainer 784 is secured onto the projecting portion 782C of the speed reducer 782 by means of bolts 789.

The boom swing mechanism 770A includes a buffer member 786. The buffer member 786 is located between the front surface 607F of the casing 607 and the rear end surface 784N of the retainer 784. The buffer member 786 is a coil spring. The modulus of elasticity of the buffer member 786 is less than that of the retainer 784. This means that the buffer member 786 is made of a softer material than the retainer 784. One of the ends of the buffer member 786 is attached to the front surface 607F of the casing 607. The other of the ends of the buffer member 786 is attached to the rear end surface 784N of the retainer 784. In other words, the buffer member 786 connects the retainer 784 and the casing 607. The buffer member 786 is attached using a hook or other mounting pieces.

### <How Fifth Embodiment Works>

In the excavator 770, upon rotation of the output shaft 781B of the electric motor 781, the transmission member 783 and swing bracket 774 rotate. The rotation of the swing bracket 774 causes the boom 530 to swing to the left and right.

### <Advantageous Effects of Fifth Embodiment>

(5-1) As described above in the "How Fifth Embodiment Works" section, the excavator 770 relating to the fifth embodiment can use the electric motor 781 as the drive source to cause the boom 530 to swing to the left and right.

As described in the first embodiment, an external load may be applied to the boom 530 when the bucket 550 collides with the object to be excavated. This load is hereinafter referred to as the collision load. In the excavator 770 relating to the present embodiment, the collision load can be transmitted to the transmission member 783 via the swing bracket 774. The collision load, which is transmitted to the transmission member 783, may act as a force that causes the transmission member 783 to move outwardly in the radial direction centered on the central axis of the transmission member 783. The collision load can be basically be transmitted to the casing 607 via the first and second bearings 776 and 777. The collision load can then be absorbed by the casing 607.

The collision load, which is transmitted to the transmission member 783, can be partly transmitted to the drive device 780 via the transmission member 783. The drive device 780 is acted upon by the following reaction torque in addition to the collision load. When the electric motor 781 is driven to cause the swing bracket 774 and thus the boom 530 to swing, the rotation of the swing bracket 774 results in reaction force applied to the drive device 780. The collision load and reaction torque input into the drive device 780 are hereinafter collectively referred to as "the specific load".

The drive device 780 is held by the retainer 784. It is assumed that the retainer 784 is fixedly attached to the front surface 607F of the casing 607. In this case, the specific load input into the drive device 780 may cause the drive device 780 to move. However, since the drive device 780 is immobile, the specific load cannot be released by the drive device 780.

To address this issue, the retainer 784 is spaced away from the casing 607 in the present embodiment. Therefore, when the specific load is applied to the drive device 780, the retainer 784 allows the drive device 780 to move. In other words, the specific load can be released from the drive device 780 in the present embodiment as the drive device 780 can move upon application of the specific load. Furthermore, the buffer member 786 is provided between the retainer 784 and the casing 607 in the present embodiment. The buffer member 786 attenuates the movement of the drive device 790 that is caused by the specific load by its own elastic force. In the present embodiment, the burden on the drive device 780 can be effectively reduced. Therefore, it is no longer necessary to configure the speed reducer 782 and electric motor 781 such that they can withstand the specific load in the present embodiment. This can result in preventing an increase in size of the speed reducer 782.

(5-2) The excavator 770 relating to the present embodiment has two bearings, i.e., the first and second bearings 776 and 777. These two bearings support the transmission member 783. Therefore, when acting on the transmission member 783 via the boom 530 and thus the swing bracket 774, the collision load is distributively applied to these two bearings. Each one of the bearings is thus subject to less collision load, so that the individual bearings are saved from much burden.

### <Modification Examples of Fifth Embodiment>

The fifth embodiment can be modified as described below. The first to fifth embodiments and the following modifications can be combined with each other to such an extent that they are technically consistent with each other.

The transmission member 783 may be configured in any other manners than described in the above in relation with the embodiment. The transmission member 783 may be configured in any manner as long as it can transmit the torque produced by the drive device 780 to the swing bracket 774. For example, the transmission member 783 may be shaped in a different manner than described in the above in relation with the embodiment. For example, the transmission member 783 may be shaped like a stepped circular column. The transmission member 783 and the output member 782B of the speed reducer 782 may be constituted by a single component. In other words, the output member 782B of the speed reducer 782 may be treated as the transmission member 783, or the transmission member 783 may be treated as the output member 782B of the speed reducer 782.

The number of bearings supporting the transmission member 783 may not be limited to the example described in relation with the above embodiment. There may be one bearing, or three or more bearings. The bearings may be configured in any other manners than described in the above in relation with the embodiment. For example, the bearings may be sliding bearings. When sliding bearings are employed as the bearings, the through hole 772A of the mounting wall 772 may serve as the sliding surface of the bearings. In this case, the mounting wall 772 is configured as including the bearings.

The bearings may be attached to the casing 607 in any other manners than described in the above in relation with the embodiment. For example, the mounting wall 772 may be shaped in a different manner than described in the above in relation with the embodiment. The mounting wall 772 may be configured in any manner as long as it can hold the bearings and fixedly attach the bearings to the casing 607. The bearings may be attached to the casing 607 using a structure other than a wall categorized as the mounting wall 772. Stated differently, the mounting wall 772 is not an essential component.

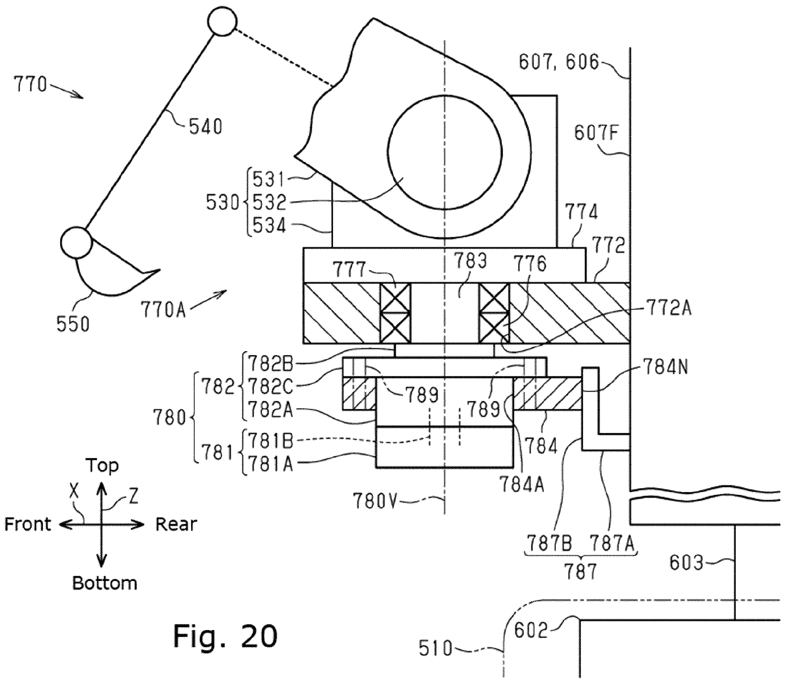

The bearings may be attached to a component other than the casing 607. The bearings are only required to be attached to somewhere on the vehicle body. The buffer member 786 is not limited to the example described in the above in relation with the embodiment. The buffer member 786 is configured in any manner as long as it is made of a softer material than the retainer 784. For example, the buffer member 786 may be made of rubber. A rubber object may be alternatively interposed between the retainer 784 and the front surface 607F of the casing 607. As another alternative example, a buffer member 787 shown in Fig. 20 may be employed. The buffer member 787 can be made of any material as long as the material is softer than the material of the retainer 784. For example, the buffer member 787 may be made of metal or resin. The buffer member 787 is shaped like an L when seen in plan view in the Y direction. Specifically, the buffer member 787 is divided into a bottom plate portion 787A corresponding to the horizontal side of the L-shape, and a contact portion 787B corresponding to the vertical side of the L-shape. The bottom plate portion 787A is shaped like a quadrangular plate, for example. The principal surfaces of the bottom plate portion 787A face upward and downward. The bottom plate portion 787A is fixed at the rear end thereof to the front surface 607F of the casing 607. The contact portion 787B rises upwardly from the end of the bottom plate portion 787A that faces away from the casing 607. The contact portion 787B is shaped like a quadrangular plate, for example. The principal surfaces of the contact portion 787B face frontward and rearward. The upper portion of the contact portion 787B is fixedly attached the rear end surface 784N of the retainer 784. Upon application of the specific load to the drive device 780, the drive device 780 and retainer 784 may move. With this buffer member 787 being employed, the contact portion 787B moves frontward and rearward starting from the joint portion with the bottom plate portion 787A. In this manner, the specific load applied to the drive device 780 can be lessened, as described above in the (5-1) section. In Fig. 20, the same reference labels as in Fig. 19 are used for the components that function the same or substantially the same as the corresponding components shown in Fig. 19. In Fig. 20, some of the components are shown in sectional views for the sake of convenience, as in Fig. 19.

The buffer member 786 may be connected, at the side that is opposite to the side connected to the retainer 784, to any other part of the vehicle body than the casing 607. The buffer member 786 is only required to be attached to somewhere on the vehicle body.

The swing bracket 774 may be configured in any other manners than described in the above in relation with the embodiment. The swing bracket 774 may be configured in any manner as long as it is fixedly attached to the boom 530 and it can rotate upon application of the torque from the drive device 780. For example, the swing bracket 774 may be shaped in a different manner than described in the above in relation with the embodiment. For example, the swing bracket 774 may be shaped like a polygonal plate.

The boom 530 may be fixed to any other parts of the swing bracket 774 than described in the above in relation with the embodiment. The boom 530 is only required to be fixed to somewhere on the swing bracket 774.

The retainer 784 may be configured in any other manners than described in the above in relation with the embodiment. The retainer 784 may be configured in any manner as long as it has the housing hole 784A penetrated by the drive device 780. The retainer 784 may be shaped like a circular or a polygonal plate other than a quadrangular plate.

The housing hole 784A in the retainer 784 may be penetrated by any other components of the drive device 780 than described in the above in relation with the embodiment. In other words, the housing hole 784A may be penetrated by any other components of the drive device 780 than the reducer body 782A. For example, the housing hole 784A may be penetrated by the electric motor 781.

How the retainer 784 is positioned relative to the swing bracket 774 is not limited to the example described in the above in relation with the embodiment. The retainer 784 and swing bracket 774 are only required to oppose each other with the bearings supporting the transmission member 783 being sandwiched therebetween. For example, the boom swing mechanism 770A may be modified as a whole such that the retainer 784 is located higher than the bearings and the swing bracket 774 is located lower than the bearings.

The drive device 780 may be configured in any other manners than described in the above in relation with the embodiment. In the drive device 780, for example, the housing 781A of the electric motor 781 may be contoured differently than described in the above in relation with the embodiment. The drive device 780 may be embodied without the speed reducer 782. When the drive device 780 is embodied without the speed reducer 782, the central axis of the output shaft 781B of the electric motor 781 constitutes the rotation axis of the drive device 780. The drive device 780 may be configured in any manner as long as it includes the electric motor 781 and can output torque centered on the rotation axis. The rotation axis of the torque output from the drive device 780 is only required to extend in the top-to-bottom direction of the vehicle body as a whole. For example, it may be tilted relative to the Z direction within a range of approximately 15 degrees, for example.

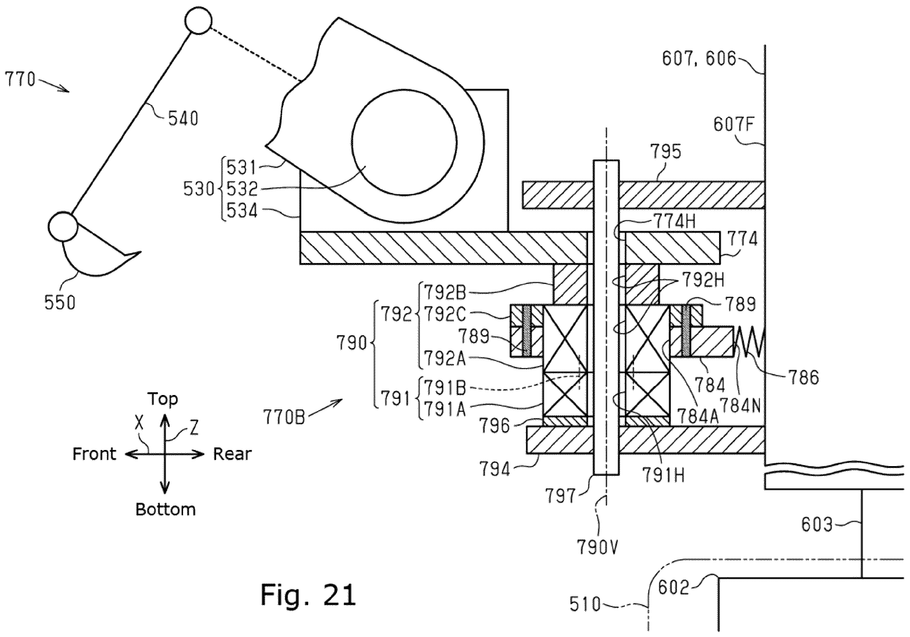

The drive device 780 may be shaped like a tube. When the drive device 780 is shaped like a tube, the same advantageous effects as described in the (5-1) section can be achieved by eliminating the bearings and mounting wall 772 and also by employing a columnar member that extends through the drive device 780. A boom swing mechanism 770B configured in this manner is described in the following with reference to Fig. 21. As in the fifth embodiment, the boom swing mechanism 770B constitutes an electric actuator. In Fig. 21, the same reference labels as in Fig. 19 are used for the components that function the same or substantially the same as the corresponding components shown in Fig. 19. In Fig. 21, some of the components are shown in sectional views as in Fig. 19.

As shown in Fig. 21, the boom swing mechanism 770B includes a flange wall 794. The flange wall 794 protrudes frontward from the front surface 607F of the casing 607 of the upper body 606. The flange wall 794 is fixedly attached to the front surface 607F of the casing 607. The flange wall 794 is shaped like a quadrangular plate, for example. The principal surfaces of the flange wall 794 face upward and downward.

The boom swing mechanism 770B includes a slide plate 796. The slide plate 796 is positioned on the upper surface of the flange wall 794. The slide plate 796 is shaped like an annular plate. The central axis of the slide plate 796 extends substantially in the Z direction. The outer surface of the slide plate 796 is processed to reduce frictional resistance.

The boom swing mechanism 770B includes a drive device 790. The drive device 790 is located higher than the slide plate 796. The drive device 790 includes an electric motor 791, and a speed reducer 792.

The electric motor 791 receives power fed from a battery, which is not shown. The electric motor 791 includes a housing 791A, and an output shaft 791B. The housing 791A is shaped like a circular tube. The inner diameter of the housing 791A is substantially equal to the inner diameter of the slide plate 796. The outer diameter of the housing 791A is substantially equal to the outer diameter of the slide plate 796. The central axis of the housing 791A substantially coincides with the central axis of the slide plate 796. The lower end surface of the housing 791A is fixedly attached to the top surface of slide plate 796. The output shaft 791B protrudes upward beyond the housing 791A. The output shaft 791B is shaped like a circular tube. The inner diameter of the output shaft 791B is slightly greater than that of housing 791A. The outer diameter of the output shaft 791B is less than that of the housing 791A. The central axis of the output shaft 791B substantially coincides with the central axis of the housing 791A. The output shaft 791B is configured to rotate relative to the housing 791A. The output shaft 791B rotates about its own central axis. The output shaft 791B can rotate in both of the forward and reverse directions upon power supply to the housing 791A.

The speed reducer 792 is positioned higher than the electric motor 791. The speed reducer 792 includes a reducer body 792A, an output member 792B, and a projecting portion 792C. The reducer body 792A is shaped like a circular tube. The inner diameter of the reducer body 792A is substantially equal to that of the housing 791A of the electric motor 791. The outer diameter of the reducer body 792A is substantially equal to that of the housing 791A of the electric motor 791. The central axis of the reducer body 792A substantially coincides with the central axis of the electric motor 791. The lower end surface of the reducer body 792A is secured onto the upper end surface of the housing 791A of the electric motor 791. The reducer body 792A is connected to the output shaft 791B of the electric motor 791. To the reducer body 792A, the torque of the output shaft 791B of the electric motor 791 is input. The reducer body 792A multiplies the torque of the output shaft 791B of the electric motor 791 with a predetermined ratio and outputs the resulting torque to the output member 792B.

The output member 792B is positioned higher than the reducer body 792A. The output member 792B constitutes the output member of the drive device 780. The output member 792B is shaped like a circular tube. The inner diameter of the output member 792B is substantially equal to the inner diameter of the reducer body 792A. The outer diameter of the output member 792B is less than that of the reducer body 792A. The central axis of the output member 792B substantially coincides with the central axis of the reducer body 792A. The output member 782B is configured to rotate relative to the reducer body 792A. The output member 792B rotates about its own central axis. The central axis of the output member 792B constitutes the rotation axis 790V of the drive device 790. Stated differently, the output member 792B and thus the drive device 790 output torque centered on the rotation axis 790V.

The projecting portion 792C protrudes from the outer peripheral surface of the reducer body 792A. The projecting portion 792C is provided on the upper portion of the reducer body 782A. The projecting portion 792C extends along the entire length of the reducer body 792A in the circumferential direction centered on the central axis of the reducer body 792A. In other words, the projecting portion 792C is annular.

The speed reducer 792 is configured as described above. The speed reducer 792 may be of, for example, an eccentric oscillation gear type or planetary gear type. The speed reducer 792 can be of any type as long as it is capable of multiplying and outputting the torque from the electric motor 791. The drive device 790 including the speed reducer 792 and electric motor 791 is positioned higher than the flange wall 794. At the same time, the drive device 790 is supported by the flange wall 794 from below.

The boom swing mechanism 770B includes a swing bracket 774. The swing bracket 774 is located higher than the output member 792B of the speed reducer 792. The swing bracket 774 is shaped like a plate. The swing bracket 774 may be contoured like a circle or polygon. The principal surfaces of the swing bracket 774 face upward and downward. The swing bracket 774 extends over the drive device 790 in the front-to-rear direction. The front end of the swing bracket 774 is positioned in front of the front end of the drive device 790. The rear portion of the lower surface of the swing bracket 774 faces the upper end surface of the output member 792B of the speed reducer 792. The lower surface of the swing bracket 774 is fixedly attached the output member 792B of the speed reducer 792. Accordingly, the swing bracket 774 rotates together with the output member 792B. This means that, upon application of the torque from the drive device 790, the swing bracket 774 rotates about the rotation axis 790V. The front portion of the upper surface of the swing bracket 774 is fixedly attached to the base wall 534 of the boom 530. The swing bracket 774 has a through hole 774H. The through hole 774H is provided in the rear portion of the swing bracket 774. The central axis of the through hole 774H substantially coincides with the rotation axis 790V of the drive device 790. The diameter of the through hole 774H is substantially equal to the inner diameter of the output member 792B of the speed reducer 792. As described above, the swing bracket 774 is located higher than the drive device 790. In other words, in the direction extending along the rotation axis 790V of the drive device 790, the swing bracket 774 is located on the opposite side to the flange wall 794 with the drive device 790 being sandwiched.

The boom swing mechanism 770B includes a stationary wall 795. The stationary wall 795 is located higher than the swing bracket 774. The stationary wall 795 is spaced away from the swing bracket 774. The stationary wall 795 protrudes frontward from the front surface 607F of the casing 607 of the upper body 606. The stationary wall 795 is fixedly attached to the front surface 607F of the casing 607. The stationary wall 795 is shaped like a quadrangular plate, for example. The principal surfaces of the stationary wall 795 face upward and downward.

In the boom swing mechanism 770B described above, the flange wall 794, slide plate 796, drive device 790, swing bracket 774, and stationary wall 795 are aligned in the direction extending along the rotation axis 790V of the drive device 790. These components are positioned on the rotation axis 790V of the drive device 790.

The boom swing mechanism 770B includes a pin 797. The pin 797 extends downward from the stationary wall 795. The pin 797 is shaped like a circular column. The diameter of the pin 797 is less than the diameter of the through hole 774H in the swing bracket 774. The central axis of the pin 797 extends in the Z direction. The upper end of the pin 797 extends through the stationary wall 795. The pin 797 is fixedly attached to the stationary wall 795. Stated differently, the pin 797 is configured not to move or rotate relative to the stationary wall 795. The lower end of the pin 797 extends through the flange wall 794. The pin 797 is fixedly attached to the flange wall 794. Stated differently, the pin 797 is configured not to move or rotate relative to the flange wall 794. The middle portion of the pin 797 in the direction extending along its own central axis passes through the through hole 774H in the swing bracket 774, the central hole 792H in the speed reducer 792, the central hole 791H in the electric motor 791, and the central hole in the slide plate 796. As a result, the drive device 790 is attached to the casing 607 by means of the pin 797, flange wall 794 and stationary wall 795. From a different perspective, the swing bracket 774 is connected to the casing 607 by means of the pin 797, drive device 790 and flange wall 794 such that the swing bracket 774 can rotate about the rotation axis 780V.

The boom swing mechanism 770B includes a retainer 784. The retainer 784 is positioned between the swing bracket 774 and the flange wall 794. The retainer 784 is spaced away from the front surface 607F of the casing 607. The retainer 784 is configured in the same manner as described with reference to Fig. 19. Specifically, the retainer 784 is shaped like a plate and has a housing hole 784A. The housing hole 784A is penetrated by the reducer body 792A of the drive device 790. The retainer 784 is secured onto the projecting portion 792C of the speed reducer 792 by means of bolts 789.

The boom swing mechanism 770B includes a buffer member 786. The buffer member 786 connects the rear end surface 784N of the retainer 784 and the front surface 607F of the casing 607. The buffer member 786 is configured in the same manner as described with reference to Fig. 19.

The boom swing mechanism 770B can use the electric motor 791 as the drive source to cause the boom 530 to swing to the left and right. Specifically, the swing bracket 774 rotates upon rotation of the output shaft 791B of the electric motor 791. Together with the swing bracket 774, the boom 530 swings to the left and right.

As described in connection with Fig. 19, the drive device 790 may be subject to the specific load including the collision load from the boom 530 and the reaction torque from the swing bracket 774. As is described above in relation with Fig. 19, the specific load can be released from the drive device 790 in the boom swing mechanism 770B. Specifically, in the boom swing mechanism 770B, the retainer 784 holding the drive device 790 is positioned away from the casing 607. In addition, there is a gap between the outer peripheral surface of the pin 797, which penetrates the drive device 790, and the inner peripheral surface of the drive device 790. Therefore, upon application of the specific load, the drive device 790 is allowed to move due to the retainer 784. Specifically, the retainer 784 allows the drive device 790 to rotate around the pin 797. On the other hand, this movement of the drive device 790 may gradually diminish due to the elastic force exerted by the buffer member 786. Accordingly, the same advantageous effects as described in the (5-1) section can be produced by the boom swing mechanism 770B.

The boom swing mechanism 770B may be configured in any other manners than described in the above in relation with the example shown in Fig. 21. The boom swing mechanism 770B can be configured in any manner as long as the pin 797 can hold the drive device 790 and swing bracket 774. For example, the electric motor 791 may be shaped in any other manners than a circular tube as long as it is shaped like a tube. Likewise, the speed reducer 792 may be shaped in any other manners than a circular tube as long as it is shaped like a tube. The relationship between the diameters of the electric motor 791 and speed reducer 792 is not limited to the example described above. It is only required that the inner diameters of the electric motor 791 and speed reducer 792 be determined to receive the pin 797. The drive device 790 may be embodied without the speed reducer 792. In this case, the output shaft 791B of the electric motor 791 may be treated as the output member of the drive device 790. The rotation axis of the torque output from the drive device 790 may be tilted relative to the Z direction. The stationary wall 795 and flange wall 794 may be fixedly attached to any other components than the front surface 607F of the casing 607. The stationary wall 795 and flange wall 794 are only required to be fixed somewhere on the vehicle body. The flange wall 794 may be shaped differently as long as it is configured to support the drive device 790. The pin 797 can be shaped in any other manners than a circular tube as long as it can extend through the drive device 790. Furthermore, the modification examples described in relation with Fig. 19 may be adaptively applied to the boom swing mechanism 770B. For example, the buffer member 786, retainer 784, and swing bracket 774 may be configured in any other manners than described in relation with Fig. 21. The boom swing mechanism 770B may be embodied without the slide plate 796 and stationary wall 795. The boom swing mechanism 770B may be embodied without the buffer member 786.

The slewing bearing 603 is not an essential component of the excavator 770. Specifically, the excavator 770 may be configured such that the upper body 606 cannot slew with respect to the lower body 602. The upper and lower bodies 606 and 602 may be integrated into a single structure. In this case, the upper and lower bodies 606 and 602 constitute the vehicle body. Stated differently, the vehicle body is not limited to the example described above in relation with the fifth embodiment.

The boom swing mechanisms 770A and 770B, which serve as an electric actuator, may be applied to any other construction machines than the excavator 770. In the foregoing embodiment, any two members may be fixedly attached in various manners. Any two components can be fixedly attached using, for example, bolting, welding, integral molding, and spline connection.

The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### <Sixth Embodiment>

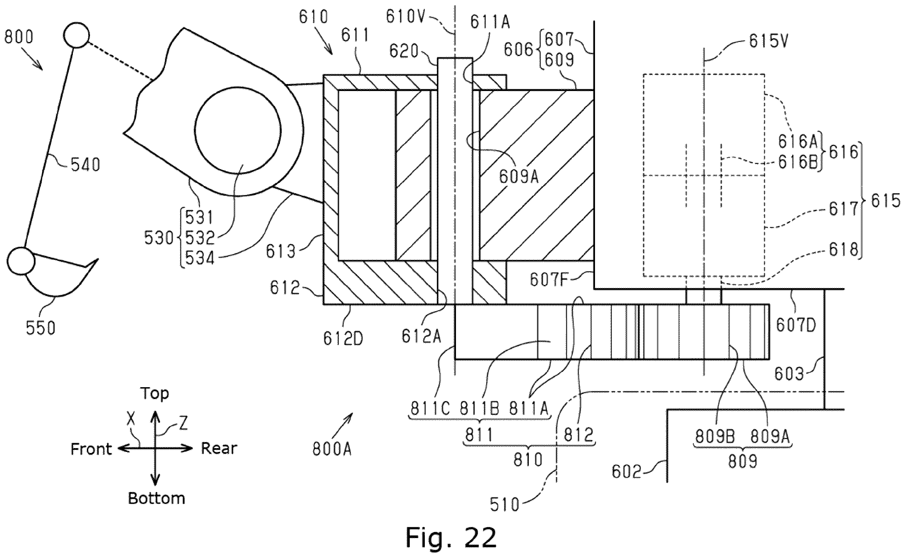

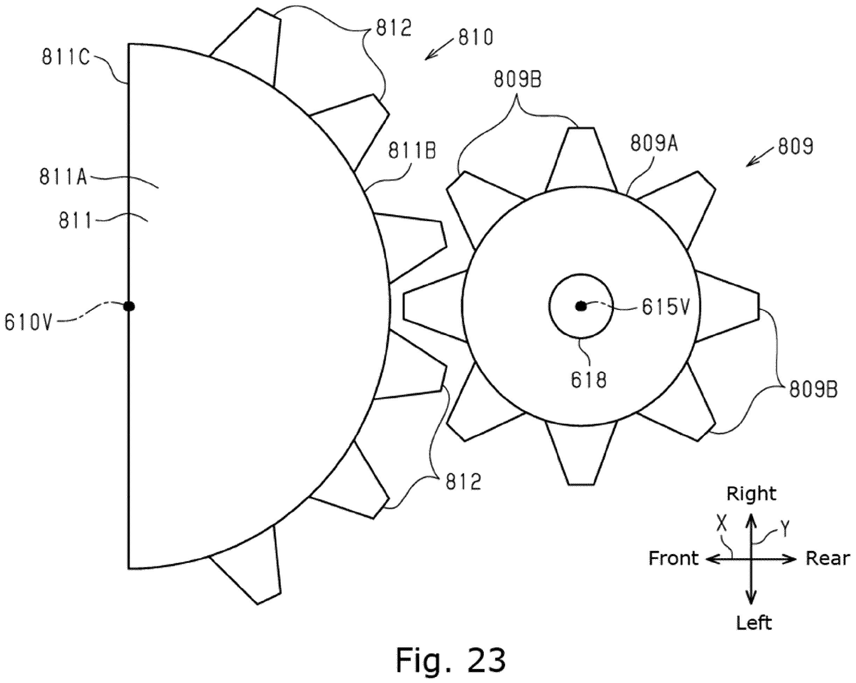

The following now describes a construction machine and an electric actuator for a construction machine relating to a sixth embodiment with reference to Figs. 22 and 23. The drawings may show the components in an enlarged manner for the sake of better intelligibility. The dimensions of the components and the ratios thereof may be different from those of the actual components, and among the drawings. In Figs. 22 and 23, the same reference labels as in Figs. 1 to 21 are used for the components that function the same or substantially the same as the corresponding components shown in Figs. 1 to 21. In Fig. 23, some of the components are shown in sectional views for the sake of convenience. Sharing some common features with the first to fifth embodiments, the sixth embodiment is described in the following but redundant description may be omitted or simplified.

As shown in Fig. 22, an excavator 800, which is a construction machine, includes a lower body 602, an upper body 606, which is a vehicle body, a pair of traveling units 510, and a slewing bearing 603. The lower body 602, traveling units 510, and slewing bearing 603 are configured in the same manner as in the second embodiment. These components are thus not described in the following. The upper body 606 is configured in the same manner as in the second embodiment. Specifically, the upper body 606 has a casing 607 shaped like a rectangular parallelepiped, an operator compartment located higher than the casing 607, and a support wall 609 protruding forward from the front surface 607F of the casing 607. The support wall 609 has a through hole 609A extending through it in substantially the Z direction. The central axis of the through hole 609A constitutes the slew axis 610V of the boom 530. Fig. 22 does not show the operator compartment. The upper body 606 is located on the opposite side to the ground surface with respect to the lower body 602. In the present embodiment, the up and down, left and right, and front and rear are defined in the same manner as in the second embodiment.

The excavator 800, which is an excavation machine, includes a boom 530, an arm 540, and a bucket 550. The boom 530, arm 540 and bucket 550 are positioned in front of the upper body 606. The boom 530, arm 540, and bucket 550 are configured in the same manner as in the second embodiment. These components are thus not described in the following.

### <Boom Swing Mechanism>

As shown in Fig. 22, the excavator 800 includes a boom swing mechanism 800A. The boom swing mechanism 800A is configured to cause the boom 530 to swing to the left and right relative to the upper body 606. The boom swing mechanism 800A constitutes an electric actuator.

The boom swing mechanism 800A includes a swing bracket 610 and a pin 620. The swing bracket 610 and pin 620 are basically configured in the same manner as in the second embodiment. Specifically, the swing bracket 610 has an upper wall 611, a lower wall 612 located lower than the upper wall 611, and a connecting wall 613 connecting together the upper and lower walls 611 and 612, as shown in Fig. 22. To the connecting wall 613, the base wall 534 of the boom 530 is fixedly attached. The swing bracket 610 relating to the sixth embodiment is different from that of the second embodiment in terms of the following. As for the swing bracket 610 relating to the sixth embodiment, in the Z direction, the lower wall 612 has a greater size than the upper wall 611. Furthermore, in the Z direction, the lower surface 612D of the lower wall 612 is located lower than the lower surface 607D of the casing 607 of the upper body 606. Except for these characteristics of the lower wall 612, the swing bracket 610 is configured in the same manner as in the second embodiment. Therefore, the swing bracket 610 is not described in further details.

The swing bracket 610 is connected to the support wall 609 of the upper body 606 by means of the pin 620. Specifically, the upper and lower walls 611 and 612 are penetrated by the pin 620, which also passes through the through hole 609A in the support wall 609. Fig. 22 shows the gap between the pin 620 and the through hole 609A in an exaggerated and enlarged manner. As in the second embodiment, the pin 620 is rotatable with respect to the through hole 609A. The pin 620 is supported by the through hole 609A such that it is rotatable about the central axis of the through hole 609A or the slew axis 610V. The pin 620 is, on the other hand, fixedly attached to the upper and lower walls 611 and 612. Therefore, as the pin 620 rotates about the slew axis 610V, the upper and lower walls 611 and 612 rotate together with the pin 620. The swing bracket 610 is thus rotatable about the slew axis 610V.

The boom swing mechanism 800A includes a drive device 615. The drive device 615 is generally housed in the casing 607. The drive device 615 is positioned in the front portion of the casing 607. The drive device 615 is configured in the same manner as in the second embodiment. Therefore, the drive device 615 is only briefly described in the following.

The drive device 615 includes an electric motor 616, a speed reducer 617, and a transmission shaft 618. The electric motor 616 includes a housing 616A, and an output shaft 616B. The housing 616A is fixedly mounted onto the inner wall of the casing 607. The output shaft 616B protrudes downward beyond the housing 616A. The output shaft 616B is shaped like a circular column. The central axis of the output shaft 616B extends substantially in the Z direction. The central axis of the output shaft 616B is substantially parallel to the slew axis 610V described in the above in relation with the swing bracket 610. The output shaft 616B is configured to rotate relative to the housing 616A.

The speed reducer 617 is positioned lower than the electric motor 616. The speed reducer 617 is fixedly mounted onto the inner wall of the casing 607. The speed reducer 617 receives the torque of the output shaft 616B of the electric motor 616. The speed reducer 617 multiplies the torque of the output shaft 616B of the electric motor 616 with a predetermined ratio and outputs the resulting torque. The speed reducer 617 may be of, for example, an eccentric oscillation gear type or planetary gear type. The speed reducer 617 can be of any type as long as it is capable of multiplying and outputting the torque from the electric motor 616.

The transmission shaft 618 is positioned lower than the speed reducer 617. The transmission shaft 618 partly protrudes downward beyond the bottom surface 607D of the casing 607. The transmission shaft 618 is shaped like a circular column. The central axis of the transmission shaft 618 substantially coincides with the central axis of the output shaft 616B of the electric motor 616. The transmission shaft 618 rotates on its own central axis upon application of the torque from the speed reducer 617. Stated differently, with the central axis of the transmission shaft 618 being referred to as a rotation axis 615V, the transmission shaft 618 and thus the drive device 615 output torque centered on the rotation axis 615V.

The boom swing mechanism 800A includes a pinion gear 809. The pinion gear 809 is mounted onto the transmission shaft 618. As shown in Fig. 23, the pinion gear 809 has a body 809A and a plurality of teeth 809B. The body 809A is shaped like a circular tube. The central axis of the body 809A substantially coincides with the rotation axis 615V. The body 809A has a hole at the center, which receives the transmission shaft 618. The body 809A is fixed onto the transmission shaft 618. The body 809A rotates together with the transmission shaft 618. In other words, upon application of the torque from the drive device 615, the body 809A rotates about the rotation axis 615V. The teeth 809B protrude from the outer peripheral surface of the body 809A. The teeth 809B are arranged at equal intervals in the circumferential direction centered on the rotation axis 615V. As Fig. 23 only schematically shows the pinion gear 809, the number and shape of the teeth 809B shown in Fig. 23 may or may not reflect their accurate number or shape. The same applies to a gear wall 810, which will be described below.

### <Gear Wall>

As shown in Fig. 22, the boom swing mechanism 800A has a gear wall 810. The gear wall 810 is located lower than the lower wall 612 of the swing bracket 610. The gear wall 810 is positioned in front of the pinion gear 809. As shown in Fig. 23, the gear wall 810 has a body 811 and a plurality of teeth 812. The body 811 is shaped like a plate. The outer surfaces of the body 811 that have the largest area are referred to as the principal surfaces 811A. As shown in Fig. 22, the two principal surfaces 811A face upward and downward. The upper one of the two principal surfaces 811A is fixedly attached to the lower surface 612D of the lower wall 612. As shown in Fig. 23, the principal surfaces 811A are shaped like a semicircle. The central axis of the circular arc defined by the semicircular principal surfaces 811A substantially coincides with the slew axis 610V. The thickness of the body 811 is demarcated by an arc surface 811B and a flat surface 811C. The arc surface 811B extends along the circular arc portion of the principal surfaces 811A. In other words, the arc surface 811B is shaped like a circular arc centered on the slew axis 610V. The arc surface 811B extends over approximately 180 degrees in the circumferential direction centered on the slew axis 610V. The diameter of the circular arc defined by the arc surface 811B is greater than the outer diameter of the body 809A of the pinion gear 809. The flat surface 811C extends along the straight portion of the semicircular principal surfaces 811A. The flat surface 811C connects the two endpoints of the circular arc defined by the arc surface 811B. In plan view in the direction extending along the slew axis 610V, the flat surface 811C linearly extends. As shown in Fig. 22, with the gear wall 810 being fixedly attached to the lower wall 612, the flat surface 811C constitutes the front-most portion of the gear wall 810. In the X direction, the flat surface 811C is located at substantially the same position as the slew axis 610V. The arc surface 811B extends rearward from the flat surface 811C. The arc surface 811B faces the pinion gear 809.

The teeth 812 protrude from the arc surface 811B. The teeth 812 are arranged at equal intervals in the circumferential direction centered on the slew axis 610V. Some of the teeth 812 are engaged with some of the teeth 809B of the pinion gear 809. There is a gap, called backlash, between the teeth 812 of the gear wall 810 and the teeth 809B of the pinion gear 809.

### <How Sixth Embodiment Works>

In the boom swing mechanism 800A, upon rotation of the output shaft 616B of the electric motor 616, the pinion gear 809 accordingly rotates. The rotation of the pinion gear 809 is then transmitted to the gear wall 810 due to the engagement between the teeth of the pinion gear 809 and the teeth of the gear wall 810. The gear wall 810 then rotates about the slew axis 610V. As a result, the swing bracket 610, which is integrally combined with the gear wall 810, and thus the boom 530 rotate. The boom 530 can rotate leftward or rightward, which is determined by the direction of the rotation of the output shaft 616B of the electric motor 616.

### <Advantageous Effects of Sixth Embodiment>

(6-1) As described above in the "How Sixth Embodiment Works" section, the excavator 800 relating to the sixth embodiment can use the electric motor 616 as the drive source to cause the boom 530 to swing to the left and right.

The diameter of the arc surface 811B of the gear wall 810 is greater than the outer diameter of the body 809A of the pinion gear 809. Due to this relationship between the diameters, the gear wall 810 can multiply the torque of the pinion gear 809 and transmits the resulting torque to the swing bracket 610. In other words, the gear wall 810 and pinion gear 809 relating to the present embodiment constitute a kind of speed reducing mechanism. If the gear wall 810 and pinion gear 809 can form a speed reducing mechanism, the speed reducer 617 of the drive device 615 is allowed to have a limited capability of multiplying the torque. If the limited torque multiplication capability is acceptable, the components of the speed reducer 617 can avoid having an increased size. In other words, the sixth embodiment can prevent an increase in overall size of the speed reducer 617 and thus the overall size of the drive device 615.

As described in the first embodiment, an external load may be applied to the boom 530 when the bucket 550 collides with the object to be excavated. This load is hereinafter referred to as the collision load. If the boom swing mechanism 800A relating to the present embodiment is employed, the collision load can be transmitted to the gear wall 810 via the swing bracket 610. The collision load is hardly transmitted to the pinion gear 809 and thus to the drive device 615 since it can be released through the gap between the gear wall 810 and the pinion gear 809. This means that the collision load acting on the gear wall 810 can be prevented from reaching the speed reducer 617 and electric motor 616 in the present embodiment. Therefore, the present embodiment can produce the same effect as the other embodiments. It is no longer necessary to configure the speed reducer 617 and electric motor 616 such that they can withstand the collision load. This can also result in preventing an increase in size of the drive device 615, as described above.

(6-2) In the present embodiment, the circular arc defined by the arc surface 811B of the gear wall 810 has an angle of approximately 180 degrees. In other words, the gear wall 810 is shaped like a semicircle. As the gear wall 810 is shaped like a semicircle, the gear wall 810 can have a smaller size than when the gear wall 810 is shaped like a perfect circle. In this case, the gear wall 810 occupies a reduced space. To provide the gear wall 810, the other components may be required to have a layout change. According to the present embodiment, such requirement is unlikely.

### <Modification Examples of Sixth Embodiment>

The sixth embodiment can be modified as described below. The first to sixth embodiments and the following modifications can be combined with each other to such an extent that they are technically consistent with each other.

The gear wall 810 may be configured in any other manners than described in the above in relation with the embodiment. The gear wall 810 can be configured in any manner as long as it has the arc-shaped arc surface 811B centered on the slew axis 610V, and the teeth 812 protruding from the arc surface 811B. In addition, the gear wall 810 can be configured in any manner as long as the diameter of the circular arc of the arc surface 811B is greater than the outer diameter of the pinion gear 809. For example, the circular arc defined by the arc surface 811B of the gear wall 810 may measure any other degrees than the example mentioned in relation with the foregoing embodiment. The gear wall 810 can still effectively have a small size as described above in the (6-2) section as long as the circular arc defined by the arc surface 811B measures 165 degrees to 195 degrees, and the endpoints of the circular arc of the arc surface 811B are connected by the linearly extending flat surface 811C. The circular arc of the arc surface 811B may measure any other degrees as required. It is not essential that the linearly extending flat surface 811C connect the two end points of the circular arc of the arc surface 811B. The central axis of the circular arc of the arc surface 811B of the gear wall 810 does not need to coincide with the slew axis 610V as long as the swing bracket 610 can rotate through the engagement between the gear wall 810 and the pinion gear 809. In this case, the central axis of the circular arc of the arc surface 811B is only required to be parallel to the rotation axis 615V of the drive device 615.

The gear wall 810 may be positioned differently than described in the above in relation with the embodiment. The gear wall 810 can be positioned anywhere as long as the teeth 812 of the gear wall 810 face the teeth 809B of the pinion gear 809. The gear wall 810 may be positioned in any manner as long as it can rotate about the slew axis 610V. For example, the pin 620 may extend downward beyond the lower wall 612 of the swing bracket 610, and the gear wall 810 may be fixedly attached to the pin 620 at a distance in the Z direction from the lower wall 612.

The swing bracket 610 may be configured, positioned, and connected to the vehicle body in any other manners than described in the above in relation with the embodiment. The swing bracket 610 may be connected to the vehicle body in any manner as long as it is fixedly attached to the boom 530 and can rotate about the slew axis 610V. The vehicle body, which supports the swing bracket 610, may be configured in any other manners than described in the above in relation with the embodiment. For example, the following configuration shown in Fig. 24 may be alternatively employed. The vehicle body is not limited to the casing 607, but can be any part of the upper body 606. Furthermore, the vehicle body is not limited to the upper body 606, as described in the following modifications.

The slewing bearing 603 is not an essential component of the excavator 800. Specifically, the excavator 800 may be configured such that the upper body 606 cannot slew with respect to the lower body 602. The upper and lower bodies 606 and 602 may be integrated into a single structure. In this case, the upper and lower bodies 606 and 602 constitute the vehicle body. Stated differently, the vehicle body is not limited to the example described above in relation with the sixth embodiment.

The boom 530 may be fixed to any other parts of the swing bracket 610 than described in the above in relation with the embodiment. The boom 530 is only required to be fixed to somewhere on the swing bracket 610.

The pinion gear 809 may be positioned differently than described in the above in relation with the embodiment. The position of the pinion gear 809 can depend on the configuration and position of the drive device 615. The pinion gear 809 may be provided in any manner as long as it can rotate about the rotation axis of the drive device 615 upon application of the torque from the drive device 615.

The drive device 615 may be configured in any other manners than described in the above in relation with the embodiment. The drive device 615 may be configured in any manner as long as it includes the electric motor 616 and can output torque centered on the rotation axis. For example, the drive device 615 may be embodied without the speed reducer 617 and transmission shaft 618. In this case, the pinion gear 809 may be directly attached onto the output shaft 616B of the electric motor 616. The drive device 615 may be configured such that the central axis of the output shaft 616B of the electric motor 616 is positioned differently than the rotation axis of the torque that is output from the drive device 615 to a component external to the drive device 615. This may be possible if the drive device 615 is provided with a mechanism for changing the direction of rotation of the electric motor 616. The rotation axis of the torque output from the drive device 615 is only required to extend in the top-to-bottom direction of the vehicle body as a whole. For example, it may be tilted relative to the Z direction within a range of approximately 15 degrees, for example.

The drive device 615 may be positioned in any other manners than described in the above in relation with the embodiment. The drive device 615 is only required to be fixedly mounted onto somewhere on the casing 607. The drive device 615 does not even need to be mounted on the casing 607. The drive device 615 is only required to be fixedly mounted onto somewhere on the vehicle body. Furthermore, the drive device 615 may be fixedly attached to the swing bracket 610 while the gear wall 810 the vehicle body as long as the swing bracket 610 can rotate using the drive device 615 as the power source and through the engagement between the pinion gear 809 and the gear wall 810. This modification will be described in the following with reference to Fig. 24. Some of the components shown in Fig. 24 function in the same or substantially the same manner as the corresponding components shown in Figs. 22 and 23. Those components are labeled with the same reference numerals as used in Figs. 22 and 23. In Fig. 24, some of the components are shown in sectional views as in Fig. 22.

The following describes the excavator 800 shown in Fig. 24 with a main focus on its differences from the excavator 800 shown in Fig. 23. In the excavator 800, the upper body 606 has a first support wall 805 and a second support wall 806, in place of the support wall 609. The first and second support walls 805 and 806 protrude frontward from the front surface 607F of the casing 607. The first and second support walls 805 and 806 are fixed to the front surface 607F of the casing 607. The first and second support walls 805 and 806 extend over the Y-direction-wise middle of the casing 607. The first and second support walls 805 and 806 are shaped like a plate having a thickness in the top-to-bottom direction. The first and second support walls 805 and 806 are shaped like a quadrangle, for example. The first and second support walls 805 and 806 have substantially the same sizes. The first support wall 805 is positioned higher than the second support wall 806. The bottom surface of the first support wall 805 faces the top surface of the second support wall 806.

The upper body 606 has a third support wall 807. The third support wall 807 is positioned higher than the first support wall 805. The third support wall 807 protrudes frontward from the front surface 607F of the casing 607. The third support wall 807 is fixed to the front surface 607F of the casing 607. For example, the third support wall 807 is shaped like a rectangular parallelepiped that is long in the Y direction. The third support wall 807 extends over the Y-direction-wise middle of the casing 607. The front end of the third support wall 807 is behind the front end of the first and second support walls 805 and 806.

The excavator 800 includes a boom swing mechanism 800B serving as an electric actuator. The boom swing mechanism 800B includes a swing bracket 610 and a pin 620. The swing bracket 610 and pin 620 are configured basically in the same manner as described above in relation with Fig. 22. However, the upper and lower walls 611 and 612 of the swing bracket 610 have different sizes from each other. The lower wall 612 of the swing bracket 610 is positioned between first and second support walls 805 and 806, which are mounted onto the upper body 606. The lower wall 612 has a through hole 612A, which is positioned such that the front end of the third support wall 807 is positioned on the central axis of the through hole 612A. The diameter of the through hole 612A in the lower wall 612 is greater than the diameter of the pin 620. In the boom swing mechanism 800B, the pin 620 passes through the first and second support walls 805 and 806, in addition to extending through the through hole 612A. The pin 620 is fixedly attached to the first and second support walls 805 and 806. On the other hand, there is a gap between the through hole 612A and the pin 620 since the diameter of the through hole 612A and the diameter of the pin 620 are sized as described above. This means that the pin 620 is rotatable relative to the lower wall 612. In other words, the lower wall 612 can rotate about the pin 620. The central axis of the pin 620 constitutes the slew axis 610V, about which the lower wall 612 and thus the swing bracket 610 rotate. The slew axis 610V extends substantially in the Z direction. Fig. 24 shows the gap between the pin 620 and the through hole 612A in the lower wall 612 in an exaggerated and enlarged manner. In the boom swing mechanism 800B, the central axis of the through hole 611A in the upper wall 611 is not aligned with the central axis of the through hole 612A in the lower wall 612. Specifically, the central axis of the through hole 611A in the upper wall 611 is positioned closer to the connecting wall 613 than the central axis of the through hole 612A in the lower wall 612.

The boom swing mechanism 800B includes a drive device 615. The drive device 615 is largely located higher than the upper wall 611 of the swing bracket 610. The drive device 615 is configured in the same manner as described with reference to Fig. 22. Specifically, the drive device 615 includes an electric motor 616, a speed reducer 617, and a transmission shaft 618. The electric motor 616, speed reducer 617 and transmission shaft 618 are arranged in this order with the electric motor 616 being positioned the highest. The central axis of the output shaft 616B of the electric motor 616 substantially coincides with the central axis of the transmission shaft 618. The central axis of the transmission shaft 618 constitutes the rotation axis 615V of the drive device 615. The rotation axis 615V of the drive device 615 is substantially parallel to the slew axis 610V. The drive device 615 is fixedly attached to the upper wall 611 of the swing bracket 610. Specifically, the speed reducer 617 of the drive device 615 is fixed to the top surface of the upper wall 611. The transmission shaft 618 extends through the through hole 611A in the upper wall 611. The lower portion of the transmission shaft 618 protrudes downward beyond the bottom surface of the upper wall 611. As described above, the central axis of the through hole 611A in the upper wall 611 is not aligned with the central axis of the through hole 612A in the lower wall 612. Due to this fact, the rotation axis 615V of the drive device 615 is not aligned with the slew axis 610V.

The boom swing mechanism 800B includes a pinion gear 809. The pinion gear 809 is configured in the same manner as described with reference to Fig. 22. Specifically, the pinion gear 809 has a body 809A shaped like a circular tube, and a plurality of teeth 809B protruding from the outer peripheral surface of the body 809A. The pinion gear 809 is located lower than the upper wall 611 of the swing bracket 610. The body 809A of the pinion gear 809 has a hole at the center, which receives therein the portion of the transmission shaft 618 that protrudes beyond the lower surface of the upper wall 611. The body 809A of the pinion gear 809 is fixed onto the transmission shaft 618. Thus, the pinion gear 809 rotates together with the transmission shaft 618.

The boom swing mechanism 800B includes a gear wall 810. The gear wall 810 is configured in the same manner as described with reference to Figs. 22 and 23. Specifically, as shown in Fig. 23, the gear wall 810 has an arc surface 811B, a flat surface 811C connecting the two endpoints of the circular arc defined by the arc surface 811B, and a plurality of teeth 812 protruding from the arc surface 811B. As shown in Fig. 24, the gear wall 810 is positioned between the pinion gear 809 and the third support wall 807 of the upper body 606. The gear wall 810 is fixedly attached to the front end of the third support wall 807. Specifically, the flat surface 811C of the gear wall 810 is fixedly attached to the front end of the third support wall 807. The arc surface 811B of the gear wall 810 extends frontward from the flat surface 811C. The central axis of the circular arc of the arc surface 811B substantially coincides with the slew axis 610V. The arc surface 811B faces the pinion gear 809. Some of the teeth 812 protruding from the arc surface 811B are engaged with some of the teeth 809B of the pinion gear 809. There is a gap, called backlash, between the teeth 812 of the gear wall 810 and the teeth 809B of the pinion gear 809. The gear wall 810 may be directly fixed to the front surface 607F of the casing 607 without the third support wall 807. In this case, the shape of the gear wall 810 may be adaptively changed such that the central axis of the circular arc of the arc surface 811B substantially coincides with the slew axis 610V. For example, the circular arc of the arc surface 811B may measure different degrees, or the two ends of the circular arc of the arc surface 811B may be connected by a part having a different shape.

The following describes how the boom swing mechanism 800B works. Upon rotation of the output shaft 616B of the electric motor 616, the pinion gear 809 accordingly rotates on its own axis about the rotation axis 615V of the drive device 615. As a result, by engaging with the teeth 812 of the gear wall 810, the pinion gear 809 orbits around the arc surface 811B of the gear wall 810 which is centered on the slew axis 610V. As a result of the pinion gear 809 orbiting, the swing bracket 610 rotates on its own axis about the slew axis 610V. The boom 530 resultantly rotates.

In the boom swing mechanism 800B, the gear wall 810 and pinion gear 809 constitute a speed reducing mechanism using the relationship between the diameter of the circular arc of the arc surface 811B of the gear wall 810 and the outer diameter of the pinion gear 809. Accordingly, the same advantageous effects as described in the (6-1) section can be produced by the boom swing mechanism 800B. The boom swing mechanism 800B can produce the same advantageous effects as described in the (6-2) section since the gear wall 810 is semicircular.

The boom swing mechanisms 800A and 800B, which serve as an electric actuator, may be applied to any other construction machines than the excavator 800. In the foregoing embodiment, any two members may be fixedly attached in various manners. Any two components can be fixedly attached using, for example, bolting, welding, integral molding, and spline connection.

The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### <Seventh Embodiment>

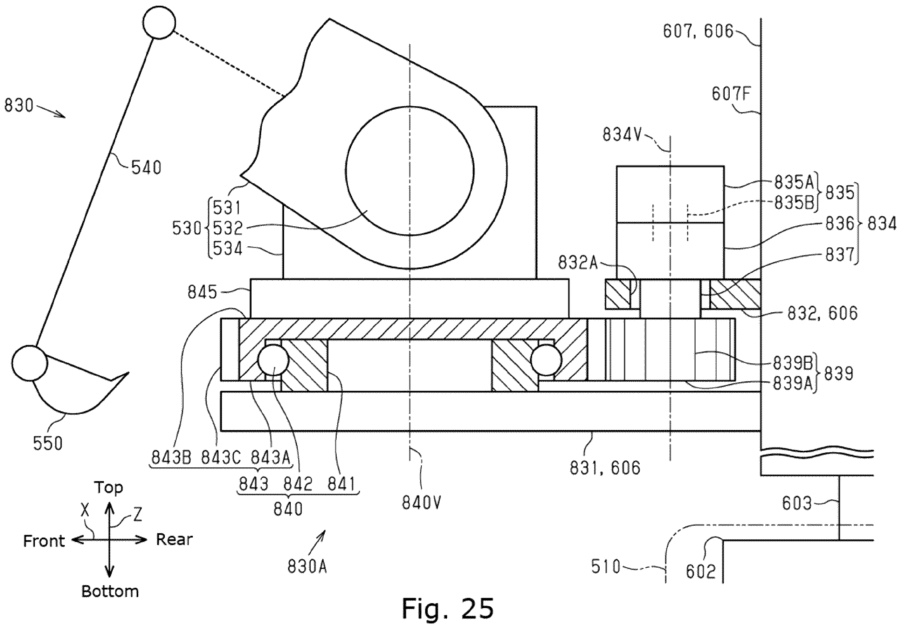

The following now describes a construction machine and an electric actuator for a construction machine relating to a seventh embodiment with reference to Fig. 25. The drawings may show the components in an enlarged manner for the sake of better intelligibility. The dimensions of the components and the ratios thereof may be different from those of the actual components, and among the drawings. In Fig. 25, the same reference labels as in Figs. 1 to 24 are used for the components that function the same or substantially the same as the corresponding components shown in Figs. 1 to 24. Sharing some common features with the first to sixth embodiments, the seventh embodiment is described in the following but redundant description may be omitted or simplified.

### <Overall Configuration>

As shown in Fig. 25, an excavator 830, which is a construction machine, includes a lower body 602, an upper body 606, which is a vehicle body, a pair of traveling units 510, and a slewing bearing 603. The lower body 602, traveling units 510, and slewing bearing 603 are configured in the same manner as in the second embodiment. These components are thus not described in the following. The upper body 606 will be described below. The upper body 606 is located on the opposite side to the ground surface with respect to the lower body 602. In the present embodiment, the up and down, left and right, and front and rear are defined in the same manner as in the second embodiment. In Fig. 25, some of the components of the excavator 830 are shown in sectional views for the sake of convenience.

The upper body 606 has a casing 607, a first support wall 831, a second support wall 832, and an operator compartment. Fig. 25 does not show the operator compartment. The casing 607 and operator compartment are configured in the same manner as in the second embodiment.

The first support wall 831 protrudes frontward from the front surface 607F of the casing 607. The first support wall 831 is fixed to the front surface 607F of the casing 607. The first support wall 831 is shaped like a quadrangular plate, for example. The principal surfaces of the first support wall 831 face upward and downward. The principal surfaces of a plate-shaped object are the surfaces with the largest area. The first support wall 831 extends over the Y-direction-wise middle portion of the casing 607.

The second support wall 832 is positioned higher than the first support wall 831. The second support wall 832 is spaced away from the first support wall 831 in the Z direction. The second support wall 832 protrudes frontward from the front surface 607F of the casing 607. The second support wall 832 is fixed to the front surface 607F of the casing 607. The second support wall 832 is shaped like a quadrangular plate, for example. The principal surfaces of the second support wall 832 face upward and downward. The vertical and horizontal dimensions of the principal surfaces of the second support wall 832 are less than that of the principal surfaces of the first support wall 831. Due to this relationship, the front end of the second support wall 832 is behind the front end of the first support wall 831. The second support wall 832 has a through hole 832A. The through hole 832A penetrates the second support wall 832 in the top-to-bottom direction. The central axis of the through hole 832A extends substantially in the Z direction.

The excavator 830, which is an excavation machine, includes a boom 530, an arm 540, and a bucket 550. The boom 530, arm 540 and bucket 550 are positioned in front of the casing 607 of the upper body 606. The boom 530, arm 540, and bucket 550 are configured in the same manner as in the second embodiment. These components are thus not described in the following.

### <Boom Swing Mechanism>

The excavator 830 includes a boom swing mechanism 830A. The boom swing mechanism 830A is configured to cause the boom 530 to swing to the left and right relative to the upper body 606. The boom swing mechanism 830A constitutes an electric actuator.

The boom swing mechanism 830A includes a bearing 840. The bearing 840 includes an inner race 841, rolling elements 842, and an outer race 843. The bearing 840 is positioned higher than the first support wall 831 of the upper body 606.

The inner race 841 has an annular shape. The central axis of the inner race 841 extends substantially in the Z direction. The inner race 841 has end surfaces facing each other in the direction extending along the central axis, and a lower one of the end surfaces faces the upper surface of the first support wall 831. The lower end surface of the inner race 841 is fixedly attached to the upper surface of the first support wall 831. As a result, the inner race 841 is attached to the first support wall 831, which is part of the vehicle body.

The outer race 843 has a body 843A, an upper wall 843B, and a plurality of teeth 843C. The body 843A is annular. The central axis of the body 843A substantially coincides with the central axis of the inner race 841. In other words, the body 843A and inner race 841 are coaxially arranged. Hereafter, the central axis of the body 843A is referred to as a slew axis 840V. In terms of the direction extending along the slew axis 840V, the body 843A has a smaller dimension than the inner race 841. The inner diameter of the body 843A is greater than the outer diameter of the inner race 841. In the radial direction centered on the slew axis 840V (hereinafter simply referred to as the radial direction), the body 843A is located outside the inner race 841. The body 843A radially externally surrounds the inner race 841.

The upper wall 843B is positioned higher than the body 843A. The upper wall 843B is shaped like a circular plate. The center of the circular upper wall 843B is positioned on the slew axis 840V. The diameter of the upper wall 843B is substantially equal to the outer diameter of the body 843A. The upper wall 843B is connected to one of the end surfaces of the body 843A facing each other in the direction extending along the slew axis 840V, or the upper end surface of the body 843A. The upper wall 843B closes the opening demarcated by the inner edge of the upper end surface of the body 843A. The portion of the lower surface of the upper wall 843B that is located radially inside the body 843A faces the upper end surface of the inner race 841. The lower surface of the upper wall 843B is in sliding contact with the upper end surface of the inner race 841. The lower surface of the upper wall 843B may be spaced away from the upper end surface of the inner race 841. In the direction extending along the slew axis 840V, the body 843A and inner race 841 are sized as described above, so that the lower end surface of the body 843A is spaced away from the upper surface of the first support wall 831.

The teeth 843C protrude outwardly in the radial direction from the outer peripheral surface of the body 843A. The teeth 843C are arranged at equal intervals in the circumferential direction centered on the slew axis 840V (hereinafter simply referred to as the circumferential direction).

The rolling elements 842 are spheres. The rolling elements 842 are interposed between the inner race 841 and the body 843A of the outer race 843. The rolling elements 842 are arranged at equal intervals in the circumferential direction. The rolling elements 842 support the inner and outer races 841 and 843 such that they can rotate relative to each other. In other words, the rolling elements 842 guide the rotation of the outer race 843 relative to the inner race 841. As the rolling elements 842 are interposed between the inner and outer races 841 and 843, the outer race 843 can rotate about the slew axis 840V. The bearing 840 is entirely positioned in front of the front end of the second support wall 832.

The boom swing mechanism 830A includes a swing bracket 845. The swing bracket 845 is located higher than the outer race 843. The swing bracket 845 is shaped like a quadrangular plate, for example. The principal surfaces of the swing bracket 845 face upward and downward. One of the two principal surfaces of the swing bracket 845, specifically, the lower surface faces the upper surface of the upper wall 843B of the outer race 843. The lower surface of the swing bracket 845 is fixedly attached to the upper surface of the upper wall 843B of the outer race 843. Accordingly, upon rotation of the outer race 843, the swing bracket 845 rotates together with the outer race 843. The swing bracket 845 is thus rotatable about the slew axis 840V. The base wall 534 of the boom 530 is fixed to the upper surface of the swing bracket 845. As the swing bracket 845 is fixedly attached to the outer race 843, the swing bracket 845 is connected to the first support wall 831 or the vehicle body via the bearing 840 such that the swing bracket 645 can rotate about the slew axis 840V.

The boom swing mechanism 830A includes a drive device 834. In the X direction, the drive device 834 is positioned between the front surface 607F of the casing 607 and the bearing 840. The drive device 834 includes an electric motor 835, a speed reducer 836, and a transmission shaft 837.

The electric motor 835 operates upon receiving electricity fed from a battery, which is not shown. The electric motor 835 includes a housing 835A, and an output shaft 835B. The housing 835A is positioned higher than the second support wall 832 of the upper body 606. The housing 835A is contoured like a circular column. The central axis of the housing 835A extends substantially in the Z direction. The output shaft 835B protrudes downward beyond the housing 835A. The output shaft 835B is shaped like a circular column. The central axis of the output shaft 835B substantially coincides with the central axis of the housing 835A. The output shaft 835B is configured to rotate relative to the housing 835A. The output shaft 835B rotates about its own central axis. The output shaft 835B can rotate in both of the forward and reverse directions upon power supply to the housing 835A.

The speed reducer 836 is positioned lower than the electric motor 835. The speed reducer 836 is contoured like a circular column. The central axis of the speed reducer 836 extends substantially in the Z direction. The central axis of the speed reducer 836 substantially coincides with the central axis of the housing 835A of the electric motor 835. The upper end surface of the speed reducer 836 is fixedly attached to the lower end surface of the housing 835A of the electric motor 835. The lower end surface of the speed reducer 836 is fixedly attached to the upper surface of the second support wall 832. Stated differently, the speed reducer 836 is attached to the second support wall 832, which is part of the vehicle body. The speed reducer 836 receives therein the portion of the output shaft 835B of the electric motor 835 that protrudes beyond the housing 835A. The speed reducer 836 thus receives the torque of the output shaft 835B of the electric motor 835. The speed reducer 836 multiplies the torque output from the output shaft 835B of the electric motor 835 with a predetermined ratio and outputs the resulting torque to the transmission shaft 837. The speed reducer 836 may be of, for example, an eccentric oscillation gear type or planetary gear type. The speed reducer 836 can be of any type as long as it is capable of multiplying and outputting the torque from the electric motor 835.

The transmission shaft 837 protrudes downward beyond the speed reducer 836. The transmission shaft 837 is shaped like a circular column. The central axis of the transmission shaft 837 extends substantially in the Z direction. The central axis of the transmission shaft 837 substantially coincides with the central axis of the speed reducer 836. The transmission shaft 837 is placed inside the through hole 832A in the second support wall 832. The bottom end of the transmission shaft 837 is situated lower than the bottom surface of the second support wall 832. The diameter of the transmission shaft 837 is less than that of the through hole 832A in the second support wall 832. The upper portion of the transmission shaft 837 is connected to the speed reducer 836. The transmission shaft 837 receives the torque output from the speed reducer 836. The transmission shaft 837 rotates on its own central axis upon application of the torque from the speed reducer 836. Stated differently, with the central axis of the transmission shaft 837 being referred to as a rotation axis 834V, the transmission shaft 837 and thus the drive device 834 output torque centered on the rotation axis 834V. The rotation axis 834V is substantially parallel to the slew axis 840V.

The boom swing mechanism 830A includes a pinion gear 839. The pinion gear 839 is mounted onto the transmission shaft 837. In the X direction, the pinion gear 839 is positioned between the front surface 607F of the casing 607 and the outer race 843. In the Z direction, the pinion gear 839 is disposed at substantially the same position as the outer race 843. The pinion gear 839 faces the outer peripheral surface of the body 843A of the outer race 843.

The pinion gear 839 has a body 839A and a plurality of teeth 839B. The body 839A is shaped like a circular tube. The outer diameter of the body 839A is less than that of the body 843A of the outer race 843. The central axis of the body 839A substantially coincides with the rotation axis 834V. The body 839A has a hole at the center, which receives the transmission shaft 837. The body 839A is fixed onto the transmission shaft 837. The body 839A rotates together with the transmission shaft 837. In other words, upon application of the torque from the drive device 834, the body 839A rotates about the rotation axis 834V. The teeth 839B protrude from the outer peripheral surface of the body 839A. The teeth 839B are arranged at equal intervals in the circumferential direction centered on the rotation axis 834V. Some of the teeth 839B are engaged with some of the teeth 843C of the outer race 843. There is a gap, called backlash, between the teeth 839B of the pinion gear 839 and the teeth 843C of the outer race 843.

### <How Seventh Embodiment Works>

In the boom swing mechanism 830A, upon rotation of the output shaft 835B of the electric motor 835, the pinion gear 839 accordingly rotates. The rotation of the pinion gear 839 is then transmitted to the outer race 843 due to the engagement between the teeth of the pinion gear 839 and the teeth of the outer race 843. The outer race 843 then rotates about the slew axis 840V. As a result, the swing bracket 845, which is integrally combined with the outer race 843, and thus the boom 530 rotate. The boom 530 can rotate leftward or rightward, which is determined by the direction of the rotation of the output shaft 835B of the electric motor 835.

### <Advantageous Effects of Seventh Embodiment>

As described above in the "How Seventh Embodiment Works" section, the excavator 830 relating to the seventh embodiment can use the electric motor 835 as the drive source to cause the boom 530 to swing to the left and right.

The outer diameter of the body 843A of the outer race 843 is greater than that of the body 839A of the pinion gear 839. Due to this relationship between the diameters, the outer race 843 can multiply the torque of the pinion gear 839 and transmits the resulting torque to the swing bracket 845. In other words, the outer race 843 and pinion gear 839 relating to the present embodiment constitute a kind of speed reducing mechanism. If the outer race 843 and pinion gear 839 form a speed reducing mechanism, the speed reducer 836 of the drive device 834 is allowed to have a limited capability of multiplying the torque. If the limited torque multiplication capability is acceptable, the components of the speed reducer 836 can avoid having an increased size. In other words, the seventh embodiment can prevent an increase in overall size of the speed reducer 836 and thus the overall size of the drive device 834.

As described in the first embodiment, an external load may be applied to the boom 530 when the bucket 550 collides with the object to be excavated. This load is hereinafter referred to as the collision load. If the boom swing mechanism 830A relating to the present embodiment is employed, the collision load can be transmitted to the outer race 843 via the swing bracket 845. The collision load can be then transmitted primarily to the first support wall 831 via the rolling elements 842 and thus via the inner race 841. After being transmitted to the outer race 843, the collision load is hardly transmitted to the pinion gear 839 and thus to the drive device 834 since it can be released through the gap between the teeth 843C of the outer race 843 and the teeth 839B of the pinion gear 839. This means that the collision load acting on the outer race 843 can be prevented from reaching the speed reducer 836 and electric motor 835 in the present embodiment. Therefore, the present embodiment can produce the same effect as the other embodiments. It is no longer necessary to configure the speed reducer 836 and electric motor 835 such that they can withstand the collision load. This can also result in preventing an increase in size of the drive device 834, as described above.

### <Modification Examples of Seventh Embodiment>

The seventh embodiment can be modified as described below. The first to seventh embodiments and the following modifications can be combined with each other to such an extent that they are technically consistent with each other.

The inner race 841 may be configured in any other manners than described in the above in relation with the embodiment. The inner race 841 can be configured in any manner as long as it is shaped like an annulus centered on an axis parallel to the rotation axis 834V of the drive device 834 and mounted somewhere on the vehicle body. For example, the inner peripheral surface of the inner race 841 may be uneven.

The outer race 843 may be configured in any other manners than described in the above in relation with the embodiment. The outer race 843 may be configured in any manner as long as it is provided coaxially with the inner race 841, the swing bracket 845 is fixed to it, and has the teeth 843C on its outer peripheral surface. For example, the outer race 843 may be embodied without the upper wall 843B, and the swing bracket 845 may be fixed to the upper end surface of the body 843A. The swing bracket 845 is only required to be fixed somewhere on the outer race 843.

The rolling elements 842 may be configured in any other manners than described in the above in relation with the embodiment. The rolling elements 842 are only required to guide the rotation of the outer race 843 relative to the inner race 841. For example, the rolling elements 842 may be shaped like a circular column.

The vehicle body can be configured in any other manners than described in the above in relation with the embodiment to allow the bearing 840 to be attached to the vehicle body. Likewise, the vehicle body can be configured in any other manners than described in the above in relation with the embodiment to allow the drive device 834 to be attached to the vehicle body. The vehicle body can be configured in any manner to allow the bearing 840 and drive device 834 to be attached to the vehicle body as long as the bearing 840 and the drive device 834, as well as the pinion gear 839, can be arranged such that the teeth 843C of the outer race 843 mesh with the teeth 839B of the pinion gear 839. If the vehicle body is modified, the bearing 840 and drive device 834 may be positioned differently than described in the above in relation with the embodiment.

The swing bracket 845 may be configured in any other manners than described in the above in relation with the embodiment. The swing bracket 845 can be configured in any manner as long as it is fixed to the boom 530 and outer race 843. The swing bracket 845 may be shaped in a different manner than described in the above in relation with the embodiment. The swing bracket 845 may be shaped like a circle or a polygon other than a quadrangle.

The boom 530 may be fixed to any other parts of the swing bracket 845 than described in the above in relation with the embodiment. The boom 530 is only required to be fixed to somewhere on the swing bracket 845.

The drive device 834 may be configured in any other manners than described in the above in relation with the embodiment. The drive device 834 may be configured in any manner as long as it is attached to the vehicle body, includes the electric motor 835 and can output torque centered on the rotation axis. For example, the electric motor 835 may have a different shape than a circular column. For example, the drive device 834 may be embodied without the speed reducer 836 and transmission shaft 837. In this case, the pinion gear 839 may be directly attached onto the output shaft 835B of the electric motor 835. The drive device 834 may be configured such that the central axis of the output shaft 835B of the electric motor 835 is positioned differently than the rotation axis of the torque that is output from the drive device 834 to a component external to the drive device 834. This may be possible if the drive device 834 is provided with a mechanism for changing the direction of rotation of the output shaft 835B of the electric motor 835. The rotation axis of the torque output from the drive device 834 is only required to extend in the top-to-bottom direction of the vehicle body as a whole. For example, it may be tilted relative to the Z direction within a range of approximately 15 degrees, for example.

The pinion gear 839 may be positioned differently than described in the above in relation with the embodiment. The position of the pinion gear 839 can depend on the configuration and position of the drive device 834. The pinion gear 839 may be provided in any manner as long as it faces the outer race 843, and can rotate about the rotation axis of the drive device 834 upon application of the torque from the drive device 834.

The slewing bearing 603 is not an essential component of the excavator 830. Specifically, the excavator 830 may be configured such that the upper body 606 cannot slew with respect to the lower body 602. The upper and lower bodies 606 and 602 may be integrated into a single structure. In this case, the upper and lower bodies 606 and 602 constitute the vehicle body. Stated differently, the vehicle body is not limited to the example described above in relation with the seventh embodiment.

The boom swing mechanism 830A, which serves as an electric actuator, may be applied to any other construction machines than the excavator 830. In the foregoing embodiment, any two members may be fixedly attached in various manners. Any two members can be fixedly attached using, for example, bolting, welding, integral molding, and spline connection.

The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### <Eighth Embodiment>

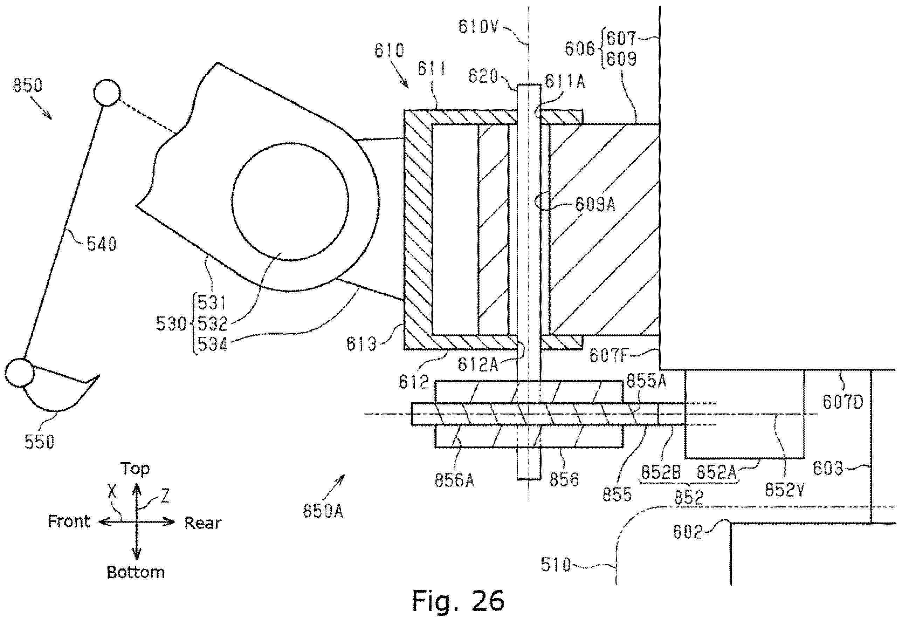

The following now describes a construction machine and an electric actuator for a construction machine relating to an eighth embodiment with reference to Fig. 26. The drawings may show the components in an enlarged manner for the sake of better intelligibility. The dimensions of the components and the ratios thereof may be different from those of the actual components, and among the drawings. In Fig. 26, the same reference labels as in Figs. 1 to 25 are used for the components that function the same or substantially the same as the corresponding components shown in Figs. 1 to 25. In Fig. 26, some of the components are shown in sectional views for the sake of convenience. Sharing some common features with the first to seventh embodiments, the eighth embodiment is described in the following but redundant description may be omitted or simplified.

As shown in Fig. 26, an excavator 850, which is a construction machine, includes a lower body 602, an upper body 606, which is a vehicle body, a pair of traveling units 510, and a slewing bearing 603. The lower body 602, traveling units 510, and slewing bearing 603 are configured in the same manner as in the second embodiment. These components are thus not described in the following. The upper body 606 is configured in the same manner as in the second embodiment. Specifically, the upper body 606 has a casing 607 shaped like a rectangular parallelepiped, an operator compartment located higher than the casing 607, and a support wall 609 protruding forward from the front surface 607F of the casing 607. The support wall 609 has a through hole 609A extending through it in substantially the Z direction. The central axis of the through hole 609A constitutes the slew axis 610V of the boom 530. In the Y direction, the through hole 609A and thus the slew axis 610V is located substantially at the middle of the casing 607. Fig. 26 does not show the operator compartment. The upper body 606 is located on the opposite side to the ground surface with respect to the lower body 602. In the present embodiment, the up and down, left and right, and front and rear are defined in the same manner as in the second embodiment.

The excavator 850, which is an excavation machine, includes a boom 530, an arm 540, and a bucket 550. The boom 530, arm 540 and bucket 550 are positioned in front of the upper body 606. The boom 530, arm 540, and bucket 550 are configured in the same manner as in the second embodiment. These components are thus not described in the following.

### <Boom Swing Mechanism>

As shown in Fig. 26, the excavator 850 includes a boom swing mechanism 850A. The boom swing mechanism 850A is configured to cause the boom 530 to swing to the left and right relative to the upper body 606. The boom swing mechanism 850A constitutes an electric actuator.

The boom swing mechanism 850A includes a swing bracket 610 and a pin 620. The swing bracket 610 and pin 620 are configured in the same manner as in the second embodiment. Specifically, the swing bracket 610 has an upper wall 611, a lower wall 612 located lower than the upper wall 611, and a connecting wall 613 connecting together the upper and lower walls 611 and 612, as shown in Fig. 26. To the connecting wall 613, the base wall 534 of the boom 530 is fixedly attached. In terms of the shape of the walls and other features, the eighth embodiment is the same as the second embodiment and thus will not be described here.

The swing bracket 610 is connected to the support wall 609 of the upper body 606 by means of the pin 620. Specifically, the upper and lower walls 611 and 612 are penetrated by the pin 620, which also passes through the through hole 609A in the support wall 609. Fig. 26 shows the gap between the pin 620 and the through hole 609A in an exaggerated and enlarged manner. As in the second embodiment, the pin 620 is rotatable with respect to the through hole 609A. The pin 620 is supported by the through hole 609A such that it is rotatable about the central axis of the through hole 609A or the slew axis 610V. The pin 620 is, on the other hand, fixedly attached to the upper and lower walls 611 and 612. Therefore, as the pin 620 rotates about the slew axis 610V, the upper and lower walls 611 and 612 rotate together with the pin 620. The swing bracket 610 is thus rotatable about the slew axis 610V. As in the second embodiment, the bottom end of the pin 620 is situated lower than the bottom surface of the lower wall 612. Furthermore, in the Z direction, the bottom end of the pin 620 is located lower than the bottom surface 607D of the casing 607 of the upper body 606.

The boom swing mechanism 850A includes an electric motor 852. The electric motor 852 is positioned lower than the lower surface 607D of the casing 607. In the X direction, the electric motor 852 is provided on the front portion of the casing 607. The electric motor 852 operates upon receiving electricity fed from a battery, which is not shown. The electric motor 852 includes a housing 852A, and an output shaft 852B. The housing 852A is fixedly mounted onto the lower surface 607D of the casing 607. In terms of the Y direction, the housing 852A is positioned on the left side relative to the middle of the casing 607. The output shaft 852B protrudes frontward beyond the housing 852A. The output shaft 852B is shaped like a circular column. The central axis of the output shaft 852B extends substantially in the X direction. Due to the position of the housing 852A, the output shaft 852B is positioned on the left side with respect to the Y-direction-wise middle of the casing 607. The output shaft 852B is configured to rotate relative to the housing 852A. The output shaft 852B rotates about its own central axis. Stated differently, with the central axis of the output shaft 852B being referred to as a rotation axis 852V, the electric motor 852 outputs torque centered on the rotation axis 852V. The output shaft 852B can rotate in both of the forward and reverse directions upon power supply to the housing 852A. The rotation axis 852V is substantially orthogonal to the slew axis 610V of the swing bracket 610.

The boom swing mechanism 850A includes a worm 855. The worm 855 is positioned in front of the output shaft 852B of the electric motor 852. The worm 855 is shaped like a circular column. The central axis of the worm 855 extends in the X direction. The central axis of the worm 855 substantially coincides with the rotation axis 852V of the electric motor 852. The diameter of the worm 855 is substantially equal to that of the output shaft 852B of the electric motor 852. The worm 855 is fixedly attached to the front end of the output shaft 852B of the electric motor 852. In other words, the worm 855 extends frontward from the front end of the output shaft 852B of the electric motor 852. The front end of the worm 855 is situated in front of the pin 620. The worm 855 is coaxially arranged with the output shaft 852B of the electric motor 852, and rotates together with the output shaft 852B. Due to the position of the electric motor 852, the worm 855 is positioned on the left side with respect to the Y-direction-wise middle of the casing 607. The outer peripheral surface of the worm 855 has helical threads 855A. The helical threads 855A intersect the rotation axis 852V of the electric motor 852. The helical threads 855A are formed over the entire area of the worm 855 in the direction extending along the rotation axis 852V.

The boom swing mechanism 850A includes a wheel 856. The wheel 856 is located in front of the electric motor 852 and lower than the lower wall 612 of the swing bracket 610. The wheel 856 is shaped like a circular tube. The outer diameter of the wheel 856 is greater than the diameter of the worm 855. The central axis of the wheel 856 substantially coincides with the slew axis 610V. The wheel 856 has a hole at the center, which receives therein the portion of the pin 620 that protrudes downward beyond the lower wall 612 of the swing bracket 610. In the center hole in the wheel 856, the pin 620 is fixed. As a result, the wheel 856 can rotate about the slew axis 610V together with the pin 620. The outer peripheral surface of the wheel 856 has helical threads 856A. The helical threads 856A intersect the slew axis 610V. The helical threads 856A are formed over the entire outer peripheral surface of the wheel 856.

Some of the helical threads 856A of the wheel 856 mesh with some of the helical threads 855A of the worm 855. Through the meshing between the teeth, the wheel 856 converts the torque of the worm 855 that is centered on the rotation axis 852V into torque that is centered on the slew axis 610V. The worm 855 and wheel 856 constitute a conversion mechanism. This type of conversion mechanism is sometimes referred to as a worm gear. In the direction extending along the central axis of worm 855, the term "pitch" means the distance between the peaks of the adjacent helical threads 855A. Similarly, in the circumferential direction centered on the central axis of the wheel 856, the term "pitch" means the distance between the peaks of the adjacent helical threads 856A. The pitch of the worm 855 and the pitch of the wheel 856 are appropriately sized such that the rotation of the worm 855 is reduced and then transmitted to the wheel 856. The pitch of the worm 855 and the pitch of the wheel 856 are appropriately sized such that the worm gear can self-lock. Self-locking can disable the transmission of rotation from the wheel 856 to the worm 855.

### <How Eighth Embodiment Works>

In the boom swing mechanism 850A, upon rotation of the output shaft 852B of the electric motor 852, the worm 855 accordingly rotates. The rotation of the worm 855 is then transmitted to the wheel 856 through the meshing between the helical threads 855A of the worm 855 and the helical threads 856A of the wheel 856. As a result, the wheel 856 and thus the pin 620 can rotate about the slew axis 610V. In other words, the pin 620 functions as a transmission member that can transmit the torque of the wheel 856 to the swing bracket 610. The rotation of the pin 620 causes the swing bracket 610, which is integrally combined with the pin 620, and thus boom 530 to rotate. The boom 530 can rotate leftward or rightward, which is determined by the direction of the rotation of the output shaft 852B of the electric motor 852.

### <Advantageous Effects of Eighth Embodiment>

As described above in the "How Eighth Embodiment Works" section, the excavator 850 relating to the eighth embodiment can use the electric motor 852 as the drive source to cause the boom 530 to swing to the left and right.

As described in the first embodiment, an external load may be applied to the boom 530 when the bucket 550 collides with the object to be excavated. This load is hereinafter referred to as the collision load. If the boom swing mechanism 850A relating to the present embodiment is employed, the collision load can be transmitted to the wheel 856 via the swing bracket 610 and the pin 620. After transmitted to the wheel 856, however, the collision load is hardly transmitted to the worm 855 due to the self-locking feature described above. This means that the collision load acting on the wheel 856 can be prevented from reaching the electric motor 852 in the present embodiment. Therefore, the present embodiment requires no features in or before the electric motor 852 to address the collision load. This can result in preventing an increase in size of the structure surrounding the electric motor 852.

### <Modification Examples of Eighth Embodiment>

The eighth embodiment can be modified as described below. The first to eighth embodiments and the following modifications can be combined with each other to such an extent that they are technically consistent with each other.

The transmission member is not limited to the example described in the above in relation with the embodiment. The transmission member can be configured in any manner as long as it can transmit the torque produced by the conversion mechanism to the swing bracket 610. For example, instead of the pin 620 extending through the lower wall 612 of the swing bracket 610, a different columnar member than the pin 620 may be provided and protrude downward from the lower surface of the lower wall 612. Onto this columnar member, the wheel 856 may be mounted. In this case, this columnar member serves as the transmission member. Alternatively, the wheel 856 may be fixed directly to the lower surface of the lower wall 612 of the swing bracket 610. The wheel 856 may then directly transmit torque to the swing bracket 610. In this case, the wheel 856 serves as the transmission member. Thus, the transmission member may be constituted by the member serving as part of the conversion mechanism.

The torque transmission path from the output shaft 852B of the electric motor 852 to the worm 855 may be configured in any other manners than described in the above in relation with the embodiment. For example, a speed reducer may be provided between the output shaft 852B of the electric motor 852 and the worm 855. Likewise, the torque transmission path from the wheel 856 to the swing bracket 610 may be configured in any other manners than described in the above in relation with the embodiment.

The conversion mechanism may be configured in any other manners than described in the above in relation with the embodiment. The conversion mechanism can be configured in any manner as long as it can convert the torque of the electric motor 852 that is centered on the rotation axis 852V into torque that is centered on the slew axis 610V. For example, the conversion mechanism may be embodied without the worm 855, and the output shaft 852B of the electric motor 852 may be helically threaded. Furthermore, the conversion mechanism may be embodied without the wheel 856, and the pin 620 may be helically threaded. The helical threads of the electric motor 852 may mesh with the helical threads of the pin 620. In this case, the output shaft 852B of the electric motor 852 and the pin 620 constitute the conversion mechanism. As described above, the electric motor 852 may constitute the conversion mechanism.

The electric motor 852 may be positioned in any other manners than described in the above in relation with the embodiment. For example, the electric motor 852 may be positioned on the right side with respect to the Y-direction-wise middle of the casing 607. The electric motor 852 may be attached to any other components than the casing 607. For example, the electric motor 852 may be fixedly attached to the lower surface of the support wall 609, instead of the lower surface 607D of the casing 607. The position of the electric motor 852 may be set such that the torque of the electric motor 852 can be transmitted to the swing bracket 610 via the conversion mechanism.

The slew axis 610V of the swing bracket 610 is not necessarily orthogonal to the rotation axis 852V of the electric motor 852. For example, depending on how the electric motor 852 is mounted, the slew axis 610V may not be orthogonal to the rotation axis 852V.

The swing bracket 610 may be configured, positioned, and connected to the vehicle body in any other manners than described in the above in relation with the embodiment. The swing bracket 610 may be connected to the vehicle body in any manner as long as it is fixedly attached to the boom 530 and can rotate about the slew axis 610V. To support the swing bracket 610, the vehicle body can be configured in any other manners than described in the above in relation with the embodiment. The vehicle body is not limited to the casing 607, but can be any part of the upper body 606. Furthermore, the vehicle body is not limited to the upper body 606, as described in the following modifications. The slew axis 610V may be shifted from the middle of the casing 607 in the Y direction. The slew axis 610V may be only required to generally extend in the top-to-bottom direction of the vehicle body. The slew axis 610V may be tilted relative to the Z direction within a range of about 15 degrees, for example.

The slewing bearing 603 is not an essential component of the excavator 850. Specifically, the excavator 850 may be configured such that the upper body 606 cannot slew with respect to the lower body 602. The upper and lower bodies 606 and 602 may be integrated into a single structure. In this case, the upper and lower bodies 606 and 602 constitute the vehicle body. Stated differently, the vehicle body is not limited to the example described above in relation with the eighth embodiment.

The boom 530 may be fixed to any other parts of the swing bracket 610 than described in the above in relation with the embodiment. The boom 530 is only required to be fixed to somewhere on the swing bracket 610.

The boom swing mechanism 850A, which serves as an electric actuator, may be applied to any other construction machines than the excavator 850. In the foregoing embodiment, any two members may be fixedly attached in various manners. Any two components can be fixedly attached using, for example, bolting, welding, integral molding, and spline connection.

The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

The following clauses set out features of the disclosure which may serve as basis for future amendments or divisional applications:
1. A construction machine (500) comprising:
   a vehicle body (520);
   a drive device (615, 660, 780, 790, 834) including an electric motor (20, 661), the drive device being configured to output torque centered on a rotation axis (Q, 615V, 660V, 780V, 790V) extending in a top-to-bottom direction of the vehicle body;
   a swing bracket (50, 610, 665, 774, 845) connected to the vehicle body, the swing bracket being configured to rotate about a slew axis (610V, 840V) parallel to the rotation axis or the rotation axis upon application of the torque from the drive device; and
   a boom (530) fixedly attached to the swing bracket.
2. An electric actuator (10, 600A, 600B, 650A, 770A, 770B, 800A, 830A) for a construction machine, the electric actuator comprising:
   a drive device (615, 660, 780, 790, 834) including an electric motor (20, 661), the drive device being configured to output torque centered on a rotation axis (Q, 615V, 660V, 780V, 790V); and
   a swing bracket (50, 610, 665, 774, 845) configured to rotate about a slew axis (610V, 840V) parallel to the rotation axis or the rotation axis upon application of the torque from the drive device, the swing bracket being fixedly attached to a boom (530).
3. The electric actuator (10) of clause 2,
   wherein the drive device includes:
      a transmission shaft (25) received in a first through hole (520H) in a vehicle body (520) of the construction machine, the transmission shaft being configured to rotate about the rotation axis (Q);
      the electric motor (20) having an output shaft (20B) connected to the transmission shaft, the electric motor being attached to the vehicle body;
      a speed reducer (70) attached to the vehicle body so as to oppose the electric motor with the first through hole being sandwiched therebetween, the speed reducer having an input shaft (76) connected to the transmission shaft, the speed reducer being configured to multiply torque output from the output shaft of the electric motor and output the multiplied torque; and
      an output member (30) configured to rotate about the rotation axis upon application of the torque from the speed reducer, the output member being connected to the swing bracket (50),
   wherein the swing bracket is configured to rotate about the rotation axis upon application of torque from the output member.
4. The electric actuator (10) of clause 3, further comprising
   a pin (28) shaped like a tube, the transmission shaft being received in the pin, the pin and transmission shaft being received in the first through hole,
   wherein the swing bracket is in contact with the pin.
5. The electric actuator (10) of clause 3,
   wherein the swing bracket has an opposing wall (53) having a third through hole (53H) at a position facing a second through hole (32H) in the output member,
   wherein the electric actuator further comprises a connecting member (90) connecting the output member and opposing wall,
   wherein the connecting member has:
      a base (91) extending through the second and third through holes; and
      a buffer portion (92) shaped like a tube, the buffer portion having the base arranged therein, the base and buffer portion extending through the second and third through holes, the buffer portion having a lower modulus of elasticity than the base.
6. The electric actuator (10) of clause 3,
   wherein the swing bracket has an opposing wall (53) facing the output member,
   wherein the electric actuator further comprises a connecting member (90) connecting the opposing wall and output member, and
   wherein a gap is provided between the opposing wall and the output member.
7. The electric actuator (600A) of clause 2,
   wherein the drive device (615) is attached to a vehicle body (606) of the construction machine,
   wherein the swing bracket (610) is connected to the vehicle body such that the swing bracket is rotatable about the slew axis (610V), and
   wherein the electric actuator further comprises:
      a drive member (621) configured to rotate about the rotation axis (615V) upon application of the torque from the drive device;
      a transmission target member (622) attached to the swing bracket, the transmission target member being configured to rotate about the slew axis;
      a transmission mechanism (623) configured to cause the drive member and transmission target member to rotate in a coordinated manner.
8. The electric actuator (600A) of clause 7,
   wherein the drive member is an annular drive sprocket (621) centered on the rotation axis and having a plurality of teeth on an outer peripheral surface thereof,
   wherein the transmission target member is an annular driven sprocket (622) centered on the slew axis and having a plurality of teeth on an outer peripheral surface thereof, and
   wherein the transmission mechanism is a chain (623) wound around the drive sprocket and driven sprocket.
9. The electric actuator (600A) of clause 7,
   wherein the drive member is an annular drive pulley centered on the rotation axis,
   wherein the transmission target member is an annular driven pulley centered on the slew axis, and
   wherein the transmission mechanism is a belt wound around the drive pulley and driven pulley.
10. The electric actuator (600A) of clause 8 or 9, wherein the drive member has a smaller outer diameter than the transmission target member.
11. The electric actuator (600A) of clause 7,
   wherein the construction machine has an upper body (606) that is the vehicle body, and a lower body (602),
   wherein the upper body is located on an opposite side of a ground surface with respect to the lower body of the construction machine, and the upper body is supported by a slewing bearing (603) such that the upper body slews with respect to the lower body, and
   wherein, when a first slew axis (610V) is the slew axis, a second slew axis (603V) is an axis about which the upper body slews, the first slew axis is located in a first direction as viewed from the second slew axis, and a specific portion (603P) indicates a portion of the slewing bearing that is the closest to the first slew axis in the first direction, at least a portion of the drive member is located on an imaginary line segment (603S) connecting the specific portion and the first slew axis.
12. The electric actuator (600B) of clause 7,
   wherein the construction machine has an upper body (606) that is the vehicle body, and a lower body (602),
   wherein the upper body is located on an opposite side of a ground surface with respect to the lower body of the construction machine, and the upper body is supported by a slewing bearing (603) such that the upper body slews with respect to the lower body,
   wherein the electric actuator further comprises one or more intermediate members (625, 626) attached to the vehicle body, the one or more intermediate members being configured to rotate about an axis parallel to the rotation axis,
   wherein the transmission mechanism is configured to cause the one or more intermediate members, the drive member and the transmission target member to rotate in a coordinated manner,
   wherein, when a first slew axis (610V) is the slew axis, a second slew axis (603V) is an axis about which the upper body slews, the first slew axis is located in a first direction as viewed from the second slew axis, and a second direction is opposite to the first direction, the one or more intermediate members are located in the first direction as viewed from the drive member, and
   wherein the drive member and the drive device are located in the second direction as viewed from the second slew axis.
13. The electric actuator (650A) of clause 2,
   wherein the drive device (660) is attached to a vehicle body (653) of the construction machine, and
   wherein the swing bracket (665) is fixedly attached to an output member (663) of the drive device, and configured to rotate about the rotation axis (660V) upon application of the torque from the drive device.
14. The electric actuator (650A) of clause 13,
   wherein the drive device has a speed reducer (662) configured to multiply torque output from the electric motor (661) and output the multiplied torque, and
   wherein the speed reducer is configured to output, to the swing bracket, the torque that is output from the electric motor and that is centered on the rotation axis coaxially with the electric motor.
15. The electric actuator (650A) of clause 13,
   wherein the drive device is located lower than the swing bracket, and
   wherein the swing bracket is fixedly attached to the output member of the drive device by means of bolts (666).
16. The electric actuator (770A) of clause 2,
   wherein the swing bracket (774) is aligned with the drive device (780) in a direction extending along the rotation axis (780V),
   wherein the electric actuator further comprises:
      a transmission member (783) interposed between the drive device and the swing bracket, the transmission member being configured to transmit the torque of the drive device to the swing bracket;
      an annular bearing (776, 777) attached to a vehicle body (606) of the construction machine, the bearing being penetrated by the transmission member and supporting the transmission member in a rotatable manner;
      a retainer (784) located on an opposite side of the swing bracket with the bearing being sandwiched therebetween in a direction extending along the rotation axis, the retainer being penetrated by the drive device; and
      a buffer member (786) connecting the retainer to the vehicle body, the buffer member having a lower modulus of elasticity than the retainer,
   wherein the swing bracket is configured to rotate about the rotation axis upon application of the torque from the drive device via the transmission member.
17. The electric actuator (770A) of clause 16,
   wherein the bearing is a first bearing selected from among a plurality of bearings, and
   wherein the plurality of bearings are aligned in a direction extending along the rotation axis.
18. The electric actuator (770B) of clause 2,
   wherein the drive device (790) is shaped like a tube and centered on the rotation axis (790V),
   wherein the swing bracket (774) is aligned with the drive device in a direction extending along the rotation axis, and fixedly attached to an output member (792B) of the drive device, and the swing bracket is configured to rotate about the rotation axis upon application of the torque from the drive device, and
   wherein the electric actuator further comprises:
      a flange wall (794) located on an opposite side of the swing bracket with the drive device being sandwiched therebetween in a direction extending along the rotation axis, the flange wall supporting the drive device and being fixedly attached to a vehicle body of the construction machine;
      a retainer (784) interposed between the swing bracket and the flange wall, the retainer being penetrated by the drive device;
      a buffer member (786) connecting the retainer to the vehicle body (606), the buffer member having a lower modulus of elasticity than the retainer; and
      a pin (797) penetrating the drive device and fixedly attached to the flange wall.
19. The electric actuator (800A) of clause 2,
   wherein the swing bracket (610) is connected to a vehicle body (606) of the construction machine such that the swing bracket is rotatable about the slew axis (610V),
   wherein the electric actuator further comprises:
      a pinion gear (809) configured to rotate about the rotation axis (615V) upon application of the torque from the drive device (615); and
      a gear wall (810) provided at a position facing the pinion gear,
   wherein the gear wall has:
      an arc surface (811B) defining a circular arc centered on an axis parallel to the rotation axis; and
      a plurality of teeth (812) protruding from the arc surface, the teeth meshing with teeth of the pinion gear,
   wherein a diameter of the circular arc of the arc surface is greater than an outer diameter of the pinion gear, and
   wherein one of the gear wall or the drive device is fixedly attached to the swing bracket, and another one of the gear wall or the drive device is fixedly attached to the vehicle body.
20. The electric actuator (800A) of clause 19,
   wherein the arc surface extends over a range of 165 to 195 degrees in a circumferential direction centered on an axis parallel to the rotation axis, and
   wherein the gear wall has a linearly extending flat surface (811C) connecting endpoints of the circular arc defined by the arc surface.
21. The electric actuator (830A) of clause 2, further comprising:
   an annular inner race (841) attached to a vehicle body (831) of the construction machine, the annular inner race being centered on the slew axis (840V);
   an annular outer race (843) coaxially arranged with the inner race, the outer race having a plurality of teeth (843C) on an outer peripheral surface thereof, the outer race being fixedly attached to the swing bracket (845), the outer race being configured to rotate about the slew axis together with the swing bracket;
   a rolling element (842) interposed between the inner race and the outer race, the rolling element being configured to guide rotation of the inner race relative to the outer race; and
   a pinion gear (839) provided at a position facing the outer peripheral surface of the outer race, the pinion gear being configured to rotate about the rotation axis upon application of the torque from the drive device (834), the pinion gear having on an outer peripheral surface thereof teeth (839B) meshing with the teeth of the outer race.
22. A construction machine (680) comprising:
   a vehicle body (606);
   a first member (701, 731, 751) shaped like a tube;
   a second member (702, 732, 752) inserted into the first member from an end of the first member that faces a given side in a direction extending along a central axis (701C) of the first member, the second member being configured to reciprocate along the central axis of the first member;
   an electric motor (712, 743, 756) configured to cause the second member to reciprocate relative to the first member;
   a swing bracket (610) connected to the vehicle body such that the swing bracket is rotatable about a slew axis extending in a top-to-bottom direction of the vehicle body; and
   a boom (530) fixedly attached to the swing bracket,
   wherein the first member is connected to one of the vehicle body or the swing bracket such that the first member is rotatable about an axis parallel to the slew axis, and
   wherein the second member is connected to another one of the vehicle body or the swing bracket such that the second member is rotatable about an axis parallel to the slew axis.
23. An electric actuator (680, 680A) for a construction machine, the electric actuator comprising:
   a first member (701, 731, 751) shaped like a tube;
   a second member (702, 732, 752) inserted into the first member from an end of the first member that faces a given side in a direction extending along a central axis (701C) of the first member, the second member being configured to reciprocate along the central axis of the first member;
   an electric motor (712, 743, 756) configured to cause the second member to reciprocate relative to the first member; and
   a swing bracket (610) connected to a vehicle body (606) of the construction machine such that the swing bracket is rotatable about a slew axis, the swing bracket being fixedly attached to a boom (530), and
   wherein the first member is connected to one of the vehicle body or the swing bracket such that the first member is rotatable about an axis parallel to the slew axis, and
   wherein the second member is connected to another one of the vehicle body or the swing bracket such that the second member is rotatable about an axis parallel to the slew axis.
24. The electric actuator (680A) of clause 23,
   wherein the second member (702) is shaped like a tube extending along the central axis (701C) of the first member (701), and has an internally threaded inner peripheral surface, and
   wherein the electric actuator further comprises:
      a threaded shaft (718) inserted into the second member through an end of the second member that faces a side opposite to the given side, the threaded shaft having an externally threaded outer peripheral surface, the threaded shaft being configured to rotate about the central axis of the second member upon rotation of the electric motor (712); and
      a ball (719) interposed between the threaded shaft and the second member.
25. The electric actuator (680A) of clause 24,
   wherein a rotation axis of the electric motor is positioned differently than the central axis of the second member and extends parallel to the central axis of the second member, and
   wherein the electric actuator further comprises a transmission mechanism (715) configured to transmit the rotation of the electric motor to the threaded shaft.
26. The electric actuator of (680A) clause 23,
   wherein the first member (731) demarcates a fluid chamber (731P) into and from which a fluid is fed and discharged,
   wherein the second member (732) has:
      a piston (732A) dividing the fluid chamber into two chambers arranged next to each other in a direction extending along the central axis (731V) of the first member; and
      a rod (732B) extending from the piston toward the given side, and
   wherein the electric actuator further comprises a fluid circuit (740) for feeding or discharging the fluid into or from the two chambers when a pump (744) is driven by the electric motor (743).
27. The electric actuator (680A) of clause 23,
   wherein the second member (752) is shaped like a column extending in a direction extending along the central axis (751V) of the first member (751), and has a plurality of rack teeth (752B) on an outer surface thereof arranged next to each other in a direction extending along the central axis of the first member, and
   wherein the electric actuator further comprises a pinion gear (758) rotatable about an axis intersecting a central axis of the second member, the pinion gear having teeth (758B) on an outer peripheral surface thereof that mesh with the rack teeth, the pinion gear being configured to rotate when driven by the electric motor (756).
28. The electric actuator (680A) of clause 27,
   wherein the construction machine has an upper body (606) that is the vehicle body, and a lower body (602),
   wherein the upper body is located on an opposite side of a ground surface with respect to the lower body of the construction machine, and the upper body is supported by a slewing bearing (603) such that the upper body slews with respect to the lower body,
   wherein a rotation axis (756V) of the electric motor coincides with a central axis of the pinion gear, and
   wherein, when a first slew axis (610V) is the slew axis, a second slew axis (603V) is an axis about which the upper body slews, a first line segment is an imaginary line segment (680X) connecting the first and second slew axes when the upper body is seen in plan view in a direction extending along the first slew axis, and a second line segment (680Y) is an imaginary line segment connecting, in a direction extending along the central axis of the first member, (i) an end (751W)of the first member that is opposite to the end through which the second member is inserted and (ii) an end (752W) of the second member that faces the given side, the rotation axis of the electric motor is positioned between the first line segment and the second line segment.
29. A construction machine (850) comprising:
   a vehicle body (606);
   an electric motor (852) attached to the vehicle body, the electric motor being configured to output torque centered on a rotation axis (852V);
   a swing bracket (610) connected to the vehicle body such that the swing bracket is rotatable about a slew axis (610V) intersecting the rotation axis and extending in a top-to-bottom direction of the vehicle body;
   a conversion mechanism (855, 856) configured to convert the torque of the electric motor that is centered on the rotation axis into torque that is centered on the slew axis;
   a transmission member (620) configured to transmit the torque produced by the conversion mechanism to the swing bracket; and
   a boom (530) fixedly attached to the swing bracket.
30. An electric actuator (850A) for a construction machine, the electric actuator comprising:
   an electric motor (852) configured to output torque centered on a rotation axis (852V);
   a swing bracket (610) connected to a vehicle body (606) of the construction machine such that the swing bracket is rotatable about a slew axis (610V) extending in a direction intersecting the rotation axis, the swing bracket being fixedly attached to a boom (530);
   a conversion mechanism (855, 856) configured to convert the torque of the electric motor that is centered on the rotation axis into torque that is centered on the slew axis; and
   a transmission member (620) configured to transmit the torque produced by the conversion mechanism to the swing bracket.

## Claims

1. An electric actuator (10, 600A, 600B, 650A, 770A, 770B, 800A, 830A) for a construction machine, the electric actuator comprising:
a drive device (615, 660, 780, 790, 834) including an electric motor (20, 661), the drive device being configured to output torque centered on a rotation axis (Q, 615V, 660V, 780V, 790V); and
a swing bracket (50, 610, 665, 774, 845) configured to rotate about a slew axis (610V, 840V) parallel to the rotation axis or the rotation axis upon application of the torque from the drive device, the swing bracket being fixedly attached to a boom (530).

2. The electric actuator (10) of claim 1,
wherein the drive device includes:
a transmission shaft (25) received in a first through hole (520H) in a vehicle body (520) of the construction machine, the transmission shaft being configured to rotate about the rotation axis (Q);
the electric motor (20) having an output shaft (20B) connected to the transmission shaft, the electric motor being attached to the vehicle body;
a speed reducer (70) attached to the vehicle body so as to oppose the electric motor with the first through hole being sandwiched therebetween, the speed reducer having an input shaft (76) connected to the transmission shaft, the speed reducer being configured to multiply torque output from the output shaft of the electric motor and output the multiplied torque; and
an output member (30) configured to rotate about the rotation axis upon application of the torque from the speed reducer, the output member being connected to the swing bracket (50),
wherein the swing bracket is configured to rotate about the rotation axis upon application of torque from the output member.

3. The electric actuator (10) of claim 2, further comprising
a pin (28) shaped like a tube, the transmission shaft being received in the pin, the pin and transmission shaft being received in the first through hole,
wherein the swing bracket is in contact with the pin.

4. The electric actuator (10) of claim 2,
wherein the swing bracket has an opposing wall (53) having a third through hole (53H) at a position facing a second through hole (32H) in the output member,
wherein the electric actuator further comprises a connecting member (90) connecting the output member and opposing wall,
wherein the connecting member has:
a base (91) extending through the second and third through holes; and
a buffer portion (92) shaped like a tube, the buffer portion having the base arranged therein, the base and buffer portion extending through the second and third through holes, the buffer portion having a lower modulus of elasticity than the base.

5. The electric actuator (10) of claim 2,
wherein the swing bracket has an opposing wall (53) facing the output member,
wherein the electric actuator further comprises a connecting member (90) connecting the opposing wall and output member, and
wherein a gap is provided between the opposing wall and the output member.

6. The electric actuator (600A) of claim 1,
wherein the drive device (615) is attached to a vehicle body (606) of the construction machine,
wherein the swing bracket (610) is connected to the vehicle body such that the swing bracket is rotatable about the slew axis (610V), and
wherein the electric actuator further comprises:
a drive member (621) configured to rotate about the rotation axis (615V) upon application of the torque from the drive device;
a transmission target member (622) attached to the swing bracket, the transmission target member being configured to rotate about the slew axis;
a transmission mechanism (623) configured to cause the drive member and transmission target member to rotate in a coordinated manner.

7. The electric actuator (600A) of claim 6,
wherein the drive member is an annular drive sprocket (621) centered on the rotation axis and having a plurality of teeth on an outer peripheral surface thereof,
wherein the transmission target member is an annular driven sprocket (622) centered on the slew axis and having a plurality of teeth on an outer peripheral surface thereof, and
wherein the transmission mechanism is a chain (623) wound around the drive sprocket and driven sprocket.

8. The electric actuator (600A) of claim 6,
wherein the drive member is an annular drive pulley centered on the rotation axis,
wherein the transmission target member is an annular driven pulley centered on the slew axis, and
wherein the transmission mechanism is a belt wound around the drive pulley and driven pulley.

9. The electric actuator (600A) of claim 7 or 8, wherein the drive member has a smaller outer diameter than the transmission target member.

10. The electric actuator (600A) of claim 6,
wherein the construction machine has an upper body (606) that is the vehicle body, and a lower body (602),
wherein the upper body is located on an opposite side of a ground surface with respect to the lower body of the construction machine, and the upper body is supported by a slewing bearing (603) such that the upper body slews with respect to the lower body, and
wherein, when a first slew axis (610V) is the slew axis, a second slew axis (603V) is an axis about which the upper body slews, the first slew axis is located in a first direction as viewed from the second slew axis, and a specific portion (603P) indicates a portion of the slewing bearing that is the closest to the first slew axis in the first direction, at least a portion of the drive member is located on an imaginary line segment (603S) connecting the specific portion and the first slew axis.

11. The electric actuator (600B) of claim 6,
wherein the construction machine has an upper body (606) that is the vehicle body, and a lower body (602),
wherein the upper body is located on an opposite side of a ground surface with respect to the lower body of the construction machine, and the upper body is supported by a slewing bearing (603) such that the upper body slews with respect to the lower body,
wherein the electric actuator further comprises one or more intermediate members (625, 626) attached to the vehicle body, the one or more intermediate members being configured to rotate about an axis parallel to the rotation axis,
wherein the transmission mechanism is configured to cause the one or more intermediate members, the drive member and the transmission target member to rotate in a coordinated manner,
wherein, when a first slew axis (610V) is the slew axis, a second slew axis (603V) is an axis about which the upper body slews, the first slew axis is located in a first direction as viewed from the second slew axis, and a second direction is opposite to the first direction, the one or more intermediate members are located in the first direction as viewed from the drive member, and
wherein the drive member and the drive device are located in the second direction as viewed from the second slew axis.

12. The electric actuator (650A) of claim 1,
wherein the drive device (660) is attached to a vehicle body (653) of the construction machine, and
wherein the swing bracket (665) is fixedly attached to an output member (663) of the drive device, and configured to rotate about the rotation axis (660V) upon application of the torque from the drive device.

13. The electric actuator (650A) of claim 12,
wherein the drive device has a speed reducer (662) configured to multiply torque output from the electric motor (661) and output the multiplied torque, and
wherein the speed reducer is configured to output, to the swing bracket, the torque that is output from the electric motor and that is centered on the rotation axis coaxially with the electric motor.

14. The electric actuator (650A) of claim 12,
wherein the drive device is located lower than the swing bracket, and
wherein the swing bracket is fixedly attached to the output member of the drive device by means of bolts (666).

15. A construction machine (500) comprising:
a vehicle body (520);
a drive device (615, 660, 780, 790, 834) including an electric motor (20, 661), the drive device being configured to output torque centered on a rotation axis (Q, 615V, 660V, 780V, 790V) extending in a top-to-bottom direction of the vehicle body;
a swing bracket (50, 610, 665, 774, 845) connected to the vehicle body, the swing bracket being configured to rotate about a slew axis (610V, 840V) parallel to the rotation axis or the rotation axis upon application of the torque from the drive device; and
a boom (530) fixedly attached to the swing bracket.
